(19) Europäisches Patentamt
European Patent Office
Office européen des brevets

(11) EP 2 655 486 B1

(12) EUROPÄISCHE PATENTSCHRIFT

(45) Veröffentlichungstag und Bekanntmachung des Hinweises auf die Patenterteilung:
**18.09.2019 Patentblatt 2019/38**

(21) Anmeldenummer: **11804551.7**

(22) Anmeldetag: **19.12.2011**

(51) Int Cl.:
***C08J 3/22*** *(2006.01)* ***C08K 3/04*** *(2006.01)*
***C08K 5/00*** *(2006.01)* ***C08L 69/00*** *(2006.01)*
***C08L 91/06*** *(2006.01)*

(86) Internationale Anmeldenummer:
**PCT/EP2011/073295**

(87) Internationale Veröffentlichungsnummer:
**WO 2012/084865 (28.06.2012 Gazette 2012/26)**

(54) **VERFAHREN ZUR VERBESSERUNG DER RUSSDISPERGIERUNG**

METHOD FOR IMPROVING SOOT DISPERSION

PROCÉDÉ POUR AMÉLIORER LA DISPERSION DE NOIR DE CARBONE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.12.2010 EP 10196932**

(43) Veröffentlichungstag der Anmeldung:
**30.10.2013 Patentblatt 2013/44**

(73) Patentinhaber: **Covestro Deutschland AG**
**51373 Leverkusen (DE)**

(72) Erfinder:
- **SEIDEL, Andreas**
  **41542 Dormagen (DE)**
- **THIEM, Hans-Jürgen**
  **41539 Dormagen (DE)**
- **RUDOLF, Reiner**
  **40764 Langenfeld (DE)**
- **REICHENAUER, Joerg**
  **47802 Krefeld (DE)**
- **ECKEL, Thomas**
  **41540 Dormagen (DE)**

(74) Vertreter: **Levpat**
**c/o Covestro AG**
**Gebäude 4825**
**51365 Leverkusen (DE)**

(56) Entgegenhaltungen:
**US-A- 3 353 974**
**US-A- 3 778 288**
**US-A- 4 230 501**
**US-A- 4 310 483**
**US-A- 4 484 952**
**US-A- 5 219 903**
**US-A1- 2006 084 000**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Gegenstand der Erfindung ist die Verwendung von Pigment-Masterbatches enthaltend das Pigment und ein Entformungsmittel ausgewählt aus der Gruppe, die Pentaerythrittetrastearat, Glycerinmonostearat und Stearylstearat umfasst, zur Herstellung von gefärbten Polymerzusammensetzungen (Compounds), bevorzugt Polycarbonat-Zusammensetzungen mit einer verbesserten Dispergierung der Pigmentpartikel in der Polymermatrix, sowie ein Verfahren zur Herstellung dieser Compounds. Ein weiterer Gegenstand der Erfindung sind Formkörper enthaltend die Polymerzusammensetzungen. Vorzugsweise wird als Pigment Ruß eingesetzt, wobei "Ruß" in der vorliegenden Erfindung stellvertretend für alle partikelförmigen reinen Kohlenstoff-Substrate und Kohlenstoffverbindungen steht, beispielsweise Farb-Ruße, Leitfähigkeits-Ruße, Carbon-Nano-Tubes, Graphit. Die Pigment-haltigen Polycarbonat-Compounds können weitere Polymerisate, wie z.B. Elastomere bzw. Pfropfpolymerisate oder weitere Thermoplaste, wie z.B. Polyester enthalten.

Ein technisches Problem bei der Einarbeitung von Pigmenten und insbesondere Rußpartikeln in thermoplastische Polymerzusammensetzungen besteht darin, die Pigmentpartikeln in der Polymermatrix vollständig und gleichmäßig zu dispergieren. Unvollständig dispergierte Pigmentpartikeln bilden Pigment-Agglomerate, die - abgesehen von Farbinhomogenitäten und mangelhafter Farbtiefe - insbesondere auch zu Fehlstellen führen, die sich nachteilig auf die mechanischen Eigenschaften der Polymerzusammensetzungen, wie deren Zähigkeit und Reißdehnung, als auch auf die Oberflächeneigenschaften der Materialien auswirken. Größere Pigmentagglomerate führen an der Oberfläche solcher Zusammensetzungen zum Beispiel zu Störungen und Fehlstellen wie Pickeln, Schlieren und letztendlich zu einer unerwünschten Reduktion des Glanzgrades. Im Verbund mit anderen Materialien können derartige oberflächige Fehlstellen darüber hinaus auch die Verbundhaftungseigenschaften (beispielsweise die Lackhaftung) nachteilig beeinflussen.

Kohlenstoff-basierende Pigmente - wie beispielsweise Ruße, Graphite, Fullerene, Graphene, Aktivkohlen, und Kohlenstoff-Nanoröhrchen, die in vielen technischen Anwendungsbereichen, beispielsweise zur Schwarzeinfärbung, zur Erhöhung der elektrischen oder thermischen Leitfähigkeit der Zusammensetzung, zur mechanischen Verstärkung oder aber auch zur Bindung und Verminderung der Flüchtigkeit niedermolekularer organischer Verbindungen wie Restmonomeren oder geruchsaktiven Substanzen zum Einsatz kommen - zeichnen sich durch besonders starke interpartikulären Bindungskräfte aus und neigen daher in besonderem Maße zur Ausbildung von Agglomeraten, die sich bei der Einarbeitung in thermoplastische Polymere nur schwer wieder zerteilen lassen.

Zur Verbesserung der Dispergierung solcher Pigmente in thermoplastischen Polymerzusammensetzungen sind aus dem Stand der Technik verschiedene Methoden bekannt. Beispielsweise kann die Pigmentdispergierung verbessert werden durch Erhöhung des spezifischen Energieeintrages durch Scherung bei der Einarbeitung der Pigmente in die Polymerschmelze in handelsüblichen Compoundieraggregaten wie Doppelschneckenextrudern oder Innenknetern.

Allerdings ist der für die Pigmentdispergierung nutzbare Energieeintrag bei Polymerschmelzen, insbesondere bei solchen mit niedriger Viskosität, d.h. hoher Schmelzefließfähigkeit, wie sie für eine gute thermoplastische Verarbeitbarkeit in den meisten Anwendungsgebieten gefordert wird, technisch begrenzt. In anderen Fällen wird der Energieeintrag durch die thermische Belastbarkeit der Polymerschmelze limitiert, in die das Pigment eingearbeitet werden soll. Hohe spezifische Energieeinträge führen naturgemäß zu hohen Prozesstemperaturen, welche in Abhängigkeit vom Polymer zur unerwünschten Schädigung, Alterung oder gar Zersetzung des Polymers führen können.

Ein weiteres Verfahren ist die Verwendung eines hochkonzentrierten Masterbatches des Pigments in einer Polymermatrix, wobei die technisch erreichbare Konzentration des Pigments in der Polymermatrix ohne Verwendung weiterer Zusatz-/Prozesshilfsstoffe für eine wirtschaftliche Anwendung nicht hoch genug ist. Des Weiteren kann mit diesem Verfahren nur dann eine gute Pigmentdispergierung im Endprodukt erreicht werden, wenn die Pigmente bereits im Masterbatch gut dispergiert vorliegen, was bei Verwendung von Polymermatrizes, insbesondere in Polycarbonat, nur unzureichend gewährleistet ist.

Eine weitere Möglichkeit zur Verbesserung der Dispergierung von Pigmenten besteht in der Verwendung von Dispergierungshilfsmitteln, welche die intermolekularen Wechselwirkungen zwischen den einzelnen Pigmentpartikeln oder Pigmentaggregaten innerhalb eines Pigmentagglomerats reduzieren und dadurch die Zerscherung der Agglomerate bei der Herstellung der Compounds erleichtern. Der Nachteil des Einsatzes solcher Dispergierungshilfsmittel, die keinerlei weitere notwendige Wirkung in der Zusammensetzung aufweisen, ist ihr Verbleib in der hergestellten Polymerzusammensetzung und bedingt hierdurch die mögliche nachteilige Beeinflussung der anwendungstechnischen Eigenschaften der Zielprodukte.

Beispielsweise können derartige Dispergierhilfsmittel in mehrphasigen Zusammensetzungen (Blends) aus verschiedenen Polymeren (wie beispielsweise schlagzähmodifizierten Polymeren) durch eine Anreicherung an den Phasengrenzflächen die Phasenverträglichkeit der verschiedenen Polymerkomponenten und dadurch die mechanischen Eigenschaften der Blend-Zusammensetzung nachteilig beeinflussen. Ebenso können diese Additive in bestimmten Polymersystemen unerwünschte Alterungsprozesse, bei Polykondensationspolymeren beispielsweise hydrolytische Zersetzungsreaktionen, katalysieren.

Stand der Technik:

Die Herstellung von Pigment-Konzentraten in wachsartigen Verbindungen ist aus der US 4,484,952 bereits bekannt, wobei auch die Herstellung von Ruß-Konzentraten in PETS (Pentaerythrittetrastearat) beschrieben wird. Allerdings sind die Scherkräfte, die bei den in der US 4,484,952 genannten Bedingungen des Rührens, des Sprühens oder des Zentrifugierens auftreten, zur Vermischung der Pigmente mit dem Träger zu gering, um im Fall von stark agglomerierten Pigmenten eine hinreichend feine Zerteilung und gleichmäßige Verteilung dieser Pigmente in dem Trägermaterial zu erreichen. Dies ist aber eine notwendige Voraussetzung für eine nachfolgende gleichmäßige Dispergierung der Pigmente in einer Polymermatrix mit Hilfe solcher Pigment-Konzentrate. Darüber hinaus gibt die US 4,484,952 keinerlei Hinweis über die Güte der mit derartig hergestellten Ruß-Konzentraten in Thermoplasten erreichbaren Pigmentdispergierung, insbesondere nicht über die in Polycarbonat-Zusammensetzungen erreichbare Dispergierung des Rußes. Weiterhin gibt es in der US 4,484,952 keine Informationen zu den verwendeten Prozessparametern bei der Herstellung der Pigment-Konzentrate und dem Energieeintrag sowie dem verwendeten Mischaggregat, welche entscheidenden Einfluss auf die Dispergiergüte haben.

Auch aus der US 4,310,483 ist die Herstellung von Pigment- und insbesondere von Ruß-Konzentraten in wachsartigen Verbindungen bekannt. Allerdings handelt es sich hier ebenfalls um eine Konzentratform, bei der nur ein geringer Energieeintrag zur Zerteilung von agglomerierten Pigmenten und deren gleichmäßige Verteilung in dem Matrixmaterial stattfindet. Das Herstellverfahren zielt vielmehr auf eine Verbesserung der Dosier-Eigenschaften der beschriebenen Pigment-Konzentrate ab, wobei durch die Benetzung der Pigmente eine Staubbildung weitgehend vermieden und eine vorteilhaftere Dosierform erreicht wird. Der Pigmentanteil in den beschriebenen Ruß-Konzentraten übersteigt die Menge des verwendeten Granulierhilfsmittels bei weitem. Über die Qualität der Pigment-Dispergierung in Thermoplasten unter Verwendung solcher Pigment-Konzentrate wird in der US 4,310,483 festgestellt, dass sie ebenso gut ist, wie bei einer reinen Pulverdosierung ohne Verwendung von Granulierhilfsmitteln, eine Verbesserung der Dispergierung wird aber nicht beschrieben.

Die WO 2002/092702 befasst sich mit dem Coating von Ruß-Pellets durch Besprühen mit wachsartigen Verbindungen, so z.B. auch mit PETS, zur Verbesserung der Dosier-Eigenschaften von Rußprodukten durch das Coating (Beschichtung).

Die Herstellung von Ruß-haltigen Polycarbonat-Formmassen unter Verwendung von Ruß-Masterbatches wird in der EP 578 245 A2 beschrieben. Allerdings handelt es sich hier um Masterbatches in Polyethylenen. Polyethylene führen in Polycarbonat-Formmassen zu nachteiligen Eigenschaftsänderungen, beispielsweise im Hinblick auf die Tieftemperaturzähigkeit der Formmassen, und sind daher zu vermeiden.

Die Schmelzemischung von Kohlenstoff-haltigen Thermoplast-Masterbatches mit Thermoplasten ohne Isolierung des Masterbatches sondern unter gleichzeitiger kontinuierlicher Zudosierung in eine zweite Thermoplastschmelze wird in der US 2009/0057621 A1 beschrieben, wobei der Thermoplast auch Polycarbonat sein kann. Ein solches Verfahren ist jedoch technisch zu aufwendig und unflexibel.

Um die Nachteile des oben zitierten Standes der Technik zu überwinden, war es daher Aufgabe der Erfindung, ein neues Verfahren zur verbesserten Dispergierung von Pigmenten, insbesondere Ruß, in Polycarbonat-Compounds bereitzustellen.

Außerdem galt es insbesondere, bei der Verwendung von Pigment-Konzentraten keine Fremdstoffe in die Polycarbonat-Compounds einzutragen, die keinerlei notwendige Wirkung in der Zusammensetzung aufweisen.

Eine weitere Aufgabe der Erfindung war es, durch Verwendung eines Pigment-Konzentrates eine bessere Dispergierung von Pigmenten in einer Polymermatrix zu erreichen, als das mit einer Dosierung des reinen Pigments in Pulverform in einem einzigen Compoundierschritt möglich ist, wobei das Herstellverfahren weiterhin auf üblichen Mischaggregaten wie z.B. auf Ein- oder Mehrwellen-Extrudern, Knetern oder Innenmischern unter Standardbedingungen durchführbar ist.

Überraschenderweise wurde gefunden, dass sich Pigmente, insbesondere Ruße, in Substanzen, die als Entformungsmittel für Polycarbonat-Formmassen verwendet werden, ausgewählt aus Pentaerythrittetrastearat, Glycerinmonostearat und Stearylstearat, unter definierten Bedingungen in der Schmelze der genannten Entformungsmittel unter Einsatz mechanischer Scherung sowohl homogen verteilen als auch sehr gut dispergieren lassen, und dass ein so hergestelltes Ruß-Konzentrat nach Abkühlen zu Pellets geformt und in einem nachgeschalteten Compoundierungsprozess als Masterbatch zur Einfärbung von thermoplastischen Zusammensetzungen, insbesondere auch zur Einfärbung von Polycarbonat-Zusammensetzungen eingesetzt werden kann. Die Aufgaben der vorliegenden Erfindung werden durch das Verfahren und die Verwendung wie im folgenden offenbart und in den Ansprüchen beschrieben gelöst, wobei im folgenden die erfindungsgemäßen und bevorzugten Ausführungen im Allgemeinen beispielhaft mit Ruß als bevorzugtes Pigment beschrieben werden, dieses aber keine grundsätzliche Einschränkung auf Ruß als Pigment impliziert.

Es wurden Konzentrate von geeigneten Ruß-Sorten in Fettsäureester enthaltenden Entformungsmitteln ausgewählt aus Pentaerythrittetrastearat, Glycerinmonostearat und Stearylstearat hergestellt, die bevorzugt bei Raumtemperatur granulierbar sind. Bevorzugt verwendetes Entformungsmittel für die Herstellung solcher Ruß-Masterbatches ist

Pentaerythrittetrastearat (PETS). Die erfindungsgemäßen Ruß-Masterbatches können auf üblichen Compoundier-Aggregaten in der Schmelze der genannten Fettsäureester unter Aufwendung genügend hoher Scherenergie zur ausreichenden Zerteilung von ggf. agglomerierten Rußpartikeln hergestellt werden.

Weiterhin wurde gefunden, dass Polycarbonat-Formmassen, welche unter Verwendung der erfindungsgemäßen Ruß-Masterbatches durch Compoundierung in einem einzigen Compoundierschritt auf üblichen Mischaggregaten wie z.B. Ein- oder Mehrwellen-Extrudern, Knetern oder Innenmischern unter Standardbedingungen hergestellt und eingefärbt wurden, nach der thermoplastischen Verarbeitung zu Formkörpern eine wesentlich verbesserte Dispergierung der Ruß-Partikel in der Polycarbonatmatrix aufweisen. Die Polycarbonat-Formmassen können weitere Thermoplaste oder partikelförmige elastomere Polymere, sowie übliche Füllstoffe und Polymer-Additive enthalten.

Gegenstand der Erfindung ist somit insbesondere ein Verfahren zur Herstellung von Ruß-haltigen Polycarbonat-Formmassen, wobei der Ruß in Form eines Masterbatches in einer Substanz ausgewählt aus Pentaerythrittetrastearat, Glycerinmonostearat und Stearylstearat, welche in der Rezeptur der Polycarbonat-Formmassen als Entformungsmittel eingesetzt wird und somit in der Zusammensetzung eine notwendige Wirkung aufweist, fein dispergiert vorliegt und in die Polycarbonat-Formmasse durch Schmelze-Compoundierung eingebracht wird. Der Ruß-Masterbatch liegt vorzugsweise, wie oben beschrieben, als Pellet vor und wird als solches im Compoundierungsprozess eingesetzt und zudosiert. Alternativ kann ein derartiges Ruß-Masterbatch aber wegen der geringen Schmelzeviskosität bei den relativ geringen Schmelzpunkten auch in flüssiger bzw. pastöser Form mit Hilfe von Schmelze-Dosierpumpen in das Compoundieraggregat gefördert werden.

Geeignete Mischaggregate zur Herstellung der Ruß-Masterbatches sind Ein- oder Mehrwellen-Extruder oder Kneter, wie z.B. Buss Ko-Kneter oder Innenmischer oder Scherwalzen, um ggf. feste Ruß-Agglomerate ausreichend fein zu zerteilen und in dem Entformungsmittel gleichmäßig zu verteilen.

Die Ausgangskomponenten Ruß und aufgezählte Entformungsmittel werden dabei entweder getrennt oder als Pulver- oder Korn- oder Granulat-Mischung dem Compoundier-Aggregat zugeführt und in der Schmelze bei einer Beheizungstemperatur der Gehäuse von 25°C bis 200 °C, vorzugsweise 30°C bis 130°C, innig vermischt.

Die so erhaltenen Masterbatches haben in Abhängigkeit von ihrem Ruß-Gehalt und dem eingesetzten Entformungsmittel bei Raumtemperatur bevorzugt eine feste Konsistenz. Die Ruß-Masterbatches werden für eine Dosierung als Feststoff zu Schmelzesträngen ausgeformt, optional in der Schmelze über ein feinmaschiges Sieb (10 - 100 μm Maschenweite, vorzugsweise 20 - 50 μm) filtriert, um unvollständig zerteilte Ruß-Agglomerate zurück zu halten, und danach auf Temperaturen unter 40°C, vorzugsweise unter 30 °C abgekühlt und nachfolgend granuliert.

Geeignete Granulier-Vorrichtungen zur Herstellung genügend feinteiliger Granulate/Pellets des Ruß-Masterbatches, die sich in der anschließenden Compoundierung der Polycarbonat-Formmassen gut dosieren lassen, sind Unterwasser- oder Heißabschlag-Wasserring-Granulatoren. Die so erhaltenen Granulate oder Pellets haben eine maximale Länge von bevorzugt 8 mm, besonders bevorzugt von maximal 5 mm, und eine minimale Länge von bevorzugt 0,5 mm, besonders bevorzugt minimal 1 mm, wobei die Länge die Achse in Richtung der größten Ausdehnung eines Körpers definiert.

In einer alternativen Ausführungsform wird das Masterbatch als Pulver mit einem maximalen Durchmesser kleiner 0,5 mm und minimal 0,1 mm verwendet.

Der Anteil von Ruß bzw. Pigment im Masterbatch beträgt zwischen 40 und 60 Gew-%.

Die Art des eingesetzten Pigmentes und insbesondere auch des eingesetzten Rußes kann sehr stark variieren, wobei der Begriff "Ruß" auch chemische Spezies wie Carbon-Nano-Tubes, Graphit, Leitfähigkeits-Ruß und Farb-Ruß, sowie Ruße nach den verschiedensten Herstellverfahren umfasst. Besonders bevorzugt sind Farb-Ruße und Leitfähigkeits-Ruße, ganz besonders bevorzugt sind Farb-Ruße. Diese Ruße können ggf. auch gemeinsam mit anderen organischen oder anorganischen Pigmenten entweder im Ruß-Masterbatch oder bei der Compoundierung der Polycarbonat-Formmasse zum Einsatz kommen. Carbon Nano Tubes (CNT) werden in einer alternativen Ausführungsform bevorzugt nicht verwendet.

Besonders bevorzugt ist als Entformungsmittel Pentaerythrittetrastearat (PETS).

Diese erfindungsgemäß hergestellten Ruß-Masterbatches werden mit Polymeren, bevorzugt mit Polycarbonat und ggf. weiteren Komponenten der Polymer-, bevorzugt der Polycarbonat-Formmasse auf Schmelze-Mischaggregaten ausgewählt aus Ein- oder Mehrwellen-Extrudern, Innenmischer, Co-Kneter und Schwerwalzengeräte in der Schmelze unter üblichen Bedingungen innig vermischt, extrudiert und granuliert. Sie können entweder separat als Granulate bzw. Pellets über Dosierwaagen oder Seitenfüttereinrichtungen oder auch bei erhöhter Temperatur als Schmelze mittels Dosierpumpen an geeigneter Stelle in den Feststoffförderbereich des Extruders oder in die Polymerschmelze dosiert werden. Die Masterbatches in Form von Granulaten oder Pellets können auch mit anderen partikelförmigen Verbindungen zu einer Vormischung vereinigt und dann gemeinsam über Dosiertrichter oder Seitenfüttereinrichtungen in den Feststoffförderbereich des Extruders oder in die Polymerschmelze im Extruder zugeführt werden. Bei dem Compoundier-Aggregat handelt es sich bevorzugt um einen Zweiwellenextruder, besonders bevorzugt um einen Zweiwellenextruder mit gleichsinnig rotierenden Wellen, wobei der Zweiwellenextruder ein Längen/Durchmesser-Verhältnis der Schneckenwelle bevorzugt von 20 bis 44, besonders bevorzugt von 28 bis 40 aufweist. Ein derartiger Zweiwellenextruder umfasst

eine Aufschmelz- und Mischzone oder eine kombinierte Aufschmelz- und Mischzone (diese "Aufschmelz- und Mischzone" wird nachfolgend auch als "Knet- und Aufschmelzzone" bezeichnet) und optional eine Entgasungszone, an der ein absoluter Druck $p_{abs}$ von bevorzugt höchstens 800 mbar, weiter bevorzugt höchstens 500 mbar, besonders bevorzugt höchstens 200 mbar eingestellt wird. Die mittlere Verweilzeit der Mischungszusammensetzung im Extruder ist bevorzugt auf maximal 120 s, besonders bevorzugt maximal 80 s, insbesondere bevorzugt auf max. 60 s begrenzt. Die Temperatur der Schmelze des Polymers beziehungsweise der Polymerlegierung am Austritt des Extruders beträgt in bevorzugter Ausführungsform 200°C bis 400°C.

Gegenstand der Erfindung sind somit auch Pigment-haltige Polymer-, in bevorzugter Ausführungsform Polycarbonat-Formmassen mit verbesserter Pigmentdispergierung, hergestellt nach dem erfindungsgemäßen Verfahren, d.h. unter Verwendung eines erfindungsgemäßen Pigment-Entformungsmittel-Konzentrats, enthaltend

a) 1 bis 99,96 Gew.-%, bevorzugt 40 bis 99,9 Gew-% , weiter bevorzugt 50 bis 99,8 Gew-%, besonders bevorzugt 50 bis 75 Gew.-% mindestens eines thermoplastischen Polymers (a),

b) 0,02 bis 10 Gew.-%, bevorzugt 0,05 bis 5 Gew.-%, weiter bevorzugt 0,1 bis 3 Gew.-%, besonders bevorzugt 0,1 bis 1,5 Gew.-% mindestens einer Pigment-Komponente (b), in bevorzugter Ausführungsform eines Kohlenstoff-basierten Pigments, in besonders bevorzugter Ausführungsform Ruß,

c) 0,02 bis 10 Gew.-%, bevorzugt 0,05 bis 5 Gew.-%, weiter bevorzugt 0,1 bis 3 Gew.-%, besonders bevorzugt 0,1 bis 1,5 Gew.-% mindestens eines Entformungsmittels (c),

d) 0 bis 70 Gew.-%, bevorzugt 0 bis 60 Gew.-%, weiter bevorzugt von 2 bis 60 Gew.-% besonders bevorzugt von 20 bis 60 Gew.-% ein oder mehrere thermoplastische Polyester (d),

e) 0 bis 50 Gew.-%, bevorzugt 0 bis 40 Gew.-%, weiter bevorzugt von 1 bis 30 Gew.-%, besonders bevorzugt von 2 bis 20 Gew.-% ein oder mehrere von Komponente f verschiedene Elastomere (e),

f) 0 bis 70 Gew.-%, bevorzugt 0 bis 60 Gew.-%, weiter bevorzugt von 1 bis 50 Gew.-%, besonders bevorzugt von 3 bis 40 Gew.-% ein oder mehrere gegebenenfalls kautschukmodifizierte Vinyl(co)polymerisate (f), und

g) 0 bis 40 Gew.-%, bevorzugt 0 bis 30 Gew.-%, weiter bevorzugt 0,1 bis 20 Gew.-%, besonders bevorzugt 0,2 bis 10 Gew.-% weitere Additive.

Die Komponenten b und c können bei der Herstellung der erfindungsgemäßen Pigment-haltigen Polymerformmassen entweder vollständig oder aber auch nur partiell in Form eines Masterbatches aus Komponenten b und c zum Einsatz kommen. In bevorzugter Ausführungsform kommen Kohlstoff-basierte Pigmente gemäß Komponente b bei der Herstellung der erfindungsgemäßen Pigment-haltigen Polymerformmassen ausschließlich in Form eines Masterbatches aus Komponenten b und c zum Einsatz, wobei aber ein Teil der Komponente c in dieser bevorzugten Ausführungsform auch als Reinkomponente bei der Herstellung der erfindungsgemäßen Pigment-haltigen Polymerformmassen zum Einsatz kommen kann. In besonders bevorzugter Ausführungsform kommen Komponenten b und c bei der Herstellung der erfindungsgemäßen Pigment-haltigen Polymerformmassen ausschließlich in Form eines Masterbatches aus Komponenten b und c zum Einsatz.

Formkörper, die aus diesen erfindungsgemäß hergestellten Pigment-/Ruß-haltigen Polymer-/Polycarbonat-Formmassen durch thermoplastische Verarbeitung z.B. durch Spritzgießen hergestellt worden sind, weisen eine deutlich homogenere Formteiloberfläche mit deutlich weniger optischen Störstellen, d.h. Oberflächendefekten, sowie eine deutlich verbesserte Zähigkeit, insbesondere eine verbesserte Kerbschlag-Zähigkeit auf im Vergleich zu Polymer-/Polycarbonat-Formmassen gleicher Zusammensetzung, die durch direkte Compoundierung z.B. aus Pulvermischungen oder durch Compoundierung unter Einsatz von Thermoplast-basierten Pigment/Ruß-Masterbatches hergestellt worden sind.

In bevorzugter Ausführungsform ist die Anzahl der Oberflächendefekte/-fehlstellen (Pickel, Krater, Stippen, etc.) auf im Spritzgussverfahren hergestellten Formkörpern hergestellt aus den erfindungsgemäßen Polymer-/Polycarbonatzusammensetzungen um mindestens 20%, besonders bevorzugt um 20 bis 95 Prozent reduziert gegenüber Formkörpern aus den Formmassen gleicher Zusammensetzung, die nach einem anderen Verfahren, insbesondere nach einem einstufigen Compoundierungsverfahren unter Verwendung der Pigment-Komponente b in Pulverform hergestellt wurden.

Die Oberflächendefekte der Spritzgusskörper, die auf Spritzgusswerkzeugen mit Hochglanzpolitur (ISO N1) erzeugt werden, können durch optische Analysenmethoden identifiziert und quantifiziert werden, wobei alle Störstellen mit einem mittleren Durchmesser von wenigstens 10 µm für die Bestimmung der Anzahl der Oberflächendefekte herangezogen werden. Die Anzahl der Oberflächendefekte wurde durch Betrachtung der Formteiloberflächen in einem

Auflichtmikroskop - z.B. Zeiss Axioplan 2 motorisiert - durch ein Objektiv mit 2,5-facher Vergrößerung im Hellfeld, bei einer Beleuchtung mit einer Halogen-100-Lichtquelle bestimmt. Dabei wurde die Anzahl der Fehlstellen in einem Oberflächenbereich der Größe von 4 cm x 4 cm durch mäanderförmiges Scannen dieser Fläche bestimmt. Diese Bestimmung wurde durch eine Kamera - z.B. Axiocam HRC - mit einer Bildauswertesoftware - z.B. KS 300 Zeiss - unterstützt.

Die optisch so festgestellten Oberflächendefekte auf Formteilen aus Polymer-/Polycarbonatformmassen mit den oben genannten Zusammensetzungen stellen gemäß Nachweis durch Raman-Spektroskopie Agglomerate und Aggregate aus Pigmenten, insbesondere Rußteilchen, gegebenenfalls gemeinsam mit Elastomerpartikeln aus Komponenten E und/oder F dar, die bei der Schmelzecompoundierung der Komponenten im Extruder unzureichend zerteilt werden. Durch Auflichtmikroskopie an geeigneten Anschnitten der Materialproben werden solche Oberflächendefekte deutlich sichtbar. Üblicherweise haben solche Oberflächendefekte mittlere Durchmesser von ca. 10 $\mu$m bis ca. 300 $\mu$m.

Bei der erfindungsgemäßen Herstellung der Pigment-/Ruß-haltigen Polymer-/Polycarbonat-Formmassen können weitere verfahrenstechnische Maßnahmen ergriffen werden, die die Verbesserung der Pigment-/Ruß-Dispergierung in der Polymermatrix noch weiter fördern. So kann z.B. bei der Compoundierung der Pigment-/Ruß-haltigen Polymer-/Polycarbonat-Formmassen in der Schmelze Wasser in Mengen von 0,2 bis 10 Gew.-% bezogen auf die Formmasse zugesetzt und über einen Entgasungsstutzen des Extruders wieder abgeführt werden, so wie in der DE 10 2009 009680 und der EP 10001490.1 beschrieben. Ebenso kann die Compoundierung der Pigment-/Ruß-haltigen Polymer-/Polycarbonat-Formmassen auf Extrudern erfolgen, deren Spaltbreiten zwischen Schneckenkamm und Gehäusewandung vergrößert sind, so wie in EP 1016954.7 beschrieben. Alle diese Maßnahmen bewirken alleine und in Kombination miteinander Verbesserungen der Dispergierung von Pigment/Ruß in den Polymer-/Polycarbonat-Formmassen.

**Komponente a**

Als thermoplastische Polymere a können in den erfindungsgemäßen Zusammensetzungen beispielsweise Polyolefine (wie Polyethylen und Polypropylen), Vinyl(co)polymere wie Polyvinylchlorid, Styrol(co)polymere (z.B. Styrol-Acrylnitril-Copolymere, Acrylnitril-Butadien-Styrol-Copolymere, Polyacrylate, Polyacrylnitril), Polyvinylacetat, thermoplastische Polyurethane, Polyacetale (wie Polyoxymethylen und Polyphenylenether), Polyamide, Polyimide, Polycarbonate, Polyester, Polyestercarbonate, Polysulfone, Polyarylate, Polyarylether, Polyphenylenether, Polyarylsulfone, Polyarylsulfide, Polyethersulfone, Polyphenylensulfid, Polyetherketone, Polyamidimide, Polyetherimide und Polyesterimide zum Einsatz kommen.

In bevorzugter Ausführungsform kommt als thermoplastisches Polymer a in den erfindungsgemäßen Zusammensetzungen mindestens ein Vertreter ausgewählt aus der Gruppe der aromatischen Polycarbonate und aromatischen Polyestercarbonate zum Einsatz.

Erfindungsgemäß geeignete aromatische Polycarbonate und/oder aromatische Polyestercarbonate gemäß Komponente a sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate, z. B. DE-A 3 007 934).Die Herstellung aromatischer Polycarbonate erfolgt z. B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen. Ebenso ist eine Herstellung über ein Schmelzepolymerisationsverfahren durch Umsetzung von Diphenolen mit beispielsweise Diphenylcarbonat möglich.

Diphenole zur Herstellung der aromatischen Polycarbonate und/oder aromatischen Polyestercarbonate sind vorzugsweise solche der Formel (I)

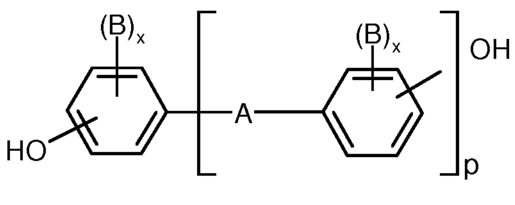

(I),

wobei

A eine Einfachbindung, $C_1$ bis $C_5$-Alkylen, $C_2$ bis $C_5$-Alkyliden, $C_5$ bis $C_6$-Cycloalkyliden,-O-, -SO-, -CO-, -S-, $-SO_2-$, $C_6$ bis $C_{12}$-Arylen, an das weitere aromatische gegebenenfalls Heteroatome enthaltende Ringe kondensiert sein

können,
oder ein Rest der Formel (II) oder (III)

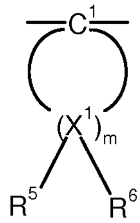
(II)

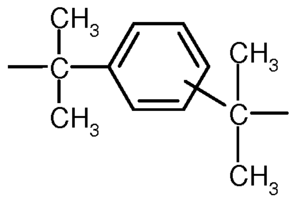
(III)

B jeweils $C_1$ bis $C_{12}$-Alkyl, vorzugsweise Methyl, Halogen, vorzugsweise Chlor und/oder Brom

x jeweils unabhängig voneinander 0, 1 oder 2,

p 1 oder 0 sind, und

$R^5$ und $R^6$ für jedes $X^1$ individuell wählbar, unabhängig voneinander Wasserstoff oder $C_1$ bis $C_6$-Alkyl, vorzugsweise Wasserstoff, Methyl oder Ethyl,

X1 Kohlenstoff und

m eine ganze Zahl von 4 bis 7, bevorzugt 4 oder 5 bedeuten, mit der Maßgabe, dass an mindestens einem Atom $X^1$, $R^5$ und $R^6$ gleichzeitig Alkyl sind.

Bevorzugte Diphenole sind Hydrochinon, Resorcin, Dihydroxydiphenole, Bis-(hydroxyphenyl)-$C_1$-$C_5$-alkane, Bis-(hydroxyphenyl)-$C_5$-$C_6$-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und $\alpha,\alpha$-Bis-(hydroxyphenyl)-diisopropyl-benzole sowie deren kernbromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3,3,5-trimethylcyclohexan, 4,4'-Dihydroxydiphenylsulfid, 4,4'-Dihydroxydiphenylsulfon sowie deren di- und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan. Insbesondere bevorzugt ist 2,2-Bis-(4-hydroxyphenyl)-propan (Bisphenol-A).

Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-[2-(2,4,4-Trimethylpentyl)]-phenol, 4-(1,3-Tetramethylbutyl)-phenol gemäß DE-A 2 842 005 oder Monoalkylphenol oder Dialkylphenole mit insgesamt 8 bis 20 Kohlenstoffatomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol%, und 10 Mol%, bezogen auf die Molsumme der jeweils eingesetzten Diphenole.

Die thermoplastischen, aromatischen Polycarbonate haben mittlere Gewichtsmittelmolekulargewichte ($M_w$, gemessen durch GPC (Gelpermeationschromatographie mit Polycarbonatstandard in Dichlormethan) von 10.000 bis 200.000 g/mol, vorzugsweise 15.000 bis 80.000 g/mol, besonders bevorzugt 24.000 bis 32.000 g/mol.

Die thermoplastischen, aromatischen Polycarbonate können in bekannter Weise verzweigt sein, und zwar vorzugsweise durch den Einbau von 0,05 bis 2,0 Mol%, bezogen auf die Summe der eingesetzten Diphenole, an dreifunktionellen oder mehr als dreifunktionellen Verbindungen, beispielsweise solchen mit drei und mehr phenolischen

Gruppen. Bevorzugt werden lineare Polycarbonate, weiter bevorzugt auf Basis von Bisphenol-A, eingesetzt.

Geeignet sind sowohl Homopolycarbonate als auch Copolycarbonate. Zur Herstellung erfindungsgemäßer Copolycarbonate gemäß Komponente a können auch 1 bis 25 Gew.%, vorzugsweise 2,5 bis 25 Gew.%, bezogen auf die Gesamtmenge an einzusetzenden Diphenolen, Polydiorganosiloxane mit Hydroxyaryloxy-Endgruppen eingesetzt werden. Diese sind bekannt (US 3 419 634) und nach literaturbekannten Verfahren herstellbar. Ebenfalls geeignet sind Polydiorganosiloxanhaltige Copolycarbonate; die Herstellung der Polydiorganosiloxanhaltiger Copolycarbonate ist beispielsweise in der DE-A 3 334 782 beschrieben.

Bevorzugte Polycarbonate sind neben den Bisphenol-A-Homopolycarbonaten die Copolycarbonate von Bisphenol-A mit bis zu 15 Mol%, bezogen auf die Molsummen an Diphenolen, anderen als bevorzugt oder besonders bevorzugt genannten Diphenolen, insbesondere 2,2-Bis(3,5-dibrom-4-hydroxyphenyl)-propan.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch $C_1$ bis $C_{22}$-Alkylgruppen oder durch Halogenatome substituiert sein können, sowie aliphatische $C_2$ bis $C_{22}$-Monocarbonsäurechloride in Betracht.

Die Menge an Kettenabbrechern beträgt jeweils 0,1 bis 10 Mol%, bezogen im Falle der phenolischen Kettenabbrecher auf Mol Diphenol und im Falle von Monocarbonsäurechlorid-Kettenabbrecher auf Mol Dicarbonsäuredichlorid.

Bei der Herstellung von aromatischen Polyestercarbonaten kann zusätzlich eine oder mehrere aromatische Hydroxycarbonsäure eingesetzt werden.

Die aromatischen Polyestercarbonate können sowohl linear als auch in bekannter Weise verzweigt sein (siehe dazu DE-A 2 940 024 und DE-A 3 007 934), wobei lineare Polyestercarbonate bevorzugt sind.

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenon-tetracarbonsäuretetra-chlorid, 1,4,5,8-Napthalintetracarbon-säuretetrachlorid oder Pyromellithsäuretetrachlorid, in Mengen von 0,01 bis 1,0 Mol% (bezogen auf eingesetzte Dicarbonsäuredichloride) oder drei- oder mehrfunktionelle Phenole, wie Phloroglucin, 4,6-Dimethyl-2,4,6-tri-(4-hydroxyphenyl)-hept-2-en, 4,6-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 Mol% bezogen auf eingesetzte Diphenole verwendet werden. Phenolische Verzweigungsmittel können mit den Diphenolen vorgelegt werden; Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol%, insbesondere bis zu 80 Mol%, besonders bevorzugt bis zu 50 Mol%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die thermoplastischen, aromatischen Polycarbonate und Polyestercarbonate können allein oder im beliebigen Gemisch eingesetzt werden.

Erfindungsgemäß besonders bevorzugt eingesetzte Komponenten a sind Polycarbonate, besonders bevorzugt sind Bisphenol-A-Homo-Polycarbonate.

## Komponente b

Als Komponente b kommen grundsätzlich beliebige anorganische oder organisches, natürliche oder synthetisch hergestellte Pigmente zum Einsatz. Unter Pigment wird dabei eine farbgebende Substanz verstanden, welche im Anwendungsmedium (hier dem thermoplastischen Polymer gemäß Komponente a) unlöslich ist. Beispiele solcher Pigmente sind Titandioxid, Ruß, Bismutpigmente, Metalloxide, Metallhydroxide, Metallsulfide, Eisencyanblau, Ultramarin, Cadmiumpigmente, Chromatpigmente, Azopigmente sowie polycyclische Pigmente.

Bevorzugt kommen als Komponente b solche Pigmente mit starken interpartikulären Bindungskräften (van-der-Waals-Kräften) zum Einsatz, da diese besonders schwer zu dispergieren sind.

Bei Komponente b handelt es besonders bevorzugt um mindestens ein Kohlenstoff-basierendes Pigment ausgewählt aus der Gruppe bestehend aus Ruß, Graphit, Fulleren, Graphen Aktivkohle und Kohlenstoff-Nanoröhrchen (Carbon Nano Tubes = CNT).

Als Kohlenstoff-Nanoröhrchen eignen sich sowohl solche mit einschichtiger Wandung (Single-walled Carbon Nanotubes = SWCNT) als auch solche mit mehrschichtiger Wandung (Multi-walled Carbon Nanotubes = MWCNT).

Unter Kohlenstoffnanoröhrchen (CNT) werden vorzugsweise zylinderförmige Kohlenstoffröhren mit einem Kohlenstoffgehalt von > 95% verstanden, wobei diese keinen amorphen Kohlenstoff enthalten. Die Kohlenstoffnanoröhrchen weisen vorzugsweise einen äußeren Durchmesser zwischen 3 und 80 nm, besonders bevorzugt 5 bis 20 nm auf. Der Mittelwert des äußeren Durchmessers beträgt bevorzugt 13 bis 16 nm. Die Länge der zylinderförmigen Kohlenstoffnanoröhrchen beträgt bevorzugt 0,1 bis 20 μm, besonders bevorzugt 1 bis 10 μm. Die Kohlenstoffnanoröhrchen bestehen vorzugsweise aus 2 bis 50, besonders bevorzugt 3 bis 15 graphitischen Lagen (auch als "Schichten" oder "Wände" bezeichnet), die einen kleinsten Innendurchmesser von 2 bis 6 nm aufweisen. Diese Kohlenstoffnanoröhrchen werden beispielsweise auch als "Carbon Fibrils" oder "Hollow Carbon fibers" bezeichnet.

Die Herstellung der erfindungsgemäß eingesetzten CNT ist allgemein bekannt (vgl. z.B. US-A 5 643 502 und DE-A 10 2006 017 695), bevorzugt erfolgt die Herstellung nach dem in DE-A 10 2006 017 695, besonders bevorzugt nach dem in Beispiel 3 der DE-A 10 2006 017 695 offenbarten Verfahren.

Kohlenstoff-basierte Pigmente gemäß Komponente b werden in einer alternativen Ausführungsform bevorzugt nicht als Carbon Nano Tubes verwendet, sondern es kommen Kohlenstoff-basierte Pigmente mit Ausnahme von CNTs, bevorzugt Ruß, besonders bevorzugt Farbruß als Komponenten b zum Einsatz.

Ruß ist ein schwarzer pulverförmiger Feststoff, der je nach Qualität und Verwendung im wesentlichen aus Kohlenstoff besteht. Der Kohlenstoffgehalt von Ruß liegt im Allgemeinen bei 80,0 bis 99,9 Gew.-%. Bei nicht oxidativ nachbehandelten Rußen beträgt der Kohlenstoffgehalt bevorzugt 96,0 bis 95,5 Gew.-%. Durch Extraktion des Rußes mit organischen Lösungsmitteln, beispielsweise mit Toluol, können Spuren organischer Verunreinigungen auf dem Ruß entfernt werden und dadurch der Kohlenstoffgehalt auch auf größer als 99,9 Gew.-% erhöht werden. Bei oxidativ nachbehandelten Rußen kann der Sauerstoffgehalt bis zu 30 Gew.-%, bevorzugt bis zu 20 Gew.-%, insbesondere 5 bis 15 Gew.-% betragen.

Ruß besteht aus meist kugelförmigen Primärpartikeln mit einer Größe von bevorzugt 10 bis 500 nm. Diese Primärpartikeln sind zu kettenförmigen oder verzweigten Aggregaten zusammengewachsen. Bei den Aggregaten handelt es sich im Allgemeinen um die kleinste in einem Dispergierungsverfahren zerteilbare Einheit des Rußes. Viele dieser Aggregate lagern sich wiederum durch intermolekulare (van-der-Waalssche) Kräfte zu Agglomeraten zusammen. Durch Variation der Herstellbedingungen können sowohl die Größe der Primärteilchen als auch deren Aggregierung (Struktur) gezielt eingestellt werden. Unter Struktur versteht der Fachmann dabei die Art der dreidimensionalen Anordnung der Primärpartikel in einem Aggregat. Von einer "hohen Struktur" spricht man bei Rußen mit stark verzweigten und vernetzten Aggregatstrukturen; bei weitgehend linearen, das heißt wenig verzweigten und vernetzten Aggregatstrukturen spricht man dagegen von "niedriger Struktur".

Als ein Maß für die Struktur eines Rußes wird im Allgemeinen die Öl-Adsorptions-Zahl gemessen nach ISO 4656 mit Dibutylphthalat (DBP) angegeben. Dabei ist eine hohe Öl-Adsorptions-Zahl ein Indikator für eine hohe Struktur.

Die Primärpartikelgröße eines Rußes lässt sich beispielsweise mittels Rasterelektronenmikroskopie ermitteln. Als ein Maß für die Primärpartikelgröße eines Rußes dient aber auch die BET-Oberfläche des Rußes bestimmt nach ISO 4652 mit Stickstoffadsorption. Dabei ist eine hohe BET-Oberfläche ein Indikator für eine kleine Primärpartikelgröße.

Die Dispergierbarkeit der Agglomerate eines Rußes hängt von der Primärpartikelgröße und der Struktur der Aggregate ab, wobei mit abnehmender Primärpartikelgröße und abnehmender Struktur die Dispergierbarkeit des Rußes in der Regel abnimmt.

Als technisches Produkt wird Industrieruß durch unvollständige Verbrennung oder Pyrolyse von Kohlenwasserstoffen hergestellt. Verfahren zur Herstellung von Industrieruß sind literaturbekannt. Bekannte Verfahren zur Herstellung von Industrierußen sind insbesondere das Furnace-, Gasruß-, Flammruß-, Acetylenruß- und Thermalruß-Verfahren.

Die Partikelgrößenverteilung der Primärteilchen sowie die Größe und Struktur der Primärteilchenaggregate bestimmen die Eigenschaften wie Farbtiefe, Grundton und Leitfähigkeit des Rußes. Leitruße besitzen dabei in der Regel kleine Primärteilchen und weitverzweigte Aggregate. Farbruße sind in der Regel Ruße mit sehr kleinen Primärpartikeln und werden oft nach der Herstellung nach einem der zuvor genannten Prozesse einer nachträglichen Oxidation unterzogen. Die dadurch auf die Rußoberfläche aufgebrachte oxidischen Gruppen sollen dabei die Verträglichkeit mit den Harzen, in denen die Farbruße eingebracht und dispergiert werden sollen, erhöhen.

Als Komponente b kommen bevorzugt Farbruße zum Einsatz. In bevorzugter Ausführungsform besitzen diese eine mittlere Primärpartikelgröße bestimmt durch Rasterelektronenmikroskopie von 10 bis 100 nm, weiter bevorzugt von 10 bis 50 nm, besonders bevorzugt von 10 bis 30 nm, insbesondere von 10 bis 20 nm. Die besonders feinteiligen Farbruße sind daher im erfindungsgemäßen Verfahren besonders bevorzugt, da die mit einer bestimmten Menge an Ruß erzielbare Farbtiefe und UV-Beständigkeit mit abnehmender Primärpartikelgröße zunimmt, andererseits aber auch deren Dispergierbarkeit abnimmt, weswegen insbesondere solche feinstteiligen Ruße einer Verbesserung in Bezug auf

die Dispergierbarkeit bedürfen.

Die bevorzugt als Komponente b zum Einsatz kommenden Farbruße besitzen eine BET-Oberfläche bestimmt nach ISO 4652 durch Stickstoffadsorption von bevorzugt mindestens 20 $m^2/g$, weiter bevorzugt von mindestens 50 $m^2/g$, besonders bevorzugt von mindestens 100 $m^2/g$, insbesondere von mindestens 150 $m^2/g$.

Bevorzugt als Komponente b zum Einsatz kommende Farbruße sind darüber hinaus charakterisiert durch eine Öl-Adsorptions-Zahl gemessen nach ISO 4656 mit Dibutylphthalat (DBP) von bevorzugt 10 bis 200 ml/100g, weiter bevorzugt von 30 bis 150 ml/100g, besonders bevorzugt von 40 bis 120 ml/100g, insbesondere von 40 bis 80 ml/100g. Die Farbruße mit niedriger Öl-Adsorptions-Zahl erzielen in der Regel eine bessere Farbtiefe und sind insofern bevorzugt, lassen sich aber andererseits im Allgemeinen schwieriger dispergieren, weswegen insbesondere solche Ruße einer Verbesserung in Bezug auf die Dispergierbarkeit bedürfen.

Die als Komponente b zum Einsatz kommenden Ruße können und werden bevorzugt in pelletisierter oder geperlter Form eingesetzt. Die Perlung beziehungsweise Pelletisierung erfolgt dabei nach literaturbekannten Verfahren und dient einerseits der Erhöhung der Schüttdichte und der besseren Dosier(Fließ)eigenschaften, andererseits aber auch der Arbeitshygiene. Die Pellets beziehungsweise Perlen werden dabei in ihrer Härte bevorzugt so eingestellt, dass sie zwar Transport und Förderprozesse bei der Dosierung weitgehend unbeschadet überstehen, andererseits jedoch bei Einwirkung größerer mechanischer Scherkräfte, wie sie beispielsweise in handelsüblichen Pulvermischgeräten und/oder Compoundieraggregaten wirken, wieder vollständig in die Agglomerate zerscheren.

## Komponente c

Erfindungsgemäß einsetzbare Entformungsmittel sind Pentaerythrit-tetrastearat, Glycerinmonostearat und Stearylstearat bzw. Gemische daraus.

Erfindungsgemäß besonders bevorzugtes Entformungsmittel ist Pentaerythrittetrastearat und Glycerinmonomstearat, insbesondere Pentaerythrittetrastearat.

## Komponente d

Erfindungsgemäß einsetzbare thermoplastische Polyester gemäß Komponente d sind Polyalkylenterephthalate, die sich nach literaturbekannten Methoden herstellen lassen (s. z.B. Kunststoff-Handbuch, Band VIII, S. 695 ff., Carl-Hanser-Verlag, München 1973).

Die Polyalkylenterephthalate sind in bevorzugter Ausführungsform Reaktionsprodukte aus aromatischen Dicarbonsäuren oder ihren reaktionsfähigen Derivaten, wie Dimethylestern oder Anhydriden, und aliphatischen, cycloaliphatischen oder araliphatischen Diolen sowie Mischungen dieser Reaktionsprodukte.

Besonders bevorzugte Polyalkylenterephthalate enthalten mindestens 80 Gew.-%, vorzugsweise mindestens 90 Gew.-%, bezogen auf die Dicarbonsäurekomponente Terephthalsäurereste und mindestens 80 Gew.-%, vorzugsweise mindestens 90 mol-%, bezogen auf die Diolkomponente Ethylenglykol- und/oder Butandiol-1,4-Reste.

Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind, und Mischungen dieser Polyalkylenterephthalate. Erfindungsgemäß besonders bevorzugt eingesetzte Polyalkylenterephthalate sind Polybutylenterephthalat (PBT) und Polyethylenterephthalat (PET).

## Komponente e

Erfindungsgemäß als Komponente e einsetzbar sind alle von Komponente f verschiedenen Elastomeren mit einer Glasübergangstemperatur < 10°C, vorzugsweise < 0°C, besonders bevorzugt < -20°C.

Bevorzugt als Komponente e kommen beispielsweise thermoplastische Elastomere zum Einsatz wie beispielsweise thermoplastische Elastomere auf Olefinbasis (TPO), thermoplastische Elastomere auf Polyurethanbasis (TPU) und thermoplastische Styrolblockcopolymere (TPS).

Die Glasübergangstemperatur wird, sofern in der vorliegenden Erfindung nicht ausdrücklich anders beschrieben, für alle Komponenten mittels dynamischer Differenzkalorimetrie (DSC) nach DIN EN 61006 bei einer Heizrate von 10 K/min mit Bestimmung der Tg als Mittelpunkttemperatur (Tangentenmethode) ermittelt.

## Komponente f

Erfindungsgemäß als Komponente f einsetzbare kautschukmodifizierte Vinyl(co)polymerisate sind ein oder mehrere Pfropfpolymerisate von

f. 1 5 bis 95 Gew.-%, vorzugsweise 10 bis 90 Gew.-%, besonders bevorzugt 30 bis 60 Gew.-%, wenigstens eines Vinylmonomeren auf

f. 2 95 bis 5 Gew.-%, vorzugsweise 90 bis 10 Gew.-%, besonders bevorzugt 70 bis 40 Gew.-%, einer oder mehrerer Pfropfgrundlagen mit Glasübergangstemperaturen < 10°C, vorzugsweise < 0°C, besonders bevorzugt < -20°C.

Die Pfropfgrundlage f.2 hat im allgemeinen eine mittlere Teilchengröße (d50-Wert) von 0,05 bis 10,00 μm, vorzugsweise 0,10 bis 5,00 μm, weiter bevorzugt 0,15 bis 1,00 μm, und besonders bevorzugt von 0,2 bis 0,5 μm.

Die mittlere Teilchengröße d50 ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-1796) bestimmt werden.

Monomere f.1 sind vorzugsweise Gemische aus

f. 1.1 50 bis 99 Gew.-Teilen Vinylaromaten und/oder kernsubstituierten Vinylaromaten (wie Styrol, α-Methylstyrol, p-Methylstyrol, p-Chlorstyrol) und/oder (Meth)Acrylsäure-(C1-C8)-Alkylester, wie Methylmethacrylat, Ethylmethacrylat), und

f. 1.2 1 bis 50 Gew.-Teilen Vinylcyanide (ungesättigte Nitrile wie Acrylnitril und Methacrylnitril) und/oder (Meth) Acrylsäure-(C1-C8)-Alkylester, wie Methylmethacrylat, n-Butylacrylat, t-Butylacrylat, und/oder Derivate (wie Anhydride und Imide) ungesättigter Carbonsäuren, beispielsweise Maleinsäureanhydrid .

Bevorzugte Monomere f.1.1 sind ausgewählt aus mindestens einem der Monomere Styrol, α-Methylstyrol und Methylmethacrylat, bevorzugte Monomere f.1.2 sind ausgewählt aus mindestens einem der Monomere Acrylnitril, Maleinsäureanhydrid und Methylmethacrylat. Besonders bevorzugte Monomere sind f.1.1 Styrol und f.1.2 Acrylnitril.

Für die Pfropfpolymerisate gemäß Komponente f geeignete Pfropfgrundlagen f.2 sind beispielsweise Dienkautschuke, EP(D)M-Kautschuke, also solche auf Basis Ethylen/Propylen und gegebenenfalls Dien, Acrylat-, Polyurethan-, Silikon-, Chloropren, Ethylen/Vinylacetat- sowie Acrylat-Silikon-Komposit-Kautschuke.

Bevorzugte Pfropfgrundlagen f.2 sind Dienkautschuke, beispielsweise auf Basis Butadien und Isopren, oder Gemische von Dienkautschuken oder Copolymerisate von Dienkautschuken oder deren Gemischen mit weiteren copolymerisierbaren Monomeren (z.B. gemäß f.1.1 und f.1.2), mit der Maßgabe, dass die Glasübergangstemperatur der Komponente f.2 unterhalb < 10°C, vorzugsweise < 0°C, besonders bevorzugt < -10°C liegt. Besonders bevorzugt ist reiner Polybutadienkautschuk.

Der Gelanteil der Pfropfgrundlage f.2 beträgt mindestens 30 Gew.-%, vorzugsweise mindestens 40 Gew.-%, besonders bevorzugt mindestens 70 Gew.-% (in Toluol gemessen).

Der Gelgehalt der Pfropfgrundlage f.2 wird bei 25°C in einem geeigneten Lösungsmittel bestimmt (M. Hoffmann, H. Krömer, R. Kuhn, Polymeranalytik I und II, Georg Thieme-Verlag, Stuttgart 1977).

Besonders bevorzugte kautschukmodifizierte Vinyl(co)polymerisate gemäß Komponente f sind beispielsweise ABS-Polymerisate (Emulsions-, Masse- und Suspensions-ABS), wie sie z.B. in der DE-OS 2 035 390 (=US-PS 3 644 574) oder in der DE-OS 2 248 242 (=GB-PS 1 409 275) bzw. in Ullmanns, Enzyklopädie der Technischen Chemie, Bd. 19 (1980), S. 280 ff. beschrieben sind.

Die Pfropfcopolymerisate gemäß Komponente f werden durch radikalische Polymerisation, z.B. durch Emulsions-, Suspensions-, Lösungs- oder Massepolymerisation, vorzugsweise durch Emulsions- oder Massepolymerisation, besonders bevorzugt durch Emulsionspolymerisation, hergestellt.

Besonders geeignete Pfropfkautschuke sind auch ABS-Polymerisate, die im Emulsionspolymerisationsverfahren durch Redox-Initiierung mit einem Initiatorsystem aus organischem Hydroperoxid und Ascorbinsäure gemäß US-P 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter kautschukmodifizierte Pfropfpolymerisaten gemäß Komponente f auch solche Produkte verstanden, die durch (Co)Polymerisation der Pfropfmonomere f.1 in Gegenwart der Pfropfgrundlage f.2 gewonnen werden und bei der Aufarbeitung mit anfallen.

Als Pfropfgrundlage f.2 geeignete Acrylatkautschuke sind vorzugsweise Polymerisate aus Acrylsäurealkylestern, gegebenenfalls mit bis zu 40 Gew.-%, bezogen auf f.2 anderer polymerisierbarer, ethylenisch ungesättigter Monomeren. Zu den bevorzugten polymerisierbaren Acrylsäureestern gehören C1 bis C8-Alkylester, beispielsweise Methyl-, Ethyl-, Butyl-, n-Octyl- und 2-Ethylhexylester; Halogenalkylester, vorzugsweise Halogen-C1-C8-alkylester, wie Chlorethylacrylat sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen

und ungesättigter einwertiger Alkohole mit 3 bis 12 C-Atomen, oder gesättigter Polyole mit 2 bis 4 OH-Gruppen und 2 bis 20 C-Atomen, wie Ethylenglykoldimethacrylat, Allylmethacrylat; mehrfach ungesättigte heterocyclische Verbindungen, wie Trivinyl- und Triallylcyanurat; polyfunktionelle Vinylverbindungen, wie Di- und Trivinylbenzole; aber auch Triallylphosphat und Diallylphthalat. Bevorzugte vernetzende Monomere sind Allylmethacrylat, Ethylenglykoldimethacrylat, Diallylphthalat und heterocyclische Verbindungen, die mindestens drei ethylenisch ungesättigte Gruppen aufweisen. Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5,00, insbesondere 0,05 bis 2,00 Gew.-%, bezogen auf die Pfropfgrundlage f.2. Bei cyclischen vernetzenden Monomeren mit mindestens drei ethylenisch ungesättigten Gruppen ist es vorteilhaft, die Menge auf unter 1 Gew.-% der Pfropfgrundlage f.2 zu beschränken.

Bevorzugte "andere" polymerisierbare, ethylenisch ungesättigte Monomere, die neben den Acrylsäureestern gegebenenfalls zur Herstellung von als Pfropfgrundlage f.2 geeigneten Acrylatkautschuken dienen können, sind z.B. Acrylnitril, Styrol, $\alpha$-Methylstyrol, Acrylamide, Vinyl-C1-C6-alkylether, Methylmethacrylat, Butadien. Bevorzugte Acrylatkautschuke als Pfropfgrundlage f.2 sind Emulsionspolymerisate, die einen Gelgehalt von mindestens 60 Gew.-% aufweisen.

Weitere geeignete Pfropfgrundlagen gemäß f.2 sind Silikonkautschuke mit pfropfaktiven Stellen, wie sie in den DE-OS 3 704 657, DE-OS 3 704 655, DE-OS 3 631 540 und DE-OS 3 631 539 beschrieben werden.

Erfindungsgemäß als Komponente f einsetzbare kautschukfreie Vinyl(co)polymerisate sind beispielsweise und bevorzugt Homo- und/oder Copolymerisate von mindestens einem Monomeren aus der Gruppe der Vinylaromaten, Vinylcyanide (ungesättigte Nitrile), (Meth)Acrylsäure-(C1 bis C8)-Alkylester, ungesättigten Carbonsäuren sowie Derivaten (wie Anhydride und Imide) ungesättigter Carbonsäuren.

Insbesondere geeignet sind (Co)Polymerisate aus 50 bis 99 Gew.-Teilen, bevorzugt 60 bis 80 Gew.-Teilen, insbesondere 70 bis 80 Gew.-Teilen, jeweils bezogen auf das (Co)Polymerisat, mindestens eines Monomeren ausgewählt aus der Gruppe der Vinylaromaten (wie beispielsweise Styrol, $\alpha$-Methylstyrol), kernsubstituierten Vinylaromaten (wie beispielsweise p-Methylstyrol, p-Chlorstyrol) und (Meth)Acrylsäure-(C1-C8)- Alkylester (wie beispielsweise Methylmethacrylat, n-Butylacrylat, tert.-Butylacrylat) und 1 bis 50 Gew.-Teilen, bevorzugt 20 bis 40 Gew.-Teilen, insbesondere 20 bis 30 Gew.-Teilen, jeweils bezogen auf das (Co)Polymerisat, mindestens eines Monomeren ausgewählt aus der Gruppe derVinylcyanide (wie beispielsweise ungesättigte Nitrile wie Acrylnitril und Methacrylnitril), (Meth)Acrylsäure-(C1-C8)-Alkylester (wie beispielsweise Methylmethacrylat, n-Butylacrylat, tert.-Butylacrylat), ungesättigte Carbonsäuren und Derivate ungesättigter Carbonsäuren (beispielsweise Maleinsäureanhydrid und N-Phenyl-Maleinimid). Besonders bevorzugt ist das Copolymerisat aus Styrol und Acrylnitril.

Derartige Vinyl(co)polymerisate sind bekannt und lassen sich durch radikalische Polymerisation,insbesondere durch Emulsions-, Suspensions-, Lösungs- oder Massepolymerisation herstellen.

In erfindungsgemäß besonders bevorzugter Ausführungsform weisen die die Vinyl(co)polymerisate eine gewichtsgemittelte Molmasse $M_w$ (bestimmt per Gelchromatographie in Dichlormethan mit Polystyrol-Eichung) von 50.000 bis 250.000 g/mol, besonders bevorzugt von 70.000 bis 180.000 g/mol auf.

## Komponente g

Erfindungsgemäß einsetzbare Additive gemäß Komponente g sind z.B. Flammschutzmittel (beispielsweise Halogenverbindungen oder Phosphorverbindungen wie monomere oder oligomere organische Phosphorsäureester, Phosphazene oder Phosphonatamine, insbesondere Bisphenol-A-Diphoshat, Resorcinol-Diphosphat und Triphenylphosphat, Flammschutzsynergisten (beispielsweise nanoskalige Metalloxide), rauchhemmende Additive (beispielsweise Borsäure oder Borate), Antidrippingmittel (beispielsweise Verbindungen der Substanzklassen der fluorierten Polyolefine, der Silikone sowie Aramidfasern), Antistatika (beispielsweise Blockcopolymere aus Ethylenoxid und Propylenoxid, andere Polyether oder Polyhydroxyether, Poletheramide, Polyesteramide oder Sulfonsäuresalze), Leitfähigkeitsadditive jenseits der Definition der Komponente b, Stabilisatoren (beispielsweise UV/Licht-Stabilisatoren, Thermostabilisatoren, Antioxidantien, Umesterungsinhibitoren, Hydrolyseschutzmittel), antibakteriell wirkende Additive (beispielsweise Silber oder Silbersalze), kratzfestigkeitsverbessernde Additive (beispielsweise Silikonöle oder harte Füllstoffe wie Keramik(hohl)kugeln), IR-Absorbentien, optische Aufheller, fluoreszierende Additive, Füll- und Verstärkungsstoffe jenseits der Definition der Komponente b (beispielsweise Talk, ggf. gemahlene Glasfasern, Glas- oder Keramik(hohl)kugeln, Glimmer, Kaolin, CaCO3 und Glasschuppen), Farbstoffe, vermahlene thermoplastische Polymere und Brönsted-saure Verbindungen als Basenfänger, oder aber Mischungen mehrerer der genannten Additive.

Die erfindungsgemäß hergestellten Polymermischungen werden vorzugsweise zur Herstellung von Spritzgussformkörpern oder von Extrudaten verwendet, bei denen besondere Anforderungen an die Homogenität und Defektfreiheit der Oberflächen gestellt werden.

Beispiele für erfindungsgemäße Formkörper sind Profile, Folien, Gehäuseteile jeder Art, insbesondere Gehäuseteile für Computer, Laptops, Handys, Fernseherrahmen; für Büromaschinen wie Monitore, Drucker, Kopierer; für

Platten, Rohre, Elektroinstallationskanäle, Fenster, Türen und Profile für den Bausektor, Innenausbau und Außenanwendungen; auf dem Gebiet der Elektrotechnik z.B. für Schalter und Stecker. Ferner können die erfindungsgemäßen Formkörper für Innenausbauteile von Personenkraftwagen, Schienenfahrzeugen, Schiffen, Flugzeugen, Bussen und anderen Kraftfahrzeugen sowie für Kfz-Karosserieteile verwendet werden. Weitere Formkörper sind Lebensmittel- und Getränkeverpackungen und Bauteile, die nach dem Spritzguss galvanisiert oder metallisiert werden.

**Beispiele:**

**Verwendete Rohstoffe:**

**a1** Lineares Polycarbonat auf Basis Bisphenol-A mit einem gewichtsgemittelten Molekulargewicht $M_w$ von 17.000 g/mol (bestimmt durch GPC in Methylenchlorid bei 25°C mit Polycarbonat-Eichung).

**a2** Lineares Polycarbonat auf Basis Bisphenol-A mit einem gewichtsgemittelten Molekulargewicht $M_w$ von 25.000 g/mol (bestimmt durch GPC in Methylenchlorid bei 25°C mit Polycarbonat-Eichung).

**a3** Lineares Polycarbonat auf Basis Bisphenol-A mit einem gewichtsgemittelten Molekulargewicht $M_w$ von 28.000 g/mol (bestimmt durch GPC in Methylenchlorid bei 25°C mit Polycarbonat-Eichung).

**a4** Lineares Polycarbonat auf Basis Bisphenol-A mit einem gewichtsgemittelten Molekulargewicht $M_w$ von 30.000 g/mol (bestimmt durch GPC in Methylenchlorid bei 25°C mit Polycarbonat-Eichung).

**a5** Lineares Polycarbonat auf Basis Bisphenol-A mit einem gewichtsgemittelten Molekulargewicht $M_w$ von 36.000 g/mol (bestimmt durch GPC in Methylenchlorid bei 25°C mit Polycarbonat-Eichung).

**a6** Lineares Co-Polycarbonat aus Bisphenol A und 1,1-Bis-(4-hydroxyphenyl)-3,3,5-trimethylcyclohexan im Mischungsverhältnis 70 Gew.-% 30 Gew.-% mit einer Schmelzeviskosität gemessen gemäß ISO 11433 bei einer Temperatur von 340°C und einer Scherrate von $1000s^{-1}$ von 400 Pas.

**a7** Lineares Polycarbonat aus Bisphenol A und 1,1-Bis-(4-hydroxyphenyl)-3,3,5-trimethylcyclohexan im Mischungsverhältnis 30 Gew.-% : 70 Gew.-% mit einer Schmelzeviskosität gemessen gemäß ISO 11433 bei einer Temperatur von 340°C und einer Scherrate von $1000s^{-1}$ von 320 Pas.

**a8** Komponente a2 zu Pulver vermahlen

**a9** Zu Pulver vermahlenes lineares Polycarbonat auf Basis Bisphenol-A mit einem gewichtsgemittelten Molekulargewicht $M_w$ von 32.000 g/mol (bestimmt durch GPC in Methylenchlorid bei 25°C mit Polycarbonat-Eichung)

**b1** Black Pearls 800 (Cabot Corporation, Leuven, Belgien): geperlter Pigmentruß mit einer mittleren Primärpartikelgröße bestimmt durch Rasterelektronenmikroskopie von 17 nm, einer BET-Oberfläche bestimmt nach ISO 4652 durch Stickstoffadsorption von 210 $m^2/g$ und einer Öl-Adsorptionszahl gemessen nach ISO 4656 mit Dibutylphthalat (DBP) von 65 ml/100 g.

**b2** Printex 85 (Evonik Degussa GmbH. Frankfurt/Main, Deutschland): Pigmentruß mit einer mittleren Primärpartikelgröße bestimmt durch Rasterelektronenmikroskopie von 16 nm, einer BET-Oberfläche bestimmt nach ISO 4652 durch Stickstoffadsorption von 200 $m^2/g$ und einer Öl-Adsorptionszahl gemessen nach ISO 4656 mit Dibutylphthalat (DBP) von 48 ml/100 g.

**b3** Chrom-Rutil-Pigment

**b4** Eisenoxid-Pigment

**c1** Pentaerithrittetrastearat (PETS)

**c2** Glycerinmonostearat (GMS)

**c3** Stearylstearat

**c4** LDPE-Wachs (Low-Density-Polyethylen-Wachs)

**d1** Lineares Polyethylenterephthalat mit einer intrinsischen Viskosität von 0.665 gemessen in Phenol/o-Dichlorbenzol (1:1 Gew.-Teile) bei 25°C

**d2** Lineares Polybutylenterephtalat mit einer Schmelzevolumenrate von 45 cm3/10 min bei 250°C und 2.16 kg Belastung

**f1** Emulsions-ABS-Granulat mit einem A:B:S-Gewichtsverhältnis von 20:24:56

**f2** Masse-ABS-Granulat mit einem A:B:S-Gewichtsverhältnis von 25:10:65

**f3** Pfropfpolymerisat bestehend aus 28 Gew.-% Styrol-Acrylnitril-Copolymer mit einem Verhältnis aus Styrol zu Acrylnitril von 71 zu 29 Gew.-Teilen als Hülle auf 72 Gew.-% einer teilchenförmigen Pfropfgrundlage als Kern bestehend aus 46 Gew.-Teilen, bezogen auf die Pfropfgrundlage, Silikonkautschuk und 54 Gew.-Teilen, bezogen auf die Pfropfgrundlage, Butylacrylatkautschuk, hergestellt im Emulsionspolymerisationsverfahren.

**f4** Emulsions-ABS-Pfropf in Pulverform mit einem A:B:S-Gewichtsverhältnis von 12:58:30

**f5** Emulsions-ABS-Pfropf in Pulverform mit einem A:B:S-Gewichtsverhältnis von 7:75:18

**f6** Polymethylmethacrylat(PMMA)-gepfropfter Silikon-Butylacrylat-Kompositkautschuk-Pfropf in Pulverform, hergestellt in Emulsionspolymerisation, bestehend aus einer Pfropfhülle aus 10 Gew.-%, bezogen auf den Pfropf, an Polymethylmethacrylat und 90 Gew.-%, bezogen auf den Pfropf, an partikulärer Silikon-Butylacrylat-Kompositkautschukgrundlage mit einem Silikongehalt, bezogen auf die Silikon-Butylacrylat-Kompositkautschukgrundlage, von 30 Gew.-% und einem Butylacrylatgehalt, bezogen auf die Silikon-Butylacrylat-Kompositkautschukgrundlage, von 70 Gew.-%.

**f7** Styrol-Acrylnitril-Copolymer (SAN) einem A:S-Gewichtsverhältnis von 24:76

**g1** Bisphenol-A basierendes Oligophosphat

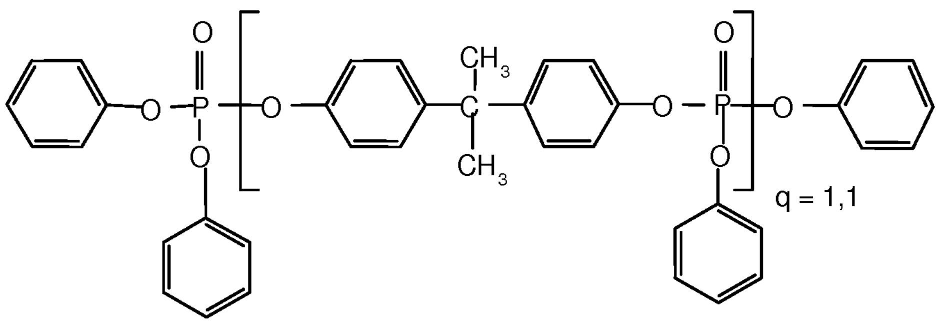

q = Oligomerisierungsgrad

**g2** Polytetrafluorethylen (PTFE)-Konzentrat bestehend aus 50 Gew.-% Styrol-Acrylnitril(SAN)-Copolymer und 50 Gew.-% PTFE

**g3** Stabilisatoren

**g4** Talk mit einem $d_{50}$ von 1,2 µm.

**g5** Wasser

**A) Ruß-Masterbatches**

Die in Tabelle 1 unter Komponente B aufgeführten Ruß/Entformer-Masterbatches 1 bis 14 wurden wie im Folgenden beschrieben hergestellt.

**A.1) Verwendete Mischaggregate**

**Versuchsanordnung 1**

Es wurde ein Ko-Kneter Typ MDK/E 46 der Fa. Buss verwendet. Fig. 1 zeigt den prinzipiellen Aufbau. Die Dosierung der Mischungskomponenten erfolgte in den Einfülltrichter 1 des Buss Ko-Kneters 2. Dort wurden die Mischungskomponenten durch die im Inneren befindliche Schnecke (nicht dargestellt) in den Ko-Kneter 2 eingezogen und axial gefördert. Im Bereich des Staurings 3 erfolgten ein Aufstauen der Mischungskomponenten sowie ein Aufschmelzen des Entformers, eine innige Vermischung der Mischungskomponenten sowie eine Dispergierung des Rußes. Im Bereich des Staurings 4 erfolgten ein Aufstauen der Schmelzemischung sowie eine weitere Vermischung der Mischungskomponenten und Dispergierung des Rußes. In den Bereichen zwischen dem Einfülltrichter 1 und dem Stauring 3, dem Stauring 3 und dem Stauring 4 sowie dem Stauring 4 und dem an den Ko-Kneter 2 angeflanschten Einwellenextruder 5 wurden die Knetflügel auf der Schneckenwelle so angeordnet, dass die Schmelzemischung axial in Richtung Einwellenextruder 5 gefördert wurde. In dem Einwellenextruder 5 wurde die Schmelzemischung durch die Einwellenschnecke (nicht dargestellt) gefördert und an der Entgasungsöffnung 6 entgast. Am Ende des Einwellenextruders 5 befindet sich ein Spritzkopf (nicht dargestellt) mit einer Düsenplatte mit 8 Löchern, von denen jedes einen Durchmesser von 2,5 mm hat. Die aus der Düsenplatte austretenden Schmelzestränge wurden anschließend mittels einer dem Fachmann bekannten Heißabschlag-Wasserring-Granulieranlage (nicht dargestellt) zu Granulaten mit einer Länge bis 5 mm granuliert und abgekühlt. Das an den Granulaten anhaftende Wasser wurde danach mittels einer Siebwuchtrinne (nicht dargestellt) und anschließender Trocknung in einem Wirbelbetttrockner (nicht dargestellt) entfernt.

**Versuchsanordnung 2**

Wie Anordnung 1, jedoch ohne Stauring 3, (s. Fig. 2) so dass im Vergleich zu Versuchsanordnung 1 der Energieeintrag des Ko-Kneters bei Versuchsanordnung 2 niedriger ist.

**Versuchsanordnung 3**

Wie Anordnung 1, jedoch mit zusätzlichem Dosiertrichter 7 hinter Stauring 3 (s. Fig. 3), so dass der Ruß in zwei Schritten über Dosiertrichter 1 und 7 in zwei Teilen zugegeben wird.

**Versuchsanordnung 4**

Es wurde ein Doppelschneckenextruder Evolum HT32 der Firma Clextral mit einem Gehäuseinnendurchmesser von 32 mm, einem Verhältnis von Schneckenaußendurchmesser zu Schneckeninnendurchmesser von 1,55 und einem Länge-zu-Durchmesser-Verhältnis von 44 verwendet. Der Doppelschneckenextruder weist ein aus 11 Teilen bestehendes Gehäuse auf, in welchem 2 gleichsinnig drehende, miteinander kämmende Wellen (nicht dargestellt) angeordnet sind.

Den prinzipiellen Aufbau des verwendeten Extruders zeigt Fig. 4.

Die Dosierung eines Teils des pulverförmigen Rußes und des pulverförmigen Entformers erfolgte mittels Differentialdosierwaagen (nicht dargestellt) über den Einfülltrichter 8 in den Haupteinzug des Extruders in Gehäuse 9 (Einzugsgehäuse).

Im Bereich der Gehäuse 9 bis 11 befindet sich eine Förderzone, in welcher die Mischungsbestandteile im festen Zustand in den Extruder eingezogen und weitergefördert werden.

Im Bereich des Gehäuses 12 befindet sich eine Plastifizierzone, welche aus verschiedenen fördernden zwei- und dreigängigen Knetblöcken verschiedener Breite und einem rückförderndem Element am Ende der Zone besteht.

Im Bereich der Gehäuse 13 und 14 befindet sich eine Mischzone, welche aus verschiedenen Misch-, Knet- und Förderelementen besteht.

Im Gehäuse 15 wird über eine Seitenfüttereinrichtung der restliche Teil des pulverförmigen Rußes in den Extruder dosiert.

Im Bereich der Gehäuse 16 und 17 befindet sich eine weitere Mischzone, welche aus verschiedenen Misch-, Knet- und Förderelementen besteht.

In Gehäuseteil 18 (Entgasungsgehäuse) befindet sich die Entgasungsöffnung 20, welche an eine Absaugvorrichtung (nicht dargestellt) angeschlossen ist.

In Gehäuse 19 (Austragsgehäuse) befindet sich die Druckaufbauzone und im Anschluss daran ein Spritzkopf (nicht dargestellt) mit einer Düsenplatte mit 6 Löchern, von denen jedes einen Durchmesser von 3,2 mm hat.

**Versuchsanordnung 5**

Es wurde ein Ko-Kneter Typ MDK/E 100 der Fa. Buss verwendet. Der prinzipielle Aufbau entsprach dem Aufbau von Versuchsanordnung 3.

**Versuchsanordnung 6**

Es wurde ein Scherwalzen-Aggregat verwendet, wie es z.B. in EP 0707037 B1 beschrieben ist.

**A.2) Herstellung der Ruß-Masterbatches B1-B16**

Die Ruß/Entformer-Masterbatches B1 bis B4 wurden mit den in Tabelle 2 angegebenen Versuchsanordnungen, Prozessparametern und Rezepturen hergestellt.

Der in Tabelle 2 angegebene spezifische mechanische Energieeintrag (SME) wurde nach Gleichung 1 ermittelt.

$$SME = \frac{2 \cdot \pi \cdot M \cdot n}{\dot{m} \cdot 60000} \qquad \text{Gleichung 1}$$

SME: spezifischer mechanischer Energieeintrag in kWh/kg

M: Drehmoment in Nm

n: Drehzahl in 1/min

$\dot{m}$: Durchsatz in kg/h|

Das Ruß/Entformer-Masterbatch B5 wurde mit Versuchsanordnung 5 hergestellt. aus 58% bl und 42% c1.

Die Ruß/Entformer-Masterbatches B6 und B7 wurden mit Versuchsanordnung 6 hergestellt aus 50 % bl und 50 % c1 (B6) beziehungsweise 65 % bl und 35 % c1 (B7)

Die Ruß/Entformer-Masterbatches B8 bis B14 wurden mit den in Tabelle 3 angegebenen Versuchsanordnungen, Prozessparametern und Rezepturen hergestellt. Der in Tabelle 3 angegebene spezifische mechanische Energieeintrag (SME) wurde nach Gleichung 1 ermittelt.

Das Ruß/Polycarbonat Masterbatch B15 wurde von der Fa. Color System S.p.a. geliefert. Ruß-Polycarbonat Masterbatch bestehend zu 15 Gew.-% bl und 85 Gew.-% eines Bisphenol-A-basierendes Polycarbonats mit einer relativen Lösungsviskosität von 1,28 (gemessen in Methylenchlorid bei 25°C)

Das Ruß/Polyethylen-Masterbatch B16 wurde von der Fa. Cabot geliefert (Handelsname: Plasblak PE6130). Ruß-Polyethlylen-Masterbatch enthaltend 50 Gewichtsprozent Ruß.

**B) PC-Formmassen**

**B.1) verwendete Mischaggregate**

**Versuchsanordnung 7**

Es wurde ein Doppelschneckenextruder Evolum HT32 der Firma Clextral mit einem Gehäuseinnendurchmesser von 32 mm, einem Verhältnis von Schneckenaußendurchmesser zu Schneckeninnendurchmesser von 1,55 und einem Länge-zu-Durchmesser-Verhältnis von 36 verwendet. Der Doppelschneckenextruder weist ein aus 9 Teilen bestehendes Gehäuse auf, in welchem 2 gleichsinnig drehende, miteinander kämmende Wellen (nicht dargestellt) angeordnet sind.

Den prinzipiellen Aufbau des verwendeten Extruders zeigt Fig. 5.

Die Dosierung aller Komponenten erfolgte mittels Differentialdosierwaagen (nicht dargestellt) über den Einfülltrichter 8a in den Haupteinzug des Extruders in Gehäuse 9a (Einzugsgehäuse).

Im Bereich der Gehäuse 9a bis 13a befindet sich eine Förderzone, in welcher die Mischungsbestandteile im

festen Zustand in den Extruder eingezogen und weitergefördert werden.

Im Bereich der Gehäuse 14a und 16a befindet sich eine Plastifizierzone, welche aus verschiedenen fördernden zwei- und dreigängigen Knetblöcken verschiedener Breite und einem rückfördernden Element am Ende der Zone besteht.

Im Bereich der Gehäuse 16a und 18a befindet sich eine Mischzone, welche aus verschiedenen Misch- und Förderelementen besteht.

In Gehäuseteil 18a (Entgasungsgehäuse) befindet sich die Entgasungsöffnung 20a, welche an eine Absaugvorrichtung (nicht dargestellt) angeschlossen ist.

In Gehäuse 19a (Austragsgehäuse) befindet sich die Druckaufbauzone und im Anschluss daran ein Spritzkopf (nicht dargestellt) mit einer Düsenplatte mit 6 Löchern, von denen jedes einen Durchmesser von 3,2 mm hat.

**Versuchsanordnung 8**

Wie Versuchsanordnung 7, jedoch mit einem am Ende von Gehäuseteil 21 angeordneten Einspritzventil 22, über welches bei den Rezepturen 20 und 21 das flüssige Additiv 1 zudosiert wird (Fig. 6).

**Versuchsanordnung 9**

Es wurde ein Doppelschneckenextruder ZSK 25 WLE der Firma Coperion Werner & Pfleiderer mit einem Gehäuseinnendurchmesser von 25,2 mm, einem Verhältnis von Schneckenaußendurchmesser zu Schneckeninnendurchmesser von 1,50 und einem Länge-zu-Durchmesser-Verhältnis von 48 verwendet. Der Doppelschneckenextruder weist ein aus 13 Teilen bestehendes Gehäuse auf, in welchem 2 gleichsinnig drehende, miteinander kämmende Wellen (nicht dargestellt) angeordnet sind. Den prinzipiellen Aufbau des verwendeten Extruders zeigt Fig. 7. Die Dosierung aller Komponenten erfolgte mittels Differentialdosierwaagen (nicht dargestellt) über den Einfülltrichter 8c in den Haupteinzug des Extruders in Gehäuse 9c (Einzugsgehäuse). Im Bereich der Gehäuse 9c bis 12c befindet sich eine Förderzone, in welcher die Mischungsbestandteile im festen Zustand in den Extruder eingezogen und weitergefördert werden. Im Bereich der Gehäuse 13c und 23 (Zwischenplatte) befindet sich eine Plastifizierzone, welche aus verschiedenen fördernden zwei- und dreigängigen Knetblöcken verschiedener Breite und einem rückförderndem Element am Ende der Zone besteht. Im Bereich der Gehäuse 14c bis 17c befinden sich 2 Mischzonen, welche aus verschiedenen Misch- und Förderelementen besteht. In Gehäuseteil 18c befindet sich die Entgasungsöffnung 20c, welche an eine Absaugvorrichtung (nicht dargestellt) angeschlossen ist. In Gehäuse 19c (Austragsgehäuse) befindet sich die Druckaufbauzone und im Anschluss daran ein Spritzkopf (nicht dargestellt) mit einer Düsenplatte mit 2 Löchern, von denen jedes einen Durchmesser von 4,5 mm hat.

**Versuchsanordnung 10**

Es wurde ein Doppelschneckenextruder ZSK 133Sc der Firma Coperion Werner & Pfleiderer mit einem Gehäuseinnendurchmesser von 134,4 mm, einem Verhältnis von Schneckenaußendurchmesser zu Schneckeninnendurchmesser von 1,55 und einem Länge-zu-Durchmesser-Verhältnis von 31,5 verwendet. Der Doppelschneckenextruder weist ein aus 10 Teilen bestehendes Gehäuse auf, in welchem 2 gleichsinnig drehende, miteinander kämmende Wellen (nicht dargestellt) angeordnet sind. Den prinzipiellen Aufbau des verwendeten Extruders zeigt Fig. 8. Die Dosierung aller Komponenten erfolgte mittels Differentialdosierwaagen (nicht dargestellt) über den Einfülltrichter 8d in den Haupteinzug des Extruders in Gehäuse 9d (Einzugsgehäuse). Im Bereich der Gehäuse 9d bis 11d befindet sich eine Förderzone, in welcher die Mischungsbestandteile im festen Zustand in den Extruder eingezogen und weitergefördert werden. Im Bereich der Gehäuse 12d, 23a und 13d befindet sich eine Plastifizierzone, welche aus verschiedenen fördernden zwei- und dreigängigen Knetblöcken verschiedener Breite und einem rückförderndem Element am Ende der Zone besteht. Im Bereich des Gehäuses 14d, 24a und 18d befindet sich eine Mischzone, welche aus verschiedenen Misch- und Förderelementen besteht. In Gehäuseteil 18d (Entgasungsgehäuse) befindet sich die Entgasungsöffnung 20d, welche an eine Absaugvorrichtung (nicht dargestellt) angeschlossen ist. In Gehäuse 19d (Austragsgehäuse) befindet sich die Druckaufbauzone und im Anschluss daran ein Spritzkopf (nicht dargestellt) mit einer Düsenplatte mit 60 Löchern, von denen jedes einen Durchmesser von 4,5 mm hat.

**Versuchsanordnung 11**

Es wurde ein Doppelschneckenextruder ZSK 92Mc der Firma Coperion Werner & Pfleiderer mit einem Gehäuseinnendurchmesser von 92,8 mm, einem Verhältnis von Schneckenaußendurchmesser zu Schneckeninnendurchmesser von 1,55 und einem Länge-zu-Durchmesser-Verhältnis von 40 verwendet. Der Doppelschneckenextruder weist ein aus 10 Teilen bestehendes Gehäuse auf, in welchem 2 gleichsinnig drehende, miteinander kämmende Wellen (nicht dargestellt) angeordnet sind. Den prinzipiellen Aufbau des verwendeten Extruders zeigt Fig. 9. Die Dosierung aller

Komponenten erfolgte mittels Differentialdosierwaagen (nicht dargestellt) über den Einfülltrichter 8e in den Haupteinzug des Extruders in Gehäuse 9e (Einzugsgehäuse). Im Bereich der Gehäuse 9e bis 13e befindet sich eine Förderzone, in welcher die Mischungsbestandteile im festen Zustand in den Extruder eingezogen und weitergefördert werden. Im Bereich der Gehäuse 13e und 14e befindet sich eine Plastifizierzone, welche aus verschiedenen fördernden zwei- und dreigängigen Knetblöcken verschiedener Breite und einem rückförderndem Element am Ende der Zone besteht. In Gehäuseteil 18e (Entgasungsgehäuse) befindet sich die Entgasungsöffnung 20e, welche an eine Absaugvorrichtung (nicht dargestellt) angeschlossen ist. In Gehäuseteil 21a befindet sich ein Einspritzventil 22a, über welches PETSLoxiolP8613,5Spezial flüssig zugegeben wird. Im Bereich der Gehäuse 21a und 26 befindet sich eine Mischzone, welche aus verschiedenen Misch- und Förderelementen besteht. In Gehäuse 19e (Austragsgehäuse) befindet sich die Druckaufbauzone und im Anschluss daran ein Spritzkopf (nicht dargestellt) mit einer Düsenplatte mit 60 Löchern, von denen jedes einen Durchmesser von 4,5 mm hat.

**B.2) Herstellung der PC-Formassen**

Die in den Beispielen zur Herstellung von PC-Formmassen verwendeten Prozessparameter sind in Tabelle 4 dargestellt. Der in Tabelle 4 angegebene spezifische mechanische Energieeintrag (SME) wurde nach Gleichung 1 ermittelt.

Die in den Beispielen hergestellten PC-Formmassen Granulate wurden über ein Spritzgussverfahren zu Platten mit glänzender Oberfläche mit einer Größe von 150 mm x 105 mm x 3,2 mm sowie Prüfkörpern mit einer Größe von 80 mm x 10 mm x 4 mm für den Kerbschlagversuch nach Izod nach ISO 180/1A verarbeitet.

Die Platten mit glänzender Oberfläche wurden auf einer Spritzgussmaschine des Typs FM160 von der Firma Klöckner hergestellt. Diese Spritzgussmaschine besitzt einen Zylinderdurchmesser von 45 mm. Dazu wurden die PC-Formmassen Granulate bei 110 °C innerhalb von 4 Stunden vorgetrocknet. Die Spritzgussverarbeitung erfolgte unter den für Polycarbonate bzw. Polycarbonat/ABS Blends bzw. Polycarbonat/PET Blends charakteristischen Bedingungen. Für die Herstellung der Platten wurde ein Spritzgusswerkzeug mit Glanzpolitur (ISO N1) verwendet.

An den Platten mit glänzender Oberfläche wurde die Anzahl Oberflächendefekte wie vorne beschrieben gemessen. Es wurden jeweils 3 Platten vermessen und aus den Ergebnissen der arithmetische Mittelwert bestimmt.

Die An den Prüfkörpern für den Kerbschlagversuch wurde die Kerbschlagzähigkeit des hergestellten Compounds nach Izod nach ISO 180/1A bestimmt. Dazu wurden jeweils 10 Prüfkörper geprüft und aus diesen Ergebnissen der arithmetische Mittelwert bestimmt.

**Beispiel 1 (Vergleich)**

Es wurde ein elastomerhaltiges Polycarbonatblend mit einer Schmelze-Volumenfließrate (MVR) von 27 $cm^3$/10min (gemessen nach ISO 1133 bei 260 °C und 5 kg) nach Rezeptur 1 (Tabelle 1) mit Versuchsanordnung 7 hergestellt. Als Rußkomponente wurde Rußpulver gemäß Tabelle 1 zugegeben.

Zur Herstellung des Compounds wurde zunächst aus den in Tabelle 1 gegebenen Komponenten b (Rußkomponente), c (Entformer) und g (Additive) sowie a9 in den genannten Anteilen ein Premix hergestellt. Die Mischung des Premix erfolgte in einem Containermischer der Fa. Mixaco (Typ CM30 mit Z-Werkzeug) über 4,5 Minuten bei einer Drehzahl von 300 1/min und einem Mischerfüllgrad von 80%.

Anschließend wurden der Premix und die übrigen in Tabelle 1 aufgeführten Mischungsbestandteile getrennt voneinander mittels jeweils einer Differentialdosierwaage (nicht dargestellt) über den Einfülltrichter 8a in den Haupteinzug in das Gehäuse 9a des Extruders dosiert.

In der Plastifizierzone und der Mischzone im Bereich der Gehäuse 14a, 16a und 18a wurden die schmelzbaren Mischungsbestandteile aufgeschmolzen, alle Mischungsbestandteile dispergiert und die Schmelzemischung homogenisiert, wobei die Schmelze im vorletzten Gehäuseteil 18a entgast wurde.

Die aus der Düsenplatte austretenden Schmelzestränge wurden in einem Wasserbad abgekühlt und anschließend mittels eines Stranggranulators granuliert.

Die Prozessparameter des Extruders sowie die wie oben beschrieben gemessene Anzahl der Oberflächendefekte bezogen auf einen Quadratzentimeter und die gemessene Kerbschlagzähigkeit nach ISO 180/1A sind in Tabelle 4 unter Beispiel 1aufgelistet.

**Beispiel 2 (erfindungsgemäß)**

Es wurde ein elastomerhaltiges Polycarbonatblend mit einer Schmelze-Volumenfließrate (MVR) von 27 $cm^3$/10min (gemessen nach ISO 1133 bei 260 °C und 5 kg) nach Rezeptur 4 (siehe Tabelle 1) mit Versuchsanordnung 7 hergestellt. Als Rußkomponente wurde Ruß/Entformer-Masterbatch Granulat gemäß Tabelle 1 zugegeben, welches wie unter A.2 beschrieben hergestellt wurde.

Zur Herstellung des Compounds wurde zunächst aus den in Tabelle 1 gegebenen Komponenten b (Rußkomponente), f (Elastomere) und g (Additive) in den genannten Anteilen ein Premix hergestellt. Die Premixherstellung und die Compoundierung der Formmasse erfolgten wie in Beispiel 1 beschrieben.

Die Prozessparameter des Extruders sowie die wie oben beschrieben gemessene Anzahl der Oberflächendefekte bezogen auf einen Quadratzentimeter und die gemessene Kerbschlagzähigkeit nach ISO 180/1A sind in Tabelle 4 unter Beispiel 2 aufgelistet.

Beim Vergleich des erfindungsgemäßen Beispiels 2 mit dem Vergleichsbeispiel 1 zeigt sich, dass bei Verwendung des Ruß/Entformer-Masterbatchs die Anzahl Oberflächendefekte deutlich geringer und die Kerbschlagzähigkeit bei 23°C und bei 0°C deutlich höher ist als bei Verwendung des Rußpulvers. Beides lässt auf eine bessere Dispergierung des Rußes bei Verwendung des Ruß/Entformer-Masterbatchs schließen, obwohl der spezifische mechanische Energieeintrag (SME) nahezu gleich geblieben ist.

**Beispiel 3 (Vergleich)**

Es wurde ein elastomerhaltiges Polycarbonatblend mit einer Schmelze-Volumenfließrate (MVR) von 18 $cm^3$/10min (gemessen nach ISO 1133 bei 260 °C und 5 kg) nach Rezeptur 18 (siehe Tabelle 1) mit Versuchsanordnung 7 hergestellt. Als Rußkomponente wurde Rußpulver gemäß Tabelle 1 zugegeben.

Zur Herstellung des Compounds wurde zunächst aus den in Tabelle 1 gegebenen Komponenten b (Rußkomponente), c (Entformer) und g (Additive) sowie f4 in den genannten Anteilen ein Premix hergestellt. Die Premixherstellung und die Compoundierung der Formmasse erfolgten wie in Beispiel 1 beschrieben.

Die Prozessparameter des Extruders sowie die wie oben beschrieben gemessene Anzahl der Oberflächendefekte bezogen auf einen Quadratzentimeter sind in Tabelle 4 unter Beispiel 3 aufgelistet.

**Beispiel 4 (erfindungsgemäß)**

Es wurde ein elastomerhaltiges Polycarbonatblend mit einer Schmelze-Volumenfließrate (MVR) von 18 $cm^3$/10min (gemessen nach ISO 1133 bei 260 °C und 5 kg) nach Rezeptur 19 (siehe Tabelle 1) mit Versuchsanordnung 7 hergestellt. Als Rußkomponente wurde Ruß/Entformer-Masterbatch Granulat gemäß Tabelle 1 zugegeben, welches wie unter A.2 beschrieben hergestellt wurde.

Zur Herstellung des Compounds wurde zunächst aus den in Tabelle 1 gegebenen Komponenten b (Rußkomponente) und g (Additive) sowie f4 in den genannten Anteilen ein Premix hergestellt. Die Premixherstellung und die Compoundierung der Formmasse erfolgten wie in Beispiel 1 beschrieben.

Die Prozessparameter des Extruders sowie die wie oben beschrieben gemessene Anzahl der Oberflächendefekte bezogen auf einen Quadratzentimeter sind in Tabelle 4 unter Beispiel 4 aufgelistet.

Beim Vergleich des erfindungsgemäßen Beispiels 4 mit dem Vergleichsbeispiel 3 zeigt sich, dass bei Verwendung des Ruß/Entformer-Masterbatchs die Anzahl Oberflächendefekte deutlich geringer ist als bei Verwendung des Rußpulvers. Beides lässt auf eine bessere Dispergierung des Rußes bei Verwendung des Ruß/Entformer-Masterbatchs schließen, obwohl der spezifische mechanische Energieeintrag (SME) gleich geblieben ist. Beim Vergleich der Beispiele 1 bis 4 zeigt sich, dass bei elastomerhaltigen Polycarbonatblends auch mit deutlich unterschiedlichen Schmelze-Volumenfließraten die Anzahl Oberflächendefekte bei Verwendung des Ruß/Entformer-Masterbatchs deutlich geringer ist als bei Verwendung des Rußpulvers.

**Beispiel 5 (Vergleich)**

Es wurde ein flammgeschütztes elastomerhaltiges Polycarbonatblend nach Rezeptur 20 (siehe Tabelle 1) mit Versuchsanordnung 8 hergestellt. Als Rußkomponente wurde Rußpulver gemäß Tabelle 1 zugegeben.

Zur Herstellung des Compounds wurde zunächst aus den in Tabelle 1 gegebenen Komponenten b (Rußkomponente), c (Entformer), g2, g3 sowie f4 in den genannten Anteilen ein Premix hergestellt. Die Mischung des Premix erfolgte in einem Containermischer der Fa. Mixaco (Typ CM30 mit Z-Werkzeug) über 4,5 Minuten bei einer Drehzahl von 300 1/min und einem Mischerfüllgrad von 80%.

Anschließend wurden der Premix und die übrigen in Tabelle 1 aufgeführten Mischungsbestandteile getrennt voneinander mittels jeweils einer Differentialdosierwaage (nicht dargestellt) über den Einfülltrichter 8b in den Haupteinzug in das Gehäuse 9b des Extruders dosiert.

In der Plastifizierzone und der Mischzone im Bereich der Gehäuse 12b und 13b wurden die schmelzbaren Mischungsbestandteile aufgeschmolzen, die in den Haupteinzug dosierten Mischungsbestandteile dispergiert und die Schmelzemischung homogenisiert. Anschließend wurde die Schmelze im Gehäuseteil 18b entgast. Im Gehäuseteil 21 wurde über ein Einspritzventil 22 das flüssige g1 (Flammschutzmittel) zugegeben und in der anschließenden Mischzone in den Gehäuseteilen 14b und 19b innig mit der Schmelze vermischt.

Die aus der Düsenplatte austretenden Schmelzestränge wurden in einem Wasserbad abgekühlt und anschließend mittels eines Stranggranulators granuliert.

Die Prozessparameter des Extruders sowie die wie oben beschrieben gemessene Anzahl der Oberflächendefekte bezogen auf einen Quadratzentimeter und die gemessene Kerbschlagzähigkeit nach ISO 180/1A sind in Tabelle 4 unter Beispiel 5 aufgelistet.

**Beispiel 6 (erfindungsgemäß)**

Es wurde ein flammgeschütztes elastomerhaltiges Polycarbonatblend nach Rezeptur 21 (siehe Tabelle 1) mit Versuchsanordnung 8 hergestellt. Als Rußkomponente wurde Ruß/Entformer-Masterbatch Granulat gemäß Tabelle 1 zugegeben, welches wie unter A.2 beschrieben hergestellt wurde.

Zur Herstellung des Compounds wurde zunächst aus den in Tabelle 1 gegebenen Komponenten b (Rußkomponente), g2, g3 sowie f4 in den genannten Anteilen ein Premix hergestellt. Die Premixherstellung und die Compoundierung der Formmasse erfolgten wie in Beispiel 5 beschrieben.

Die Prozessparameter des Extruders sowie die wie oben beschrieben gemessene Anzahl der Oberflächendefekte bezogen auf einen Quadratzentimeter und die gemessene Kerbschlagzähigkeit nach ISO 180/1A sind in Tabelle 4 unter Beispiel 6 aufgelistet.

Beim Vergleich des erfindungsgemäßen Beispiels 6 mit dem Vergleichsbeispiel 5 zeigt sich, dass bei Verwendung des Ruß/Entformer-Masterbatchs die Anzahl Oberflächendefekte deutlich geringer und die Kerbschlagzähigkeit bei 23°C höher ist als bei Verwendung des Rußpulvers. Beides lässt auf eine bessere Dispergierung des Rußes bei Verwendung des Ruß/Entformer-Masterbatchs schließen, obwohl der spezifische mechanische Energieeintrag (SME) nahezu gleich geblieben ist. Beim Vergleich der Beispiele 5 und 6 mit den Beispielen 1 bis 4 zeigt sich, dass auch bei Zugabe eines flüssigen Flammschutzmittels zu einem elastomerhaltigen Polycarbonatblend die Anzahl Oberflächendefekte bei Verwendung des Ruß/Entformer-Masterbatchs deutlich geringer ist als bei Verwendung des Rußpulvers.

**Beispiel 7 (Vergleich)**

Es wurde ein Polycarbonatcompound mit einer Schmelze-Volumenfließrate (MVR) von 9,5 $cm^3$/10min (gemessen nach ISO 1133 bei 300 °C und 1,2 kg) nach Rezeptur 22 (siehe Tabelle 1) mit Versuchsanordnung 7 hergestellt. Als Rußkomponente wurde Rußpulver gemäß Tabelle 1 zugegeben.

Zur Herstellung des Compounds wurde zunächst aus den in Tabelle 1 gegebenen Komponenten b (Rußkomponente), c (Entformer) sowie a9 in den genannten Anteilen ein Premix hergestellt. Die Premixherstellung und die Compoundierung der Formmasse erfolgten wie in Beispiel 1 beschrieben.

Die Prozessparameter des Extruders sowie die wie oben beschrieben gemessene Anzahl der Oberflächendefekte bezogen auf einen Quadratzentimeter sind in Tabelle 4 unter Beispiel 7aufgelistet.

**Beispiel 8 (erfindungsgemäß)**

Es wurde ein Polycarbonatcompound mit einer Schmelze-Volumenfließrate (MVR) von 9,5 $cm^3$/10min (gemessen nach ISO 1133 bei 300 °C und 1,2 kg) nach Rezeptur 23 (Tabelle 1) mit Versuchsanordnung 7 hergestellt. Als Rußkomponente wurde Ruß/Entformer-Masterbatch Granulat gemäß Tabelle 1 zugegeben, welches wie unter A.2 beschrieben hergestellt wurde.

Zur Herstellung des Compounds wurde zunächst aus den Tabelle 1 gegebenen Komponenten b (Rußkomponente), c (Entformer) sowie a9 in den genannten Anteilen ein Premix hergestellt. Die Premixherstellung und die Compoundierung der Formmasse erfolgten wie in Beispiel 1 beschrieben.

Die Prozessparameter des Extruders sowie die wie oben beschrieben gemessene Anzahl der Oberflächendefekte bezogen auf einen Quadratzentimeter sind in Tabelle 4 unter Beispiel 8 aufgelistet.

Beim Vergleich des erfindungsgemäßen Beispiels 8 mit dem Vergleichsbeispiel 7 zeigt sich, dass bei Verwendung des Ruß/Entformer-Masterbatchs die Anzahl Oberflächendefekte geringer ist als bei Verwendung des Rußpulvers. Beides lässt auf eine bessere Dispergierung des Rußes bei Verwendung des Ruß/Entformer-Masterbatchs schließen, obwohl der spezifische mechanische Energieeintrag (SME) nahezu gleich geblieben ist.

**Beispiel 9 (Vergleich)**

Es wurde ein Polycarbonatcompound mit einer Schmelze-Volumenfließrate (MVR) von 5 $cm^3$/10min (gemessen nach ISO 1133 bei 300 °C und 1,2 kg) nach Rezeptur 24 (siehe Tabelle 1) mit Versuchsanordnung 7 hergestellt. Als Rußkomponente wurde Rußpulver gemäß Tabelle 1 zugegeben.

Zur Herstellung des Compounds wurde zunächst aus den in Tabelle 1 gegebenen Komponenten b (Rußkomponente), c (Entformer) sowie a9 in den genannten Anteilen ein Premix hergestellt. Die Premixherstellung und die Compoundierung der Formmasse erfolgten wie in Beispiel 1 beschrieben.

Die Prozessparameter des Extruders sowie die wie oben beschrieben gemessene Anzahl der Oberflächendefekte bezogen auf einen Quadratzentimeter sind in Tabelle 4 unter Beispiel 9 aufgelistet.

**Beispiel 10 (erfindungsgemäß)**

Es wurde ein Polycarbonatcompound mit einer Schmelze-Volumenfließrate (MVR) von 5 $cm^3$/10min (gemessen nach ISO 1133 bei 300 °C und 1,2 kg) nach Rezeptur 25 (siehe Tabelle 1) mit Versuchsanordnung 7 hergestellt. Als Rußkomponente wurde Ruß/Entformer-Masterbatch Granulat gemäß Tabelle 1 zugegeben, welches wie unter A.2 beschrieben hergestellt wurde.

Zur Herstellung des Compounds wurde zunächst aus den in Tabelle 1 gegebenen Komponenten b (Rußkomponente), c (Entformer) sowie a9 in den genannten Anteilen ein Premix hergestellt. Die Premixherstellung und die Compoundierung der Formmasse erfolgten wie in Beispiel 1 beschrieben.

Die Prozessparameter des Extruders sowie die wie oben beschrieben gemessene Anzahl der Oberflächendefekte bezogen auf einen Quadratzentimeter sind in Tabelle 4 unter Beispiel 10 aufgelistet.

Beim Vergleich des erfindungsgemäßen Beispiels 10 mit dem Vergleichsbeispiel 9 zeigt sich, dass bei Verwendung des Ruß/Entformer-Masterbatchs die Anzahl Oberflächendefekte geringer ist als bei Verwendung des Rußpulvers. Beides lässt auf eine bessere Dispergierung des Rußes bei Verwendung des Ruß/Entformer-Masterbatchs schließen, obwohl der spezifische mechanische Energieeintrag (SME) gleich geblieben ist.

**Beispiel 11 (Vergleich)**

Es wurde ein hochtemperaturbeständiges Polycarbonatcompound (Vicat-Erweichungstemperatur 203 °C gemessen nach ISO 306 bei 50 N; 120 °C/h) mit einer Schmelze-Volumenfließrate (MVR) von 8 $cm^3$/10min (gemessen nach ISO 1133 bei 330 °C und 2,16 kg) nach Rezeptur 28 (siehe Tabelle 1) mit Versuchsanordnung 7 hergestellt. Als Rußkomponente wurde Rußpulver gemäß Tabelle 1 zugegeben.

Zur Herstellung des Compounds wurde zunächst aus den in Tabelle 1 gegebenen Komponenten b (Rußkomponente), c (Entformer) sowie a9 in den genannten Anteilen ein Premix hergestellt. Die Premixherstellung und die Compoundierung der Formmasse erfolgten wie in Beispiel 1 beschrieben.

Die Prozessparameter des Extruders sowie die wie oben beschrieben gemessene Anzahl der Oberflächendefekte bezogen auf einen Quadratzentimeter sind in Tabelle 4 unter Beispiel 11 aufgelistet.

**Beispiel 12 (erfindungsgemäß)**

Es wurde ein hochtemperaturbeständiges Polycarbonatcompound (Vicat-Erweichungstemperatur 203 °C gemessen nach ISO 306 bei 50 N; 120 °C/h) mit einer Schmelze-Volumenfließrate (MVR) von 8 $cm^3$/10min (gemessen nach ISO 1133 bei 300 °C und 1,2 kg) nach Rezeptur 29 (siehe Tabelle 1) mit Versuchsanordnung 7 hergestellt. Als Rußkomponente wurde Ruß/Entformer-Masterbatch Granulat gemäß Tabelle 1 zugegeben, welches wie unter A.2 beschrieben hergestellt wurde.

Zur Herstellung des Compounds wurde zunächst aus den in Tabelle 1 gegebenen Komponenten b (Rußkomponente), c (Entformer) sowie a9 in den genannten Anteilen ein Premix hergestellt. Die Premixherstellung und die Compoundierung der Formmasse erfolgten wie in Beispiel 1 beschrieben.

Die Prozessparameter des Extruders sowie die wie oben beschrieben gemessene Anzahl der Oberflächendefekte bezogen auf einen Quadratzentimeter sind in Tabelle 4 unter Beispiel 12 aufgelistet.

Beim Vergleich des erfindungsgemäßen Beispiels 12 mit dem Vergleichsbeispiel 11 zeigt sich, dass bei Verwendung des Ruß/Entformer-Masterbatchs die Anzahl Oberflächendefekte deutlich geringer ist als bei Verwendung des Rußpulvers. Beides lässt auf eine bessere Dispergierung des Rußes bei Verwendung des Ruß/Entformer-Masterbatchs schließen, obwohl der spezifische mechanische Energieeintrag (SME) gleich geblieben ist.

**Beispiel 13 (Vergleich)**

Es wurde ein hochtemperaturbeständiges Polycarbonatcompound (Vicat-Erweichungstemperatur 184 °C gemessen nach ISO 306 bei 50 N; 120 °C/h) mit einer Schmelze-Volumenfließrate (MVR) von 10 $cm^3$/10min (gemessen nach ISO 1133 bei 330 °C und 2,16 kg) nach Rezeptur 30 (siehe Tabelle 1) mit Versuchsanordnung 7 hergestellt. Als Rußkomponente wurde Rußpulver gemäß Tabelle 1 zugegeben.

Zur Herstellung des Compounds wurde zunächst aus den in Tabelle 1 gegebenen Komponenten b (Rußkomponente) und a9 in den genannten Anteilen ein Premix hergestellt. Die Premixherstellung und die Compoundierung der

Formmasse erfolgten wie in Beispiel 1 beschrieben.

Die Prozessparameter des Extruders sowie die wie oben beschrieben gemessene Anzahl der Oberflächendefekte bezogen auf einen Quadratzentimeter sind in Tabelle 4 unter Beispiel 13 aufgelistet.

**Beispiel 14 (erfindungsgemäß)**

Es wurde ein hochtemperaturbeständiges Polycarbonatcompound (Vicat-Erweichungstemperatur 184 °C gemessen nach ISO 306 bei 50 N; 120 °C/h) mit einer Schmelze-Volumenfließrate (MVR) von 10 $cm^3$/10min (gemessen nach ISO 1133 bei 300 °C und 1,2 kg) nach Rezeptur 31 (siehe Tabelle 1) mit Versuchsanordnung 7 hergestellt. Als Rußkomponente wurde Ruß/Entformer-Masterbatch Granulat gemäß Tabelle 1 zugegeben, welches wie unter A.2 beschrieben hergestellt wurde.

Zur Herstellung des Compounds wurde zunächst aus den Tabelle 1 gegebenen Komponenten b (Rußkomponente) und a9 in den genannten Anteilen ein Premix hergestellt. Die Premixherstellung und die Compoundierung der Formmasse erfolgten wie in Beispiel 1 beschrieben.

Die Prozessparameter des Extruders sowie die wie oben beschrieben gemessene Anzahl der Oberflächendefekte bezogen auf einen Quadratzentimeter sind in Tabelle 4 unter Beispiel 14 aufgelistet.

Beim Vergleich des erfindungsgemäßen Beispiels 14 mit dem Vergleichsbeispiel 13 zeigt sich, dass bei Verwendung des Ruß/Entformer-Masterbatchs die Anzahl Oberflächendefekte deutlich geringer ist als bei Verwendung des Rußpulvers. Beides lässt auf eine bessere Dispergierung des Rußes bei Verwendung des Ruß/Entformer-Masterbatchs schließen, obwohl der spezifische mechanische Energieeintrag (SME) nahezu gleich geblieben ist.

Beim Vergleich der Beispiele 7 bis 14 zeigt sich, dass bei Polycarbonatcompounds auch mit deutlich unterschiedlichen Schmelze-Volumenfließraten und Vicat-Erweichungstemperaturen die Anzahl Oberflächendefekte bei Verwendung des Ruß/Entformer-Masterbatchs deutlich geringer ist als bei Verwendung des Rußpulvers.

Beim Vergleich der Beispiele 7 bis 14 mit den Beispielen 1 bis 4 zeigt sich, dass auch bei reinen Polycarbonatcompounds ohne Zusatz von elastomerhaltigen Komponenten die Anzahl Oberflächendefekte bei Verwendung des Ruß/Entformer-Masterbatchs deutlich geringer ist als bei Verwendung des Rußpulvers.

**Beispiel 15 (Vergleich)**

Es wurde ein elastomerhaltiges Polycarbonatblend mit einer Schmelze-Volumenfließrate (MVR) von 17 $cm^3$/10min (gemessen nach ISO 1133 bei 260 °C und 5 kg) nach Rezeptur 35 (siehe Tabelle 1) mit Versuchsanordnung 9 hergestellt. Als Rußkomponente wurde Rußpulver gemäß Tabelle 1 zugegeben.

Zur Herstellung des Compounds wurde zunächst aus den Tabelle 1 gegebenen Komponenten b (Rußkomponente), c (Entformer), g (Additive) und f6 in den genannten Anteilen ein Premix hergestellt. Die Mischung des Premix erfolgte in einem Containermischer der Fa. Mixaco (Typ CM30 mit Z-Werkzeug) über 4,5 Minuten bei einer Drehzahl von 300 1/min und einem Mischerfüllgrad von 80%.

Anschließend wurden der Premix und die übrigen in Tabelle 1 aufgeführten Mischungsbestandteile getrennt voneinander mittels jeweils einer Differentialdosierwaage (nicht dargestellt) über den Einfülltrichter 8c in den Haupteinzug in das Gehäuse 9c des Extruders dosiert.

In der Plastifizierzone im Bereich der Gehäuse 12c und 13c wurden die schmelzbaren Mischungsbestandteile aufgeschmolzen und alle Mischungsbestandteile dispergiert. In der Mischzone im Bereich der Gehäuse 24, 16c, 25 und 17c wurde die Schmelzemischung innig vermischt und homogenisiert. Im vorletzten Gehäuseteil 18c wurde die Schmelze entgast.

Die aus der Düsenplatte austretenden Schmelzestränge wurden in einem Wasserbad abgekühlt und anschließend mittels eines Stranggranulators granuliert.

Die Prozessparameter des Extruders sind in Tabelle 4 unter Beispiel 15 aufgelistet. Die nach ISO 180/1A gemessene Kerbschlagzähigkeit bei unterschiedlichen Umgebungstemperaturen ist in den Diagrammen Fig. 11 für eine Spritzgussmassetemperatur von 260 °C und Fig. 12 für eine Spritzgussmassetemperatur von 300 °C dargestellt. Jeder Messpunkt in den Diagrammen stellt den Mittelwert aus 10 Messungen dar. Die bei den Messpunkten zusätzlich angegebenen Zahlenpaare bedeuten die Anzahl zäh gebrochener bzw. spröd gebrochener Probekörper. "10/0" bedeutet z.B. dass alle 10 geprüften Probekörper zäh gebrochen sind.

**Beispiel 16 (erfindungsgemäß)**

Es wurde ein elastomerhaltiges Polycarbonatblend mit einer Schmelze-Volumenfließrate (MVR) von 17 $cm^3$/10min (gemessen nach ISO 1133 bei 260 °C und 5 kg) nach Rezeptur 36 (siehe Tabelle 1) mit Versuchsanordnung 9 hergestellt. Als Rußkomponente wurde Ruß/Entformer-Masterbatch Granulat gemäß Tabelle 1 zugegeben, welches wie unter A.2 beschrieben hergestellt wurde.

Zur Herstellung des Compounds wurde zunächst aus den in Tabelle 1 gegebenen Komponenten b (Rußkomponente), g (Additive) und f6 in den genannten Anteilen ein Premix hergestellt. Die Premixherstellung und die Compoundierung der Formmasse erfolgten wie in Beispiel 15 beschrieben.

Die Prozessparameter des Extruders sind in Tabelle 4 unter Beispiel 16 aufgelistet. Die nach ISO 180/1A gemessene Kerbschlagzähigkeit bei unterschiedlichen Umgebungstemperaturen ist in den Diagrammen Fig. 11 für eine Spritzgussmassetemperatur von 260 °C und Fig. 12 für eine Spritzgussmassetemperatur von 300 °C dargestellt. Jeder Messpunkt in den Diagrammen stellt den Mittelwert aus 10 Messungen dar. Die bei den Messpunkten zusätzlich angegebenen Zahlenpaare bedeuten die Anzahl zäh gebrochener bzw. spröd gebrochener Probekörper. "10/0" bedeutet z.B. dass alle 10 geprüften Probekörper zäh gebrochen sind.

Beim Vergleich des erfindungsgemäßen Beispiels 16 mit dem Vergleichsbeispiel 15 zeigt sich, dass bei Verwendung des Ruß/Entformer-Masterbatchs die Kerbschlagzähigkeit deutlich höher ist und der Übergang von zähem zu sprödem Bruchverhalten bei niedrigeren Temperaturen stattfindet als bei Verwendung des Rußpulvers. Dies lässt auf eine bessere Dispergierung des Rußes bei Verwendung des Ruß/Entformer-Masterbatchs schließen, obwohl der spezifische mechanische Energieeintrag (SME) nahezu gleich geblieben ist.

**Beispiel 17 (Vergleich)**

Es wurde ein elastomerhaltiges Polycarbonatblend mit einer Schmelze-Volumenfließrate (MVR) von 27 $cm^3$/10min (gemessen nach ISO 1133 bei 260 °C und 5 kg) nach Rezeptur 17 (siehe Tabelle 1) mit Versuchsanordnung 7 hergestellt. Als Rußkomponente wurde B16 (Ruß/Polyethylen-Masterbatch Plasblak PE6130 (50% Ruß) der Fa. Cabot) gemäß Tabelle 1 zugegeben.

Zur Herstellung des Compounds wurde zunächst aus den in Tabelle 1 gegebenen Komponenten b (Rußkomponente), c (Entformer), g (Additive) und f3 in den genannten Anteilen ein Premix hergestellt. Die Premixherstellung und die Compoundierung der Formmasse erfolgten wie in Beispiel 1 beschrieben.

Die Prozessparameter des Extruders sowie die wie oben beschrieben gemessene Anzahl der Oberflächendefekte bezogen auf einen Quadratzentimeter sind in Tabelle 4 unter Beispiel 17 aufgelistet.

**Beispiel 18 (Vergleich)**

Es wurde ein elastomerhaltiges Polycarbonatblend mit einer Schmelze-Volumenfließrate (MVR) von 27 $cm^3$/10min (gemessen nach ISO 1133 bei 260 °C und 5 kg) nach Rezeptur 16 (siehe Tabelle 1) mit Versuchsanordnung 7 hergestellt. Als Rußkomponente wurde das Ruß/Polycarbonat-Masterbatch B15 (PC Black 91024 (15% Ruß) der Fa. Color Systems) gemäß Tabelle 1 zugegeben.

Zur Herstellung des Compounds wurde zunächst aus den in Tabelle 1 gegebenen Komponenten b (Rußkomponente), c (Entformer) und g (Additive) sowie a9 in den genannten Anteilen ein Premix hergestellt. Die Premixherstellung und die Compoundierung der Formmasse erfolgten wie in Beispiel 1 beschrieben.

Die Prozessparameter des Extruders sowie die wie oben beschrieben gemessene Anzahl der Oberflächendefekte bezogen auf einen Quadratzentimeter sind in Tabelle 4 unter Beispiel 18 aufgelistet.

**Beispiel 19 (erfindungsgemäß)**

Es wurde ein elastomerhaltiges Polycarbonatblend mit einer Schmelze-Volumenfließrate (MVR) von 27 $cm^3$/10min (gemessen nach ISO 1133 bei 260 °C und 5 kg) nach Rezeptur 4 (siehe Tabelle 1) mit Versuchsanordnung 7 hergestellt. Als Rußkomponente wurde Ruß/Entformer-Masterbatch Granulat gemäß Tabelle 1 zugegeben, welches wie unter A.2 beschrieben hergestellt wurde.

Zur Herstellung des Compounds wurde zunächst aus den in Tabelle 1 gegebenen Komponenten b (Rußkomponente), g (Additive) und f3 in den genannten Anteilen ein Premix hergestellt. Die Premixherstellung und die Compoundierung der Formmasse erfolgten wie in Beispiel 1 beschrieben.

Die Prozessparameter des Extruders sowie die wie oben beschrieben gemessene Anzahl der Oberflächendefekte bezogen auf einen Quadratzentimeter sind in Tabelle 4 unter Beispiel 19 aufgelistet.

Beim Vergleich des erfindungsgemäßen Beispiels 19 mit den Vergleichsbeispielen 17 und 18 zeigt sich, dass bei Verwendung des Ruß/Entformer-Masterbatchs die Anzahl Oberflächendefekte deutlich geringer ist als bei Verwendung von Masterbatches auf Basis Polyethylen (B16) bzw. Polycarbonat (B15). Beides lässt auf eine bessere Dispergierung des Rußes bei Verwendung des Ruß/Entformer-Masterbatchs schließen, obwohl der spezifische mechanische Energieeintrag (SME) nahezu gleich geblieben ist.

**Beispiel 20 (Vergleich)**

Es wurde ein elastomer- und polyesterhaltiges Polycarbonatblend mit einer Schmelze-Volumenfließrate (MVR) von 12 $cm^3$/10min (gemessen nach ISO 1133 bei 260 °C und 5 kg) nach Rezeptur 32 (siehe Tabelle 1) mit Versuchsanordnung 10 hergestellt. Als Rußkomponente wurde Rußpulver gemäß Tabelle 1 zugegeben.

Zur Herstellung des Compounds wurde zunächst aus den in Tabelle 1 gegebenen Komponenten b (Rußkomponente), c (Entformer) und g (Additive) sowie a8 in den genannten Anteilen ein Premix hergestellt. Die Mischung des Premix erfolgte in einem Containermischer der Fa. Mixaco (Typ CM1000 mit MB-Werkzeug) über 4,5 Minuten bei einer Drehzahl von 425 1/min und einem Mischerfüllgrad von 80%.

Anschließend wurden der Premix und die übrigen in Tabelle 1 aufgeführten Mischungsbestandteile getrennt voneinander mittels jeweils einer Differentialdosierwaage (nicht dargestellt) über den Einfülltrichter 8d in den Haupteinzug in das Gehäuse 9d des Extruders dosiert.

In der Plastifizierzone im Bereich der Gehäuse 12d, 23a und 13d wurden die schmelzbaren Mischungsbestandteile aufgeschmolzen und alle Mischungsbestandteile dispergiert. In der Mischzone im Bereich der Gehäuse 14d, 24a und 18d wurden die Mischungsbestandteile innig vermischt und die Schmelzemischung homogenisiert. Im vorletzten Gehäuseteil 18d wurde die Schmelzemischung entgast.

Die aus der Düsenplatte austretenden Schmelzestränge wurden in einem Wasserbad abgekühlt und anschließend mittels eines Stranggranulators granuliert.

Die Prozessparameter des Extruders sowie die wie oben beschrieben gemessene Anzahl der Oberflächendefekte bezogen auf einen Quadratzentimeter sind in Tabelle 4 unter Beispiel 20 aufgelistet.

**Beispiel 21 (Vergleich)**

Es wurde ein elastomer- und polyesterhaltiges Polycarbonatblend mit einer Schmelze-Volumenfließrate (MVR) von 12 $cm^3$/10min (gemessen nach ISO 1133 bei 260 °C und 5 kg) nach Rezeptur 33 (siehe Tabelle 1) mit Versuchsanordnung 10 hergestellt. Als Rußkomponente wurde das B16 (Ruß/Polyethylen-Masterbatch Plasblak PE6130 (50% Ruß) der Fa. Cabot) gemäß Tabelle 1 zugegeben.

Zur Herstellung des Compounds wurde zunächst aus den in Tabelle 1 gegebenen Komponenten b (Rußkomponente), c (Entformer) und g (Additive) sowie a8 in den genannten Anteilen ein Premix hergestellt. Die Premixherstellung und die Compoundierung der Formmasse erfolgten wie in Beispiel 20 beschrieben.

Die Prozessparameter des Extruders sowie die wie oben beschrieben gemessene Anzahl der Oberflächendefekte bezogen auf einen Quadratzentimeter sind in Tabelle 4 unter Beispiel 21 aufgelistet.

**Beispiel 22 (erfindungsgemäß)**

Es wurde ein elastomerhaltiges Polycarbonatblend mit einer Schmelze-Volumenfließrate (MVR) von 12 $cm^3$/10min (gemessen nach ISO 1133 bei 260 °C und 5 kg) nach Rezeptur 34 (siehe Tabelle 1) mit Versuchsanordnung 10 hergestellt. Als Rußkomponente wurde Ruß/Entformer-Masterbatch Granulat gemäß Tabelle 1 zugegeben, welches wie unter A.2 beschrieben hergestellt wurde.

Zur Herstellung des Compounds wurde zunächst aus den in Tabelle 1 gegebenen Komponenten b (Rußkomponente), c (Entformer) und g (Additive) sowie a8 in den genannten Anteilen ein Premix hergestellt. Die Premixherstellung und die Compoundierung der Formmasse erfolgten wie in Beispiel 20 beschrieben.

Die Prozessparameter des Extruders sowie die wie oben beschrieben gemessene Anzahl der Oberflächendefekte bezogen auf einen Quadratzentimeter sind in Tabelle 4 unter Beispiel 22 aufgelistet.

Beim Vergleich des erfindungsgemäßen Beispiels 22 mit den Vergleichsbeispielen 20 und 21 zeigt sich, dass auch für elastomer- und polyesterhaltige Polycarbonatblends bei Verwendung des Ruß/Entformer-Masterbatchs die Anzahl Oberflächendefekte deutlich geringer ist als bei Verwendung von Rußpulver und einem Ruß/Polyethylen-Masterbatch nach dem Stand der Technik. Beides lässt auf eine bessere Dispergierung des Rußes bei Verwendung des Ruß/Entformer-Masterbatchs schließen, obwohl der spezifische mechanische Energieeintrag (SME) nahezu gleich geblieben ist.

Gleichzeitig zeigt sich, dass auch bei einem Extruder mit größerem Schneckenaußendurchmesser (133 mm) die Anzahl Oberflächendefekte bei Verwendung des Ruß/Entformer-Masterbatchs deutlich geringer ist als bei Verwendung von Rußpulver oder Ruß-Masterbatch nach dem Stand der Technik.

**Beispiel 23 (Vergleich)**

Es wurde ein Polycarbonatcompound mit einer Schmelze-Volumenfließrate (MVR) von 19 $cm^3$/10min (gemessen nach ISO 1133 bei 300 °C und 1,2 kg) nach Rezeptur 26 (siehe Tabelle 1) mit Versuchsanordnung 11 hergestellt.

Als Rußkomponente wurde Rußpulver gemäß Tabelle 1 zugegeben.

Zur Herstellung des Compounds wurde zunächst aus den in Tabelle 1 gegebenen Komponenten b (Rußkomponente), c (Entformer) und g (Additive) sowie a8 in den genannten Anteilen ein Premix hergestellt. Die Mischung des Premix erfolgte in einem Containermischer der Fa. Mixaco (Typ CM1000 mit MB-Werkzeug). Zunächst wurden die Komponenten b, g und a8 in den Mischbehälter gefüllt und über 2 Minuten bei einer Drehzahl von 250 1/min und einem Mischerfüllgrad von 80% gemischt. Danach wurde Komponente c zu den vorgemischten Komponenten in den Mischbehälter gefüllt und über 1,5 Minuten bei einer Drehzahl von 350 1/min gemischt.

Anschließend wurden der Premix und die übrigen in Tabelle 1 aufgeführten Mischungsbestandteile getrennt voneinander mittels jeweils einer Differentialdosierwaage (nicht dargestellt) über den Einfülltrichter 8e in den Haupteinzug in das Gehäuse 9e des Extruders dosiert.

In der Plastifizierzone und der Mischzone im Bereich der Gehäuse 13e und 14e wurden die schmelzbaren Mischungsbestandteile aufgeschmolzen und alle Mischungsbestandteile dispergiert. Im Gehäuse 18e wurde die Schmelze entgast. Im Gehäuse 21a wurde über eine Einspritzdüse 22a das flüssige g1 (Flammschutzmittel) in die Schmelze gespritzt und in der anschließenden Mischzone im Bereich der Gehäuse 21a, 26 und 19e innig mit der Schmelze vermischt und die Schmelzemischung homogenisiert.

Die aus der Düsenplatte austretenden Schmelzestränge wurden in einem Wasserbad abgekühlt und anschließend mittels eines Stranggranulators granuliert.

Die Prozessparameter des Extruders sowie die wie oben beschrieben gemessene Anzahl der Oberflächendefekte bezogen auf einen Quadratzentimeter sind in Tabelle 4 unter Beispiel 23 aufgelistet.

**Beispiel 24 (erfindungsgemäß)**

Es wurde ein Polycarbonatcompound mit einer Schmelze-Volumenfließrate (MVR) von 19 $cm^3$/10min (gemessen nach ISO 1133 bei 300 °C und 1,2 kg) nach Rezeptur 27 (siehe Tabelle 1) mit Versuchsanordnung 11 hergestellt. Als Rußkomponente wurde Ruß/Entformer-Masterbatch Granulat gemäß Tabelle 1 zugegeben, welches wie unter A.2 beschrieben hergestellt wurde.

Zur Herstellung des Compounds wurde zunächst aus den in Tabelle 1 gegebenen Komponenten b (Rußkomponente), c (Entformer) sowie a8 in den genannten Anteilen ein Premix hergestellt. Die Mischung des Premix erfolgte in einem Containermischer der Fa. Mixaco (Typ CM1000 mit MB-Werkzeug). Zunächst wurden die Komponenten b, g und a8 in den Mischbehälter gefüllt und über 2 Minuten bei einer Drehzahl von 250 1/min und einem Mischerfüllgrad von 80% gemischt. Danach wurde Komponente c zu den vorgemischten Komponenten in den Mischbehälter gefüllt und über 1,5 Minuten bei einer Drehzahl von 350 1/min gemischt.

Die Compoundierung der Formmasse erfolgte wie in Beispiel 23 beschrieben.

Die Prozessparameter des Extruders sowie die wie oben beschrieben gemessene Anzahl der Oberflächendefekte bezogen auf einen Quadratzentimeter sind in Tabelle 4 unter Beispiel 24 aufgelistet.

Beim Vergleich des erfindungsgemäßen Beispiels 24 mit dem Vergleichsbeispiel 23 zeigt sich, dass bei Verwendung des Ruß/Entformer-Masterbatchs die Anzahl Oberflächendefekte deutlich geringer ist als bei Verwendung des Rußpulvers. Beides lässt auf eine bessere Dispergierung des Rußes bei Verwendung des Ruß/Entformer-Masterbatchs schließen, obwohl der spezifische mechanische Energieeintrag (SME) bei Beispiel 23 höher war als bei Beispiel 24.

Gleichzeitig zeigt sich, dass auch für ein Polycarbonatcompound bei einem Extruder mit größerem Schneckenaußendurchmesser (92 mm) die Anzahl Oberflächendefekte bei Verwendung des Ruß/Entformer-Masterbatchs deutlich geringer ist als bei Verwendung von Rußpulver.

**Beispiel 25 (erfindungsgemäß)**

Es wurde ein elastomerhaltiges Polycarbonatblend mit einer Schmelze-Volumenfließrate (MVR) von 27 $cm^3$/10min (gemessen nach ISO 1133 bei 260 °C und 5 kg) nach Rezeptur 10 (siehe Tabelle 1) mit Versuchsanordnung 7 hergestellt. Als Rußkomponente wurde Ruß/Entformer-Masterbatch Granulat enthaltend 40 Gew.-% Ruß gemäß Tabelle 1 zugegeben, welches wie unter A.2 beschrieben hergestellt wurde.

Zur Herstellung des Compounds wurde zunächst aus den in Tabelle 1 gegebenen Komponenten b (Rußkomponente), g (Additive) und f3 in den genannten Anteilen ein Premix hergestellt. Die Premixherstellung und die Compoundierung der Formmasse erfolgten wie in Beispiel 1 beschrieben.

Die Prozessparameter des Extruders sowie die wie oben beschrieben gemessene Anzahl der Oberflächendefekte bezogen auf einen Quadratzentimeter sind in Tabelle 4 unter Beispiel 25 aufgelistet.

**Beispiel 26 (erfindungsgemäß)**

Es wurde ein elastomerhaltiges Polycarbonatblend mit einer Schmelze-Volumenfließrate (MVR) von 27

$cm^3$/10min (gemessen nach ISO 1133 bei 260 °C und 5 kg) nach Rezeptur 12 (siehe Tabelle 1) mit Versuchsanordnung 7 hergestellt. Als Rußkomponente wurde Ruß/Entformer-Masterbatch Granulat enthaltend 45 Gew.-% Ruß gemäß Tabelle 1 zugegeben, welches wie unter A.2 beschrieben hergestellt wurde.

Die Vorgehensweise bei der Herstellung des Polycarbonatblends entsprach der von Beispiel 25.

Die Prozessparameter des Extruders sowie die wie oben beschrieben gemessene Anzahl der Oberflächendefekte bezogen auf einen Quadratzentimeter sind in Tabelle 4 unter Beispiel 26 aufgelistet.

**Beispiel 27**

Es wurde ein elastomerhaltiges Polycarbonatblend mit einer Schmelze-Volumenfließrate (MVR) von 27 $cm^3$/10min (gemessen nach ISO 1133 bei 260 °C und 5 kg) nach Rezeptur 9 (siehe Tabelle 1) mit Versuchsanordnung 7 hergestellt. Als Rußkomponente wurde Ruß/Entformer-Masterbatch Granulat enthaltend 50 Gew.-% Ruß gemäß Tabelle 1 zugegeben, welches wie unter A.2 beschrieben hergestellt wurde.

Die Vorgehensweise bei der Herstellung des Polycarbonatblends entsprach der von Beispiel 25.

Die Prozessparameter des Extruders sowie die wie oben beschrieben gemessene Anzahl der Oberflächendefekte bezogen auf einen Quadratzentimeter sind in Tabelle 4 unter Beispiel 27 aufgelistet.

**Beispiel 28 (erfindungsgemäß)**

Es wurde ein elastomerhaltiges Polycarbonatblend mit einer Schmelze-Volumenfließrate (MVR) von 27 $cm^3$/10min (gemessen nach ISO 1133 bei 260 °C und 5 kg) nach Rezeptur 6 (siehe Tabelle 1) mit Versuchsanordnung 7 hergestellt. Als Rußkomponente wurde Ruß/Entformer-Masterbatch Granulat enthaltend 58 Gew.-% Ruß gemäß Tabelle 1 zugegeben, welches wie unter A.2 beschrieben hergestellt wurde.

Die Vorgehensweise bei der Herstellung des Polycarbonatblends entsprach der von Beispiel 25.

Die Prozessparameter des Extruders sowie die wie oben beschrieben gemessene Anzahl der Oberflächendefekte bezogen auf einen Quadratzentimeter sind in Tabelle 4 unter Beispiel 28 aufgelistet.

**Beispiel 29 (erfindungsgemäß)**

Es wurde ein elastomerhaltiges Polycarbonatblend mit einer Schmelze-Volumenfließrate (MVR) von 27 $cm^3$/10min (gemessen nach ISO 1133 bei 260 °C und 5 kg) nach Rezeptur 11 (siehe Tabelle 1) mit Versuchsanordnung 7 hergestellt. Als Rußkomponente wurde Ruß/Entformer-Masterbatch Granulat enthaltend 60 Gew.-% Ruß gemäß Tabelle 1 zugegeben, welches wie unter A.2 beschrieben hergestellt wurde.

Die Vorgehensweise bei der Herstellung des Polycarbonatblends entsprach der von Beispiel 25.

Die Prozessparameter des Extruders sowie die wie oben beschrieben gemessene Anzahl der Oberflächendefekte bezogen auf einen Quadratzentimeter sind in Tabelle 4 unter Beispiel 29 aufgelistet.

**Beispiel 30 (erfindungsgemäß)**

Es wurde ein elastomerhaltiges Polycarbonatblend mit einer Schmelze-Volumenfließrate (MVR) von 27 $cm^3$/10min (gemessen nach ISO 1133 bei 260 °C und 5 kg) nach Rezeptur 8 (siehe Tabelle 1) mit Versuchsanordnung 7 hergestellt. Als Rußkomponente wurde Ruß/Entformer-Masterbatch Granulat enthaltend 65 Gew.-% Ruß gemäß Tabelle 1 zugegeben, welches wie unter A.2 beschrieben hergestellt wurde.

Die Vorgehensweise bei der Herstellung des Polycarbonatblends entsprach der von Beispiel 25.

Die Prozessparameter des Extruders sowie die wie oben beschrieben gemessene Anzahl der Oberflächendefekte bezogen auf einen Quadratzentimeter sind in Tabelle 4 unter Beispiel 30 aufgelistet.

Beim Vergleich der erfindungsgemäßen Beispiele 25 bis 30 mit dem Vergleichsbeispiel 1 zeigt sich, dass auch bei Verwendung von Ruß/Entformer-Masterbatches mit zwischen 40 Gew.-% und 65 Gew.-% variierenden Rußgehalten die Anzahl Oberflächendefekte deutlich geringer ist als bei Verwendung von Rußpulver. Bei 65 Gew.-% Rußgehalt im Masterbatch (Beispiel 30) ist die Anzahl Oberflächendefekte allerdings höher als bei 40 Gew.-% bis 60 Gew.-%, so dass 65 Gew.-% die obere Rußkonzentration für eine gute Dispergierung darstellt.

Bei Versuchen mit Rußkonzentrationen kleiner 40 Gew.-% konnte kein Strang ausgebildet werden, da die Ruß-Entformer-Masse zu niederviskos und klebrig war. Daher stellte in den Versuchen eine Rußkonzentration von 40 Gew.-% die untere Rußkonzentration dar, die noch ohne Probleme verarbeitet werden konnte.

**Beispiel 31 (erfindungsgemäß)**

Es wurde ein elastomerhaltiges Polycarbonatblend mit einer Schmelze-Volumenfließrate (MVR) von 27

$cm^3$/10min (gemessen nach ISO 1133 bei 260 °C und 5 kg) nach Rezeptur 7 (siehe Tabelle 1) mit Versuchsanordnung 7 hergestellt. Als Rußkomponente wurde Ruß/Entformer-Masterbatch Granulat gemäß Tabelle 1 zugegeben, welches wie unter A.2 beschrieben hergestellt wurde.

Zur Herstellung des Compounds wurde zunächst aus den in Tabelle 1 gegebenen Komponenten b (Rußkomponente), g (Additive) und f3 in den genannten Anteilen ein Premix hergestellt. Die Premixherstellung und die Compoundierung der Formmasse erfolgten wie in Beispiel 1 beschrieben.

Die Prozessparameter des Extruders sowie die wie oben beschrieben gemessene Anzahl der Oberflächendefekte bezogen auf einen Quadratzentimeter sind in Tabelle 4 unter Beispiel 31 aufgelistet.

Beim Vergleich der erfindungsgemäßen Beispiele 2, 27 und 31 mit dem Vergleichsbeispiel 1 zeigt sich, dass bei Verwendung von Ruß/Entformer-Masterbatches, welche entweder mit einem Ko-Kneter oder mit einem Doppelschneckenextruder oder mit Scherwalzen hergestellt wurden, die Anzahl Oberflächendefekte deutlich geringer ist als bei Verwendung von Rußpulver.

**Beispiel 32 (erfindungsgemäß)**

Es wurde ein elastomerhaltiges Polycarbonatblend mit einer Schmelze-Volumenfließrate (MVR) von 27 $cm^3$/10min (gemessen nach ISO 1133 bei 260 °C und 5 kg) nach Rezeptur 13 (siehe Tabelle 1) mit Versuchsanordnung 7 hergestellt. Zur Herstellung des Compounds wurde zunächst aus den in Tabelle 1 gegebenen Komponenten b (Rußkomponente), g (Additive) und f3 in den genannten Anteilen ein Premix hergestellt. Die Premixherstellung und die Compoundierung der Formmasse erfolgten wie in Beispiel 1 beschrieben.

Die Prozessparameter des Extruders sowie die wie oben beschrieben gemessene Anzahl der Oberflächendefekte bezogen auf einen Quadratzentimeter sind in Tabelle 4 unter Beispiel 32 aufgelistet.

**Beispiel 33 (erfindungsgemäß)**

Es wurde ein elastomerhaltiges Polycarbonatblend mit einer Schmelze-Volumenfließrate (MVR) von 27 $cm^3$/10min (gemessen nach ISO 1133 bei 260 °C und 5 kg) nach Rezeptur 14 (siehe Tabelle 1) mit Versuchsanordnung 7 hergestellt. Die Vorgehensweise bei der Herstellung des Polycarbonatblends entsprach der von Beispiel 32.

Die Prozessparameter des Extruders sowie die wie oben beschrieben gemessene Anzahl der Oberflächendefekte bezogen auf einen Quadratzentimeter sind in Tabelle 4 unter Beispiel 33 aufgelistet.

**Beispiel 34 (erfindungsgemäß)**

Es wurde ein elastomerhaltiges Polycarbonatblend mit einer Schmelze-Volumenfließrate (MVR) von 27 $cm^3$/10min (gemessen nach ISO 1133 bei 260 °C und 5 kg) nach Rezeptur 15 (siehe Tabelle 1) mit Versuchsanordnung 7 hergestellt. Die Vorgehensweise bei der Herstellung des Polycarbonatblends entsprach der von Beispiel 32.

Die Prozessparameter des Extruders sowie die wie oben beschrieben gemessene Anzahl der Oberflächendefekte bezogen auf einen Quadratzentimeter sind in Tabelle 4 unter Beispiel 34 aufgelistet.

Beim Vergleich der erfindungsgemäßen Beispiele 27, 32, 33 und 34 mit dem Vergleichsbeispiel 1 zeigt sich, dass sowohl mit c1 oder c3 oder c4 im Ruß/Entformer-Masterbatch bei Verwendung des so hergestellten Ruß/Entformer-Masterbatchs die Anzahl Oberflächendefekte deutlich niedriger ist als mit Rußpulver. Mit c2 im Ruß/Entformer-Masterbatch ist die Anzahl Oberflächendefekte bei Verwendung des so hergestellten Ruß/Entformer-Masterbatchs zwar höher als mit cl, c3 oder c4 aber immer noch deutlich niedriger als mit Rußpulver.

**Beispiel 35 (erfindungsgemäß)**

Es wurde ein elastomerhaltiges Polycarbonatblend mit einer Schmelze-Volumenfließrate (MVR) von 27 $cm^3$/10min (gemessen nach ISO 1133 bei 260 °C und 5 kg) nach Rezeptur 5 (siehe Tabelle 1) mit Versuchsanordnung 7 hergestellt. Zur Herstellung des Compounds wurde zunächst aus den in Tabelle 1 gegebenen Komponenten b (Rußkomponente), g (Additive) und f3 in den genannten Anteilen ein Premix hergestellt. Die Premixherstellung und die Compoundierung der Formmasse erfolgten wie in Beispiel 1 beschrieben.

Die Prozessparameter des Extruders sowie die wie oben beschrieben gemessene Anzahl der Oberflächendefekte bezogen auf einen Quadratzentimeter und die gemessene Kerbschlagzähigkeit nach ISO 180/1A sind in Tabelle 4 unter Beispiel 35 aufgelistet.

Beim Vergleich der erfindungsgemäßen Beispiele 2 und 35 mit dem Vergleichsbeispiel 1 zeigt sich, dass sowohl mit b2 als auch mit bl als Ruß im Ruß/Entformer-Masterbatch bei Verwendung des so hergestellten Ruß/Entformer-Masterbatchs die Anzahl Oberflächendefekte deutlich niedriger ist und die Kerbschlagzähigkeit bei 23 °C und bei 0 °C deutlich höher ist als mit Rußpulver.

**Beispiel 36 (erfindungsgemäß)**

Es wurde ein elastomerhaltiges Polycarbonatblend mit einer Schmelze-Volumenfließrate (MVR) von 27 $cm^3$/10min (gemessen nach ISO 1133 bei 260 °C und 5 kg) nach Rezeptur 3 (siehe Tabelle 1) mit Versuchsanordnung 7 hergestellt. Als Rußkomponente wurde Ruß/Entformer-Masterbatch Granulat gemäß Tabelle 1 zugegeben, welches wie unter A.2 beschrieben hergestellt wurde.

Zur Herstellung des Compounds wurde zunächst aus den in Tabelle 1 gegebenen Komponenten b (Rußkomponente), g (Additive) und f3 in den genannten Anteilen ein Premix hergestellt. Die Premixherstellung und die Compoundierung der Formmasse erfolgten wie in Beispiel 1 beschrieben.

Die Prozessparameter des Extruders sowie die wie oben beschrieben gemessene Anzahl der Oberflächendefekte bezogen auf einen Quadratzentimeter und die gemessene Kerbschlagzähigkeit nach ISO 180/1A sind in Tabelle 4 unter Beispiel 36 aufgelistet.

**Beispiel 37 (erfindungsgemäß)**

Es wurde ein elastomerhaltiges Polycarbonatblend mit einer Schmelze-Volumenfließrate (MVR) von 27 $cm^3$/10min (gemessen nach ISO 1133 bei 260 °C und 5 kg) nach Rezeptur 2 (siehe Tabelle 1) mit Versuchsanordnung 7 hergestellt. Als Rußkomponente wurde Ruß/Entformer-Masterbatch Granulat gemäß Tabelle 1 zugegeben, welches wie unter A.2 beschrieben hergestellt wurde.

Zur Herstellung des Compounds wurde zunächst aus den in Tabelle 1 gegebenen Komponenten b (Rußkomponente), G (Additive) und f3 in den genannten Anteilen ein Premix hergestellt. Die Premixherstellung und die Compoundierung der Formmasse erfolgten wie in Beispiel 1 beschrieben.

Die Prozessparameter des Extruders sowie die wie oben beschrieben gemessene Anzahl der Oberflächendefekte bezogen auf einen Quadratzentimeter und die gemessene Kerbschlagzähigkeit nach ISO 180/1A sind in Tabelle 4 unter Beispiel 37 aufgelistet.

Beim Vergleich der erfindungsgemäßen Beispiele 2, 36 und 37 mit dem Vergleichsbeispiel 1 zeigt sich, dass bei Verwendung der mit unterschiedlichen Prozessparametern und Versuchsanordnungen auf einem Ko-Kneter hergestellten Ruß/Entformer-Masterbatchs die Anzahl Oberflächendefekte deutlich geringer und die Kerbschlagzähigkeit bei 23°C und bei 0°C deutlich höher ist als bei Verwendung des Rußpulvers.

Tabelle 1 (alle Angaben in Gew.-%)

| | 1 | 2 | 3 | 4 | 5 | 6 | 7 | 8 |
|---|---|---|---|---|---|---|---|---|
| alle Angaben in Gew.-% | Vergleich | erfindungs gemäß | erfindungs gemäß | erfindungs gemäß | erfindungs gemäß | erfindungs gemäß | erfindungs gemäß | erfindungs gemäß |
| a | | | | | | | | |
| a1 | 14,14 | | | | | | | |
| a2 | 42,1 | 73,3 | 73,3 | 73,3 | 73,3 | 73,34 | 73,3 | 73,3 |
| a3 | | | | | | | | |
| a4 | | | | | | | | |
| a5 | | | | | | | | |
| a6 | | | | | | | | |
| a7 | | | | | | | | |
| a8 | | | | | | | | |
| a9 | 16,9 | | | | | | | |
| B | | | | | | | | |
| B1 | | 1,49 | | | | | | |
| B2 | | | 1,49 | | | | | |
| B3 | | | | 1,49 | | | | |
| B4 | | | | | 1,49 | | | |
| B5 | | | | | | 1,29 | | |
| B6 | | | | | | | 1,49 | |
| B7 | | | | | | | | 1,15 |
| B8 | | | | | | | | |
| B9 | | | | | | | | |
| B10 | | | | | | | | |
| B11 | | | | | | | | |
| B12 | | | | | | | | |
| B13 | | | | | | | | |
| B14 | | | | | | | | |
| B15 | | | | | | | | |
| B16 | | | | | | | | |
| b1 | 0,75 | | | | | | | |
| b3 | | | | | | | | |
| b4 | | | | | | | | |
| c | | | | | | | | |
| c1 | 0,73 | | | | | 0,16 | | 0,34 |
| d | | | | | | | | |
| d1 | | | | | | | | |
| d2 | | | | | | | | |
| f | | | | | | | | |
| f1 | | | | | | | | |
| f2 | | | | | | | | |
| f3 | 6,89 | 6,8 | 6,8 | 6,8 | 6,8 | 6,8 | 6,8 | 6,8 |
| f4 | | | | | | | | |
| f5 | | | | | | | | |
| f6 | | | | | | | | |
| f7 | 17,6 | 17,52 | 17,52 | 17,52 | 17,52 | 17,52 | 17,52 | 17,52 |
| g | | | | | | | | |
| g1 | | | | | | | | |
| g2 | | | | | | | | |
| g3 | 0,89 | 0,89 | 0,89 | 0,89 | 0,89 | 0,89 | 0,89 | 0,89 |
| g4 | | | | | | | | |
| g5 | | | | | | | | |

Fortsetzung Tabelle 1 (Alle Angaben in Gew.-%)

| | 9 | 10 | 11 | 12 | 13 | 14 | 15 | 16 | 17 |
|---|---|---|---|---|---|---|---|---|---|
| alle Angaben in Gew.-% | erfindungsgemäß | erfindungsgemäß | erfindungsgemäß | erfindungsgemäß | erfindungsgemäß | erfindungsgemäß | erfindungsgemäß | Vergleich | Vergleich |
| a | | | | | | | | | |
| a1 | | | | | | | | | |
| a2 | 73,3 | 73,21 | 73,34 | 73,44 | 73,21 | 73,21 | 73,21 | 62,58 | 73,3 |
| a3 | | | | | | | | | |
| a4 | | | | | | | | | |
| a5 | | | | | | | | | |
| a6 | | | | | | | | | |
| a7 | | | | | | | | | |
| a8 | | | | | | | | | |
| a9 | | | | | | | | 4,92 | |
| B | | | | | | | | | |
| B1 | | | | | | | | | |
| B2 | | | | | | | | | |
| B3 | | | | | | | | | |
| B4 | | | | | | | | | |
| B5 | | | | | | | | | |
| B6 | | | | | | | | | |
| B7 | | | | | | | | | |
| B8 | 1,49 | | | | | | | | |
| B9 | | 1,9 | | | | | | | |
| B10 | | | 1,25 | | | | | | |
| B11 | | | | 1,67 | | | | | |
| B12 | | | | | 1,9 | | | | |
| B13 | | | | | | 1,9 | | | |
| B14 | | | | | | | 1,9 | | |
| B15 | | | | | | | | 6,53 | |
| B16 | | | | | | | | | 1,94 |
| b1 | | | | | | | | | |
| b3 | | | | | | | | | |
| b4 | | | | | | | | | |
| c | | | | | | | | | |
| c1 | | | 0,2 | | | | | 0,73 | 0,72 |
| d | | | | | | | | | |
| d1 | | | | | | | | | |
| d2 | | | | | | | | | |
| f | | | | | | | | | |
| f1 | | | | | | | | | |
| f2 | | | | | | | | | |
| f3 | 6,8 | 6,8 | 6,8 | 6,8 | 6,8 | 6,8 | 6,8 | 6,82 | 6,15 |
| f4 | | | | | | | | | |
| f5 | | | | | | | | | |
| f6 | | | | | | | | | |
| f7 | 17,52 | 17,2 | 17,52 | 17,2 | 17,2 | 17,2 | 17,2 | 17,54 | 17 |
| g | | | | | | | | | |
| g1 | | | | | | | | | |
| g2 | | | | | | | | | |
| g3 | 0,89 | 0,89 | 0,89 | 0,89 | 0,89 | 0,89 | 0,89 | 0,88 | 0,89 |
| g4 | | | | | | | | | |
| g5 | | | | | | | | | |

Fortsetzung Tabelle 1 (Alle Angaben in Gew.-%)

| | 18 | 19 | 20 | 21 | 22 | 23 | 24 | 25 |
|---|---|---|---|---|---|---|---|---|
| alle Angaben in Gew.-% | Vergleich | erfindungs gemäß | Vergleich | erfindungs gemäß | Vergleich | erfindungs gemäß | Vergleich | erfindungs gemäß |
| a | | | | | | | | |
| a1 | | | 22 | 21,9 | | | | |
| a2 | | | 42,2 | 42,2 | | | | |
| a3 | 59,89 | 59,89 | | | | | | |
| a4 | | | | | 95 | 95 | | |
| a5 | | | | | | | 95 | 95 |
| a6 | | | | | | | | |
| a7 | | | | | | | | |
| a8 | | | | | | | | |
| a9 | | | | | 4,44 | 4,44 | 4,44 | 4,44 |
| B | | | | | | | | |
| B1 | | | | | | | | |
| B2 | | | | | | | | |
| B3 | | 1,5 | | 1 | | 0,32 | | |
| B4 | | | | | | | | |
| B5 | | | | | | | | 0,28 |
| B6 | | | | | | | | |
| B7 | | | | | | | | |
| B8 | | | | | | | | |
| B9 | | | | | | | | |
| B10 | | | | | | | | |
| B11 | | | | | | | | |
| B12 | | | | | | | | |
| B13 | | | | | | | | |
| B14 | | | | | | | | |
| B15 | | | | | | | | |
| B16 | | | | | | | | |
| b1 | 0,75 | | 0,5 | | 0,16 | | 0,16 | |
| b3 | | | | | | | | |
| b4 | | | | | | | | |
| c | | | | | | | | |
| c1 | 0,75 | | 0,4 | | 0,4 | 0,24 | 0,4 | 0,28 |
| d | | | | | | | | |
| d1 | | | | | | | | |
| d2 | | | | | | | | |
| f | | | | | | | | |
| f1 | 17,1 | 17,1 | | | | | | |
| f2 | 8,84 | 8,84 | 15,8 | 15,8 | | | | |
| f3 | | | | | | | | |
| f4 | 2,95 | 2,95 | 3 | 3 | | | | |
| f5 | | | | | | | | |
| f6 | | | | | | | | |
| f7 | 9,4 | 9,4 | | | | | | |
| g | | | | | | | | |
| g1 | | | 14,9 | 14,9 | | | | |
| g2 | | | 0,8 | 0,8 | | | | |
| g3 | 0,32 | 0,32 | 0,4 | 0,4 | 0 | 0 | 0 | 0 |
| g4 | | | | | | | | |
| g5 | | | | | | | | |

Fortsetzung Tabelle 1 (Alle Angaben in Gew.-%)

| | 26 | 27 | 28 | 29 | 30 | 31 |
|---|---|---|---|---|---|---|
| alle Angaben in Gew.-% | Vergleich | erfindungsgemäß | Vergleich | erfindungsgemäß | Vergleich | erfindungsgemäß |
| a | | | | | | |
| a1 | | 36 | | | | |
| a2 | 95,6 | | | | | |
| a3 | | 62,4 | | | | |
| a4 | | | | | | |
| a5 | | | | | | |
| a6 | | | 95 | 95 | | |
| a7 | | | | | 95 | 95 |
| a8 | 3,82 | 1,04 | | | | |
| a9 | | | 4,54 | 4,54 | 4,84 | 4,72 |
| B | | | | | | |
| B1 | | | | | | |
| B2 | | | | | | |
| B3 | | | | | | |
| B4 | | | | | | |
| B5 | | 0,28 | | 0,28 | | 0,28 |
| B6 | | | | | | |
| B7 | | | | | | |
| B8 | | | | | | |
| B9 | | | | | | |
| B10 | | | | | | |
| B11 | | | | | | |
| B12 | | | | | | |
| B13 | | | | | | |
| B14 | | | | | | |
| B15 | | | | | | |
| B16 | | | | | | |
| b1 | 0,16 | | 0,16 | | 0,16 | |
| b3 | | | | | | |
| b4 | | | | | | |
| c | | | | | | |
| c1 | 0,4 | 0,28 | 0,3 | 0,18 | | |
| d | | | | | | |
| d1 | | | | | | |
| d2 | | | | | | |
| f | | | | | | |
| f1 | | | | | | |
| f2 | | | | | | |
| f3 | | | | | | |
| f4 | | | | | | |
| f5 | | | | | | |
| f6 | | | | | | |
| f7 | | | | | | |
| g | | | | | | |
| g1 | | | | | | |
| g2 | | | | | | |
| g3 | 0,02 | 0 | 0 | 0 | 0 | 0 |
| g4 | | | | | | |
| g5 | | | | | | |

Fortsetzung Tabelle 1 (Alle Angaben in Gew.-%)

| | 32 | 33 | 34 | 35 | 36 |
|---|---|---|---|---|---|
| alle Angaben in Gew.-% | Vergleich | Vergleich | erfindungsgemäß | Vergleich | erfindungsgemäß |
| a | | | | | |
| a1 | | | | | |
| a2 | 48,61 | 48,76 | 48,47 | | |
| a3 | | | | 74,19 | 75,11 |
| a4 | | | | | |
| a5 | | | | | |
| a6 | | | | | |
| a7 | | | | | |
| a8 | 1,04 | 0,94 | 1,03 | | |
| a9 | | | | | |
| B | | | | | |
| B1 | | | | | |
| B2 | | | | | |
| B3 | | | | | 1,8 |
| B4 | | | | | |
| B5 | | | 0,51 | | |
| B6 | | | | | |
| B7 | | | | | |
| B8 | | | | | |
| B9 | | | | | |
| B10 | | | | | |
| B11 | | | | | |
| B12 | | | | | |
| B13 | | | | | |
| B14 | | | | | |
| B15 | | | | | |
| B16 | | 0,59 | | | |
| b1 | 0,3 | | | 0,9 | |
| b3 | | | | 0,25 | 0,25 |
| b4 | | | | 0,057 | 0,057 |
| c | | | | | |
| c1 | 0,4 | 0,2 | 0,18 | 0,73 | |
| d | | | | | |
| d1 | 31,84 | 31,75 | 31,75 | | |
| d2 | 0,561 | 0,5525 | 0,765 | | |
| f | | | | | |
| f1 | | | | | |
| f2 | | | | | |
| f3 | | | | | |
| f4 | | | | | |
| f5 | 14,95 | 14,91 | 14,95 | | |
| f6 | | | | 8,77 | 8,75 |
| f7 | | | | 13,21 | 13,14 |
| g | | | | | |
| g1 | | | | | |
| g2 | | | | | |
| g3 | 0,299 | 0,2975 | 0,347 | 0,89 | 0,89 |
| g4 | 2 | 2 | 2 | | |
| g5 | | | | 1 | |

Tabelle 2:

| Ruß/Ent former-Master batch Nr. | Versuchsanord-nung | Rezeptur | Ruß Do-sierstelle | Durchsatz | Drehzahl | Leistung | SME | Beheizungstemperaturen | | | | |
|---|---|---|---|---|---|---|---|---|---|---|---|---|
| | | | | | | | | 1. Gehäuse-hälfte KoKneter | 2. Gehäuse-hälfte KoKneter | Gehäuse Ein-wellenextruder | Düsenkopf | KoKneter-Welle |
| | | | | kg/h | min-1 | kW | kWh/kg | °C | °C | °C | °C | °C |
| B1 | 1 | 50% b1<br>50% c1 | Einfülltrich-ter 1 | 9 | 190 | 3,4 | 0,378 | 30 | 30 | 40 | 95 | 30 |
| B2 | 2 | 50% b1<br>50% c1 | Einfülltrich-ter 1 | 12 | 190 | 3,3 | 0,275 | 90 | 60 | 35 | 130 | 35 |
| B3 | 3 | 50% b1<br>50% c1 | Einfülltrich-ter 1: 32%<br>Einfülltrich-ter 7: 18% | 20 | 250 | 3,8 | 0,190 | 60 | 35 | 75 | 110 | 35 |
| B4 | 3 | 50% b2<br>50% c1 | Einfülltrich-ter 1: 20%<br>Einfülltrich-ter 7: 30% | 12 | 250 | 2,3 | 0,192 | 60 | 35 | 75 | 110 | 35 |

Tabelle 3

| Ruß/Ent-former-Masterbatch Nr. | Versuchs-anordnung | Rezeptur | Ruß Dosierstelle | Durchsatz | Drehzahl | Spez. Leistung | Beheizungstemperaturen der Gehäuseteile: | | | | | | | | | | | |
|---|---|---|---|---|---|---|---|---|---|---|---|---|---|---|---|---|---|---|
| | | | | | | | 9 | 10 | 11 | 12 | 13 | 14 | 15 | 16 | 17 | 18 | 19 | Düse (nicht dargestellt) |
| | | | | kg/h | $min^{-1}$ | kWh/kg | °C | °C | °C | °C | °C | °C | °C | °C | °C | °C | °C | °C |
| B8 | 4 | 50% b1<br>50% c1 | Einfülltrichter 8: 25%<br>Gehäuseteil 15: 25% | 25 | 200 | 0,084 | 30 | 60 | 65 | 65 | 65 | 65 | 70 | 50 | 50 | 50 | 35 | 110 |
| B9 | 4 | 40% b1<br>60% c1 | Einfülltrichter 8: 10%<br>Gehäuseteil 15: 30% | 25 | 300 | 0,0096 | 30 | 60 | 65 | 65 | 65 | 65 | 70 | 50 | 50 | 50 | 35 | 110 |
| B10 | 4 | 60% b1<br>40% c1 | Einfülltrichter 8: 15%<br>Gehäuseteil 15: 45% | 25 | 200 | 0,248 | 30 | 60 | 65 | 65 | 65 | 65 | 70 | 50 | 50 | 50 | 35 | 130 |
| B11 | 4 | 45% b1<br>55% c1 | Einfülltrichter 8: 10%<br>Gehäuseteil 15: 35% | 25 | 300 | 0,037 | 30 | 60 | 65 | 65 | 65 | 65 | 70 | 50 | 50 | 50 | 35 | 110 |
| B12 | 4 | 40% b1<br>60% c3 | Einfülltrichter 8: 20%<br>Gehäuseteil 15: 20% | 25 | 200 | 0,032 | 30 | 60 | 65 | 65 | 65 | 65 | 70 | 50 | 50 | 50 | 35 | 110 |
| B13 | 4 | 40% b1<br>60% c2 | Einfülltrichter 8: 20%<br>Gehäuseteil 15: 20% | 25 | 200 | 0,073 | 30 | 60 | 65 | 65 | 65 | 65 | 70 | 50 | 50 | 50 | 35 | 130 |
| B14 | 4 | 40% b1<br>60% c4 | Einfülltrichter 8: 20%<br>Gehäuseteil 15: 20% | 25 | 200 | 0,073 | 30 | 60 | 65 | 65 | 65 | 65 | 70 | 50 | 50 | 50 | 35 | 115 |

Tabelle 4

| Beispiel | | Rezeptur | Versuchsanordnung | Durchsatz | Drehzahl | SME | Oberflächendefekte pro $cm^2$ | Kerbschlagzähigkeit bei 23°C | Kerbschlagzähigkeit bei 0°C |
|---|---|---|---|---|---|---|---|---|---|
| | | | | kg/h | 1/min | kWh/kg | Mittelwert 3 Platten | $kJ/m^2$ | $kJ/m^2$ |
| 1 | Vergleich | 1 | 7 | 103 | 400 | 0,129 | 199 | 46,9 | 13,75 |
| 2 | erfindungsgemäß | 4 | 7 | 97 | 400 | 0,137 | 19 | 50,94 | 15,09 |
| 3 | Vergleich | 18 | 7 | 92 | 400 | 0,145 | 53 | | |
| 4 | erfindungsgemäß | 19 | 7 | 92 | 400 | 0,145 | 24 | | |
| 5 | Vergleich | 20 | 8 | 99 | 600 | 0,145 | 17 | 12,77 | |
| 6 | erfindungsgemäß | 21 | 8 | 98 | 600 | 0,147 | 11 | 13,06 | |
| 7 | Vergleich | 22 | 7 | 62 | 350 | 0,188 | 12 | | |
| 8 | erfindungsgemäß | 23 | 7 | 64 | 350 | 0,182 | 9 | | |
| 9 | Vergleich | 24 | 7 | 62 | 350 | 0,188 | 5 | | |
| 10 | erfindungsgemäß | 25 | 7 | 62 | 350 | 0,188 | 4 | | |
| 11 | Vergleich | 28 | 7 | 52 | 350 | 0,224 | 257 | | |
| 12 | erfindungsgemäß | 29 | 7 | 52 | 350 | 0,224 | 34 | | |
| 13 | Vergleich | 30 | 7 | 58 | 350 | 0,201 | 60 | | |
| 14 | erfindungsgemäß | 31 | 7 | 57 | 350 | 0,204 | 31 | | |
| 15 | Vergleich | 35 | 9 | 20 | 400 | 0,247 | | | |
| 16 | erfindungsgemäß | 36 | 9 | 20 | 400 | 0,24 | | | |
| 17 | Vergleich | 17 | 7 | 73 | 400 | 0,131 | 34 | | |
| 18 | Vergleich | 16 | 7 | 73 | 400 | 0,131 | 63 | | |
| 19 | erfindungsgemäß | 4 | 7 | 75 | 400 | 0,133 | 18 | | |
| 20 | Vergleich | 32 | 10 | 3100 | 187 | 0,131 | 2191 | | |
| 21 | Vergleich | 33 | 10 | 3091 | 175 | 0,124 | 1122 | | |
| 22 | erfindungsgemäß | 34 | 10 | 3092 | 188 | 0,131 | 446 | | |
| 23 | Vergleich | 26 | 11 | 2975 | 493 | 0,141 | 247 | | |
| 24 | erfindungsgemäß | 27 | 11 | 3003 | 485 | 0,132 | 11 | | |

(fortgesetzt)

| Beispiel | | Rezeptur | Versuchsanordnung | Durchsatz | Drehzahl | SME | Oberflächendefekte pro $cm^2$ | Kerbschlagzähigkeit bei 23°C | Kerbschlagzähigkeit bei 0°C |
|---|---|---|---|---|---|---|---|---|---|
| | | | | kg/h | 1/min | kWh/kg | Mittelwert 3 Platten | $kJ/m^2$ | $kJ/m^2$ |
| 25 | erfindungsgemäß | 10 | 7 | 95 | 400 | 0,14 | 6 | | |
| 26 | erfindungsgemäß | 12 | 7 | 95 | 400 | 0,14 | 6 | | |
| 27 | erfindungsgemäß | 9 | 7 | 90 | 400 | 0,148 | 10 | | |
| 28 | erfindungsgemäß | 6 | 7 | 95 | 400 | 0,14 | 5 | | |
| 29 | erfindungsgemäß | 11 | 7 | 95 | 400 | 0,14 | 5 | | |
| 30 | erfindungsgemäß | 8 | 7 | 90 | 400 | 0,148 | 21 | | |
| 31 | erfindungsgemäß | 7 | 7 | 90 | 400 | 0,148 | 11 | | |
| 32 | erfindungsgemäß | 13 | 7 | 90 | 400 | 0,148 | 7 | | |
| 33 | erfindungsgemäß | 14 | 7 | 95 | 400 | 0,14 | 48 | | |
| 34 | erfindungsgemäß | 15 | 7 | 95 | 400 | 0,14 | 6 | | |
| 35 | erfindungsgemäß | 5 | 7 | 97 | 400 | 0,137 | 23 | 56,2 | 19,22 |
| 36 | erfindungsgemäß | 3 | 7 | 97 | 400 | 0,137 | 19 | 48,3 | 16,16 |
| 37 | erfindungsgemäß | 2 | 7 | 97 | 400 | 0,137 | 17 | 52,73 | 15,93 |

## Patentansprüche

1. **1.** Verwendung eines Masterbatches bestehend aus Pigment und Entformungsmittel, **dadurch gekennzeichnet, dass** das Entformungsmittel ausgewählt ist aus der Gruppe, die Pentaerythrittetrastearat, Glycerinmonostearat und Stearylstearat umfasst,
wobei der Pigmentgehalt des Masterbatches 40 - 60 Gew.% bezogen auf das Gesamtgewicht des Masterbatches beträgt
und wobei das Masterbatch durch Dosierung von Entformungsmittel und Pigment in ein Scher- und Mischaggregat ausgewählt aus der Gruppe, die Einwellenextruder, Mehrwellenextruder, Innenmischer, Co-Kneter und Scherwalzengeräte umfasst hergestellt wird
zur Herstellung von gefärbten Polymerzusammensetzungen mit verbesserter Pigmentdispergierung.

**2.** Verwendung gemäß Anspruch 1, **dadurch gekennzeichnet, dass** das Pigment ein Kohlenstoff-basiertes Pigment ist ausgewählt aus der Gruppe bestehend aus Ruß, Graphit, Fullerenen, Graphen, Aktivkohle und Kohlenstoff-Nanoröhrchen (Carbon Nano Tubes = CNT).

**3.** Verwendung gemäß Anspruch 1, **dadurch gekennzeichnet, dass** das Entformungsmittel Pentaerythrittetrastearat ist.

**4.** Verwendung gemäß Anspruch 1, **dadurch gekennzeichnet, dass** das Pigment Ruß ist.

**5.** Verwendung nach einem der vorherigen Ansprüche, **dadurch gekennzeichnet, dass** das Masterbatch in Form von Granulat oder Pellets mit einer Länge von 1 bis 5 mm eingesetzt wird.

**6.** Verwendung nach einem der Ansprüche 1 bis 4, **dadurch gekennzeichnet, dass** das Masterbatch in Form von Pulver mit einem Durchmesser von 0,1 mm bis 0,5 mm eingesetzt wird.

**7.** Verwendung nach einem der vorherigen Ansprüche, **dadurch gekennzeichnet, dass** die Polymerzusammensetzung eine Polycarbonatzusammensetzung enthaltend

a) 1 bis 99,96 Gew.-% mindestens eines thermoplastischen Polycarbonats oder Polyestercarbonats (a),
b) 0,02 bis 10 Gew.-% mindestens einer Pigment-Komponente (b),
c) 0,02 bis 10 Gew.-% mindestens eines Entformungsmittels (c),
d) 0 bis 70 Gew.-% ein oder mehrere thermoplastische Polyester (d),
e) 0 bis 50 Gew.-% ein oder mehrere von Komponente f verschiedene Elastomere (e),
f) 0 bis 70 Gew.-%, ein oder mehrere gegebenenfalls kautschukmodifizierte Vinyl-(co)polymerisate (f), und
0 bis 40 Gew.-% weitere Additive ist.

**8.** Verwendung nach einem der vorherigen Ansprüche, **dadurch gekennzeichnet, dass** die Polymerzusammensetzung eine Polycarbonatzusammensetzung enthaltend

a) 1 bis 75 Gew.-% mindestens eines thermoplastischen Polycarbonats oder Polyestercarbonats (a),
b) 0,02 bis 10 Gew.-% mindestens einer Pigment-Komponente (b),
c) 0,02 bis 10 Gew.-% mindestens eines Entformungsmittels (c),
d) 0 bis 70 Gew.-% ein oder mehrere thermoplastische Polyester (d),
e) 0 bis 50 Gew.-% ein oder mehrere von Komponente f verschiedene Elastomere (e),
f) 1 bis 50 Gew.-%, ein oder mehrere gegebenenfalls kautschukmodifizierte Vinyl-(co)polymerisate (f), und
0 bis 40 Gew.-% weitere Additive ist.

**9.** Verwendung nach einem der vorherigen Ansprüche, **dadurch gekennzeichnet, dass** die Polymerzusammensetzung eine Polycarbonatzusammensetzung enthaltend

a) 1 bis 75 Gew.-% mindestens eines thermoplastischen Polycarbonats oder Polyestercarbonats (a),
b) 0,02 bis 10 Gew.-% mindestens einer Pigment-Komponente (b),
c) 0,02 bis 10 Gew.-% mindestens eines Entformungsmittels (c),
d) 2 bis 60 Gew.-% ein oder mehrere thermoplastische Polyester (d),
e) 0 bis 50 Gew.-% ein oder mehrere von Komponente f verschiedene Elastomere (e),
f) 0 bis 70 Gew.-%, ein oder mehrere gegebenenfalls kautschukmodifizierte Vinyl-(co)polymerisate (f), und

0 bis 40 Gew.-% weitere Additive ist.

**10.** Verwendung nach Anspruch 7, **dadurch gekennzeichnet, dass** die Komponente c Pentaerythrittetrastearat ist.

**11.** Verwendung nach Anspruch 7, **dadurch gekennzeichnet, dass** die Komponente b nur in Form eines Masterbatches aus b und c zum Einsatz kommt.

**12.** Verfahren zur Herstellung einer gefärbten Polymerzusammensetzung durch Schmelzemischen, **dadurch gekennzeichnet, dass** das Pigment und Entformungsmittel bei der Compoundierung als Masterbatch nach einem der Ansprüche 1 bis 6 eingesetzt werden.

**13.** Verfahren nach Anspruch 12, **dadurch gekennzeichnet, dass** die Zusammensetzung eine Polycarbonatzusammensetzung enthaltend

a) 1 bis 99,96 Gew.-% mindestens eines thermoplastischen Polycarbonats oder Polyestercarbonats (a),
b) 0,02 bis 10 Gew.-% mindestens einer Pigment-Komponente (b),
c) 0,02 bis 10 Gew.-% mindestens eines Entformungsmittels (c),
d) 0 bis 70 Gew.-% ein oder mehrere thermoplastische Polyester (d),
e) 0 bis 50 Gew.-% ein oder mehrere von Komponente f verschiedene Elastomere (e),
f) 0 bis 70 Gew.-%, ein oder mehrere gegebenenfalls kautschukmodifizierte Vinyl-(co)polymerisate (f), und
g) 0 bis 40 Gew.-% weitere Additive ist.

**14.** Polymerzusammensetzung hergestellt durch ein Verfahren nach Anspruch 13, enthaltend

a) 1 bis 99,96 Gew.-% mindestens eines thermoplastischen Polycarbonats oder Polyestercarbonats (a),
b) 0,02 bis 10 Gew.-% mindestens einer Pigment-Komponente (b),
c) 0,02 bis 10 Gew.-% mindestens eines Entformungsmittels (c),
d) 0 bis 70 Gew.-% ein oder mehrere thermoplastische Polyester (d),
e) 0 bis 50 Gew.-% ein oder mehrere von Komponente f verschiedene Elastomere (e),
f) 0 bis 70 Gew.-%, ein oder mehrere gegebenenfalls kautschukmodifizierte Vinyl-(co)polymerisate (f), und
g) 0 bis 40 Gew.-% weitere Additive.

**15.** Formkörper enthaltend eine Polymerzusammensetzung nach Anspruch 14 **dadurch gekennzeichnet, dass** die Anzahl der Oberflächendefekte $\geq 10\ \mu m$ mikroskopisch bestimmt an mit Hochglanzwerkzeugen hergestellten Spritzgusskörpern um mindestens 20% reduziert ist gegenüber einem Formkörper aus Formmassen gleicher Zusammensetzung hergestellt nach dem ansonsten gleichen Compoundierverfahren jedoch unter Verwendung der Pigmentkomponente b in Pulverform.

## Claims

**1.** Use of a masterbatch consisting of pigment and mould-release agent, **characterized in that** the mould-release agent is selected from the group comprising pentaerythritol tetrastearate, glycerol monostearate and stearyl stearate, where the pigment content of the masterbatch is 40-60% by weight, based on the total weight of the masterbatch, and where the masterbatch is produced by metering mould-release agent and pigment into a shearing and mixing assembly selected from the group comprising single-screw extruders, multiple-screw extruders, internal mixers, co-kneaders and shearing-roll devices,
for the production of coloured polymer compositions with improved pigment dispersion.

**2.** Use according to Claim 1, **characterized in that** the pigment is a carbon-based pigment selected from the group consisting of carbon black, graphite, fullerenes, graphene, activated charcoal and carbon nanotubes (CNT).

**3.** Use according to Claim 1, **characterized in that** the mould-release agent is pentaerythritol tetrastearate.

**4.** Use according to Claim 1, **characterized in that** the pigment is carbon black.

**5.** Use according to any of the preceding claims, **characterized in that** the masterbatch is used in the form of granulate or pellets with length of 1 to 5 mm.

6. Use according to any of Claims 1 to 4, **characterized in that** the masterbatch is used in the form of powder with diameter of 0.1 mm to 0.5 mm.

7. Use according to any of the preceding claims, **characterized in that** the polymer composition is a polycarbonate composition comprising

a) 1 to 99.96% by weight of at least one thermoplastic polycarbonate or polyester carbonate (a),
b) 0.02 to 10% by weight of at least one pigment component (b),
c) 0.02 to 10% by weight of at least one mould-release agent (c),
d) 0 to 70% by weight of one or more thermoplastic polyesters (d),
e) 0 to 50% by weight of one or more elastomers (e) differing from component f,
f) 0 to 70% by weight of one or more optionally rubber-modified vinyl (co)polymers (f), and
0 to 40% by weight of other additives.

8. Use according to any of the preceding claims, **characterized in that** the polymer composition is a polycarbonate composition comprising

a) 1 to 75% by weight of at least one thermoplastic polycarbonate or polyester carbonate (a),
b) 0.02 to 10% by weight of at least one pigment component (b),
c) 0.02 to 10% by weight of at least one mould-release agent (c),
d) 0 to 70% by weight of one or more thermoplastic polyesters (d),
e) 0 to 50% by weight of one or more elastomers (e) differing from component f,
f) 1 to 50% by weight of one or more optionally rubber-modified vinyl (co)polymers (f), and
0 to 40% by weight of other additives.

9. Use according to any of the preceding claims, **characterized in that** the polymer composition is a polycarbonate composition comprising

a) 1 to 75% by weight of at least one thermoplastic polycarbonate or polyester carbonate (a),
b) 0.02 to 10% by weight of at least one pigment component (b),
c) 0.02 to 10% by weight of at least one mould-release agent (c),
d) 2 to 60% by weight of one or more thermoplastic polyesters (d),
e) 0 to 50% by weight of one or more elastomers (e) differing from component f,
f) 0 to 70% by weight of one or more optionally rubber-modified vinyl (co)polymers (f), and
0 to 40% by weight of other additives.

10. Use according to Claim 7, **characterized in that** component c is pentaerythritol tetrastearate.

11. Use according to Claim 7, **characterized in that** component b is used only in the form of a masterbatch made of b and c.

12. Process for the production of a coloured polymer composition by mixing in the melt, **characterized in that** during compounding the pigment and mould-release agent are used in the form of masterbatch according to any of Claims 1 to 6.

13. Process according to Claim 12, **characterized in that** the composition is a polycarbonate composition comprising

a) 1 to 99.96% by weight of at least one thermoplastic polycarbonate or polyester carbonate (a),
b) 0.02 to 10% by weight of at least one pigment component (b),
c) 0.02 to 10% by weight of at least one mould-release agent (c),
d) 0 to 70% by weight of one or more thermoplastic polyesters (d),
e) 0 to 50% by weight of one or more elastomers (e) differing from component f,
f) 0 to 70% by weight of one or more optionally rubber-modified vinyl (co)polymers (f), and
g) 0 to 40% by weight of other additives.

14. Polymer composition produced by a process according to Claim 13, comprising

a) 1 to 99.96% by weight of at least one thermoplastic polycarbonate or polyester carbonate (a),

b) 0.02 to 10% by weight of at least one pigment component (b),
c) 0.02 to 10% by weight of at least one mould-release agent (c),
d) 0 to 70% by weight of one or more thermoplastic polyesters (d),
e) 0 to 50% by weight of one or more elastomers (e) differing from component f,
f) 0 to 70% by weight of one or more optionally rubber-modified vinyl (co)polymers (f), and
g) 0 to 40% by weight of other additives.

**15.** Moulding comprising a polymer composition according to Claim 14, **characterized in that** the number of surface defects $\geq$ 10 $\mu$m, determined microscopically on injection mouldings produced with high-gloss moulds, has been reduced by at least 20% in comparison with a moulding made of moulding materials of identical composition produced by an otherwise identical compounding process with use of pigment component b in powder form.

**Revendications**

**1.** Utilisation d'un mélange maître constitué par un pigment et un agent de démoulage, **caractérisée en ce que** l'agent de démoulage est choisi dans le groupe qui comprend le tétrastéarate de pentaérythrite, le monostéarate de glycérine et le stéarate de stéaryle,
la teneur en pigment du mélange maître étant de 40 à 60 % en poids, par rapport au poids total du mélange maître, et le mélange maître étant fabriqué par ajout d'un agent de démoulage et d'un pigment dans un appareil de cisaillement et de mélange choisi dans le groupe qui comprend les extrudeuses à un arbre, les extrudeuses à plusieurs arbres, les mélangeurs internes, les co-malaxeurs et les appareils à cylindres de cisaillement, pour la fabrication de compositions de polymères colorées présentant une dispersion améliorée du pigment.

**2.** Utilisation selon la revendication 1, **caractérisée en ce que** le pigment est un pigment à base de carbone choisi dans le groupe constitué par le noir de carbone, le graphite, les fullerènes, le graphène, le charbon actif et les nanotubes de carbone (Carbon Nano Tubes = CNT).

**3.** Utilisation selon la revendication 1, **caractérisée en ce que** l'agent de démoulage est le tétrastéarate de pentaérythrite.

**4.** Utilisation selon la revendication 1, **caractérisée en ce que** le pigment est le noir de carbone.

**5.** Utilisation selon l'une quelconque des revendications précédentes, **caractérisée en ce que** le mélange maître est utilisé sous la forme d'un granulat ou de pastilles d'une longueur de 1 à 5 mm.

**6.** Utilisation selon l'une quelconque des revendications 1 à 4, **caractérisée en ce que** le mélange maître est utilisé sous la forme d'une poudre ayant un diamètre de 0,1 mm à 0,5 mm.

**7.** Utilisation selon l'une quelconque des revendications précédentes, **caractérisée en ce que** la composition de polymère est une composition de polycarbonate contenant :

a) 1 à 99,96 % en poids d'au moins un polycarbonate ou polyester-carbonate thermoplastique (a),
b) 0,02 à 10 % en poids d'au moins un composant pigment (b),
c) 0,02 à 10 % en poids d'au moins un agent de démoulage (c),
d) 0 à 70 % en poids d'un ou de plusieurs polyesters thermoplastiques (d),
e) 0 à 50 % en poids d'un ou de plusieurs élastomères (e) différents du composant f,
f) 0 à 70 % en poids d'un ou de plusieurs (co)polymères de vinyle éventuellement modifiés par un caoutchouc, et
0 à 40 % en poids d'autres additifs.

**8.** Utilisation selon l'une quelconque des revendications précédentes, **caractérisée en ce que** la composition de polymère est une composition de polycarbonate contenant :

a) 1 à 75 % en poids d'au moins un polycarbonate ou polyester-carbonate thermoplastique (a),
b) 0,02 à 10 % en poids d'au moins un composant pigment (b),
c) 0,02 à 10 % en poids d'au moins un agent de démoulage (c),
d) 0 à 70 % en poids d'un ou de plusieurs polyesters thermoplastiques (d),
e) 0 à 50 % en poids d'un ou de plusieurs élastomères (e) différents du composant f,

f) 1 à 50 % en poids d'un ou de plusieurs (co)polymères de vinyle éventuellement modifiés par un caoutchouc, et 0 à 40 % en poids d'autres additifs.

**9.** Utilisation selon l'une quelconque des revendications précédentes, **caractérisée en ce que** la composition de polymère est une composition de polycarbonate contenant :

a) 1 à 75 % en poids d'au moins un polycarbonate ou polyester-carbonate thermoplastique (a),
b) 0,02 à 10 % en poids d'au moins un composant pigment (b),
c) 0,02 à 10 % en poids d'au moins un agent de démoulage (c),
d) 2 à 60 % en poids d'un ou de plusieurs polyesters thermoplastiques (d),
e) 0 à 50 % en poids d'un ou de plusieurs élastomères (e) différents du composant f,
f) 0 à 70 % en poids d'un ou de plusieurs (co)polymères de vinyle éventuellement modifiés par un caoutchouc, et 0 à 40 % en poids d'autres additifs.

**10.** Utilisation selon la revendication 7, **caractérisée en ce que** le composant c est le tétrastéarate de pentaérythrite.

**11.** Utilisation selon la revendication 7, **caractérisée en ce que** le composant b est utilisé uniquement sous la forme d'un mélange maître de b et c.

**12.** Procédé de fabrication d'une composition de polymère colorée par mélange à l'état fondu, **caractérisé en ce que** le pigment et l'agent de démoulage sont utilisés lors du mélange sous la forme d'un mélange maître selon l'une quelconque des revendications 1 à 6.

**13.** Procédé selon la revendication 12, **caractérisé en ce que** la composition est une composition de polycarbonate contenant :

a) 1 à 99,96 % en poids d'au moins un polycarbonate ou polyester-carbonate thermoplastique (a),
b) 0,02 à 10 % en poids d'au moins un composant pigment (b),
c) 0,02 à 10 % en poids d'au moins un agent de démoulage (c),
d) 0 à 70 % en poids d'un ou de plusieurs polyesters thermoplastiques (d),
e) 0 à 50 % en poids d'un ou de plusieurs élastomères (e) différents du composant f,
f) 0 à 70 % en poids d'un ou de plusieurs (co)polymères de vinyle éventuellement modifiés par un caoutchouc, et
g) 0 à 40 % en poids d'autres additifs.

**14.** Composition de polymère fabriquée par un procédé selon la revendication 13, contenant :

a) 1 à 99,96 % en poids d'au moins un polycarbonate ou polyester-carbonate thermoplastique (a),
b) 0,02 à 10 % en poids d'au moins un composant pigment (b),
c) 0,02 à 10 % en poids d'au moins un agent de démoulage (c),
d) 0 à 70 % en poids d'un ou de plusieurs polyesters thermoplastiques (d),
e) 0 à 50 % en poids d'un ou de plusieurs élastomères (e) différents du composant f,
f) 0 à 70 % en poids d'un ou de plusieurs (co)polymères de vinyle éventuellement modifiés par un caoutchouc, et
g) 0 à 40 % en poids d'autres additifs.

**15.** Corps moulé contenant une composition de polymère selon la revendication 14, **caractérisé en ce que** le nombre de défauts de surface $\geq 10\ \mu m$ déterminés par microscopie sur des corps moulés par injection fabriqués avec des outils de grande brillance est réduit d'au moins 20 % en comparaison d'un corps moulé fabriqué à partir de matériaux de moulage d'une composition identique par un procédé de mélange autrement identique en utilisant toutefois le composant pigment b sous la forme de poudre.

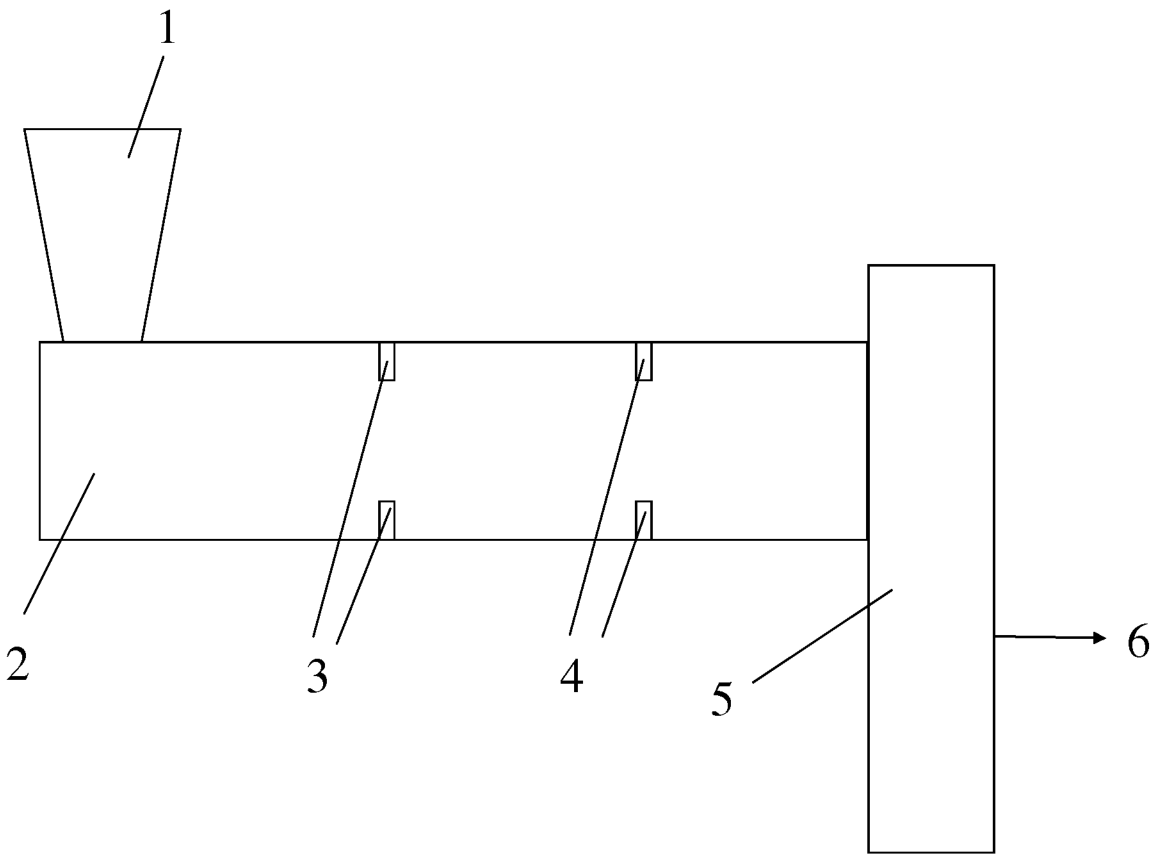


Fig. 1

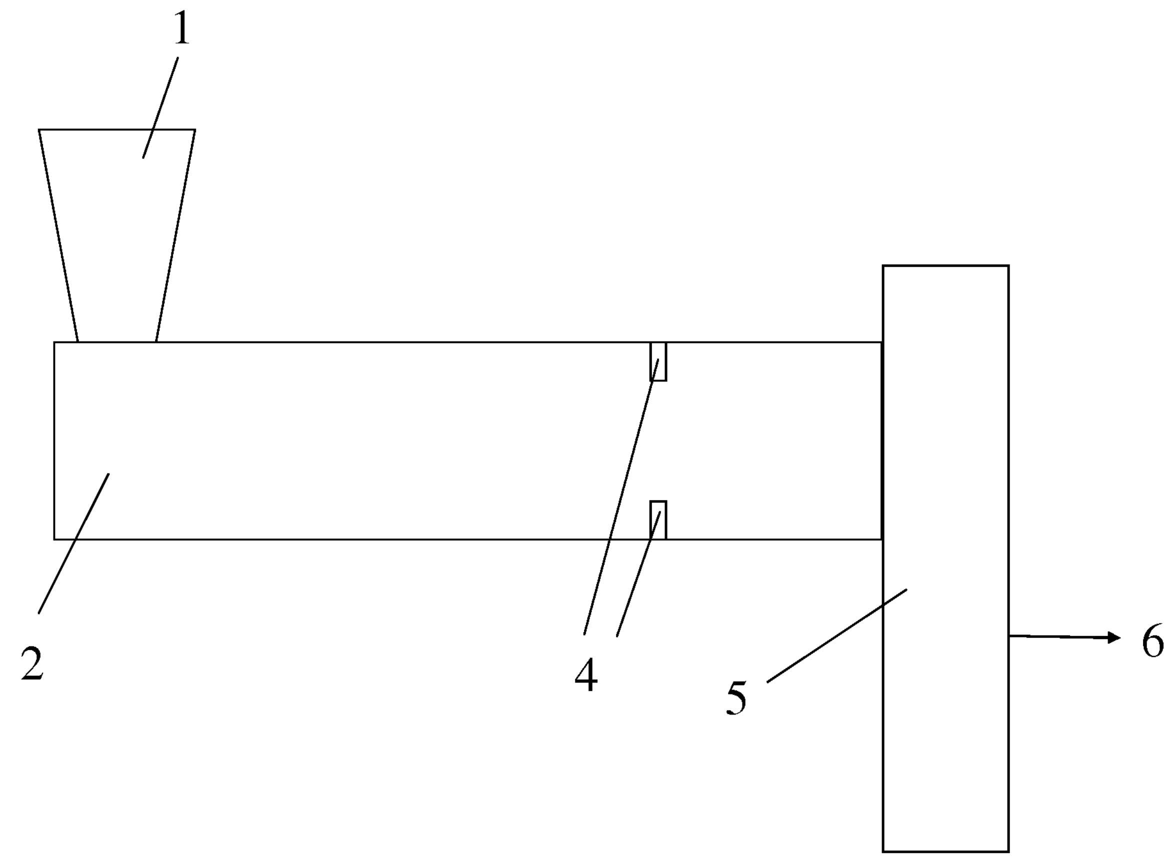


Fig. 2

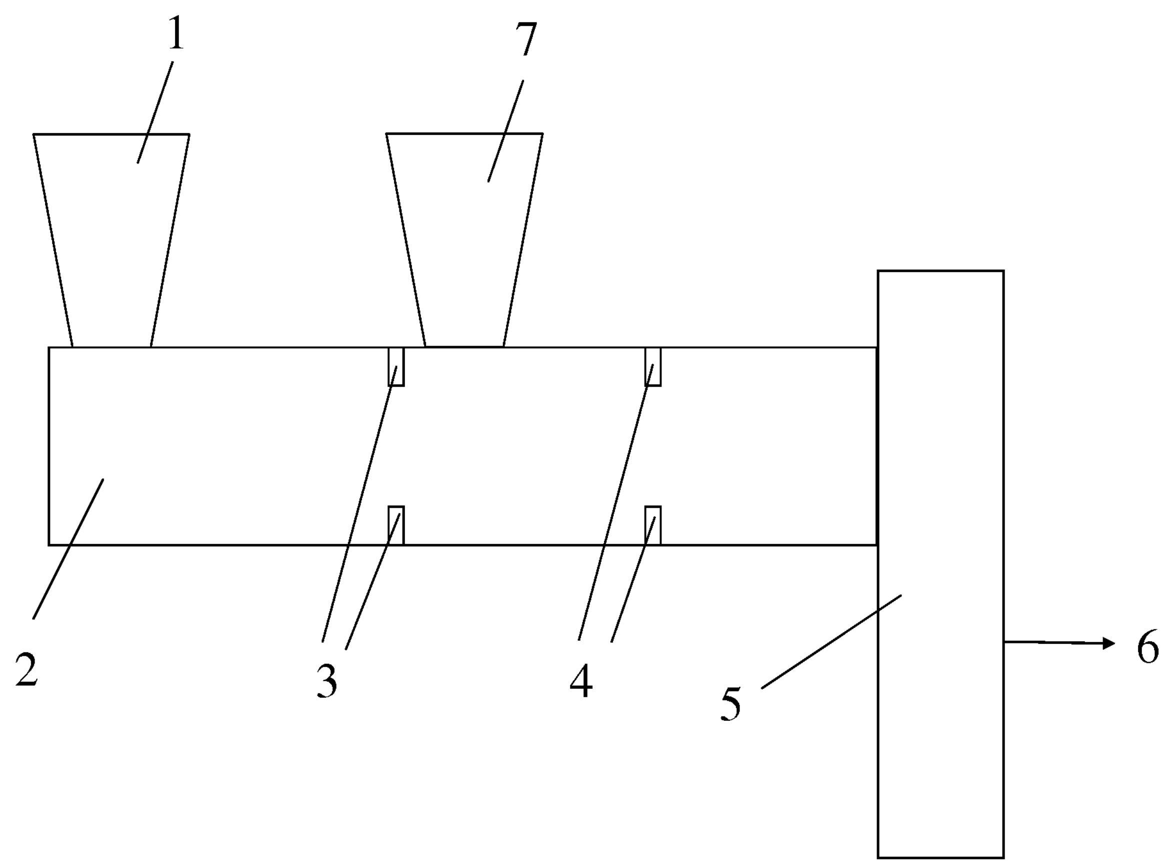


Fig. 3

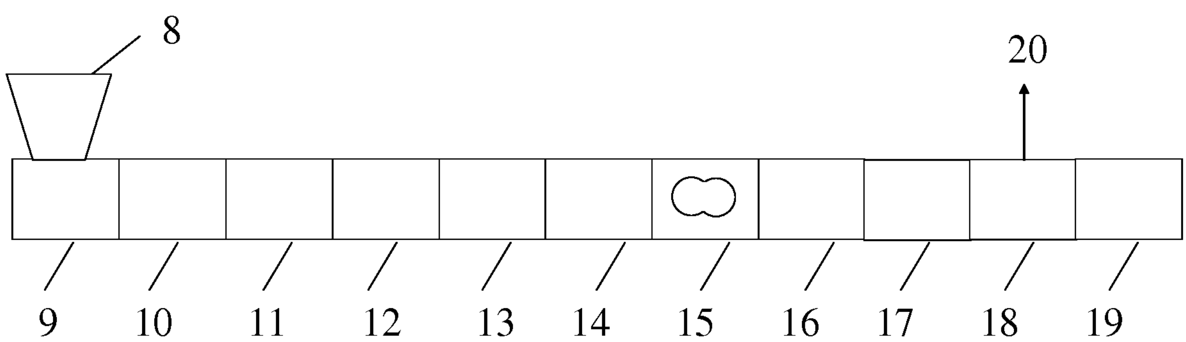


Fig. 4

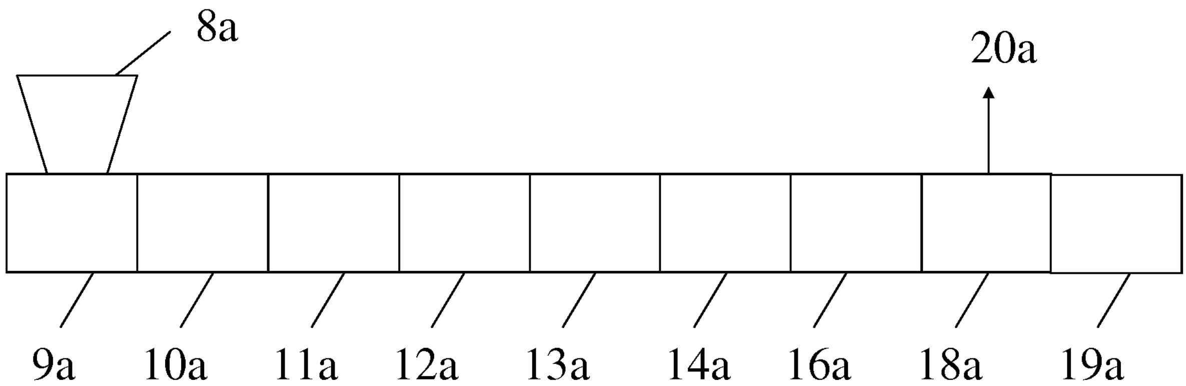


Fig. 5

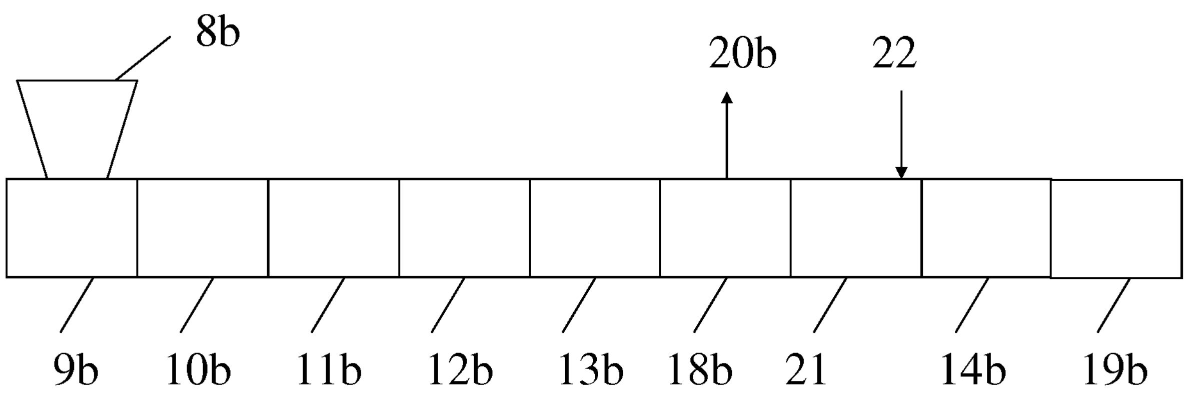


Fig. 6

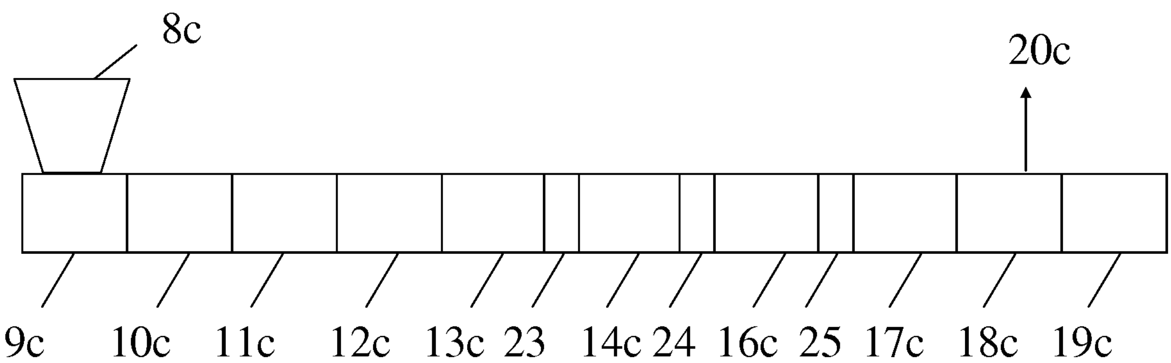


Fig. 7

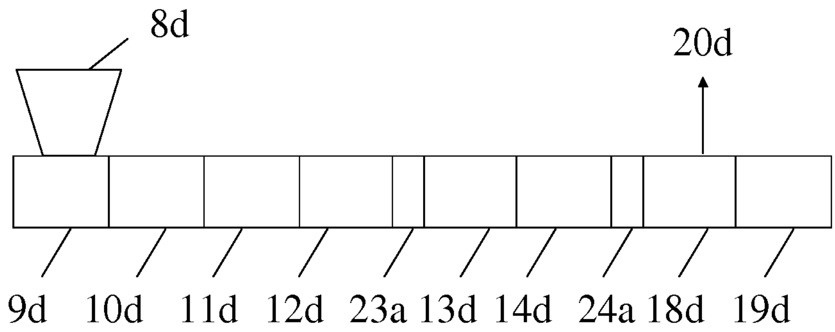


Fig. 8

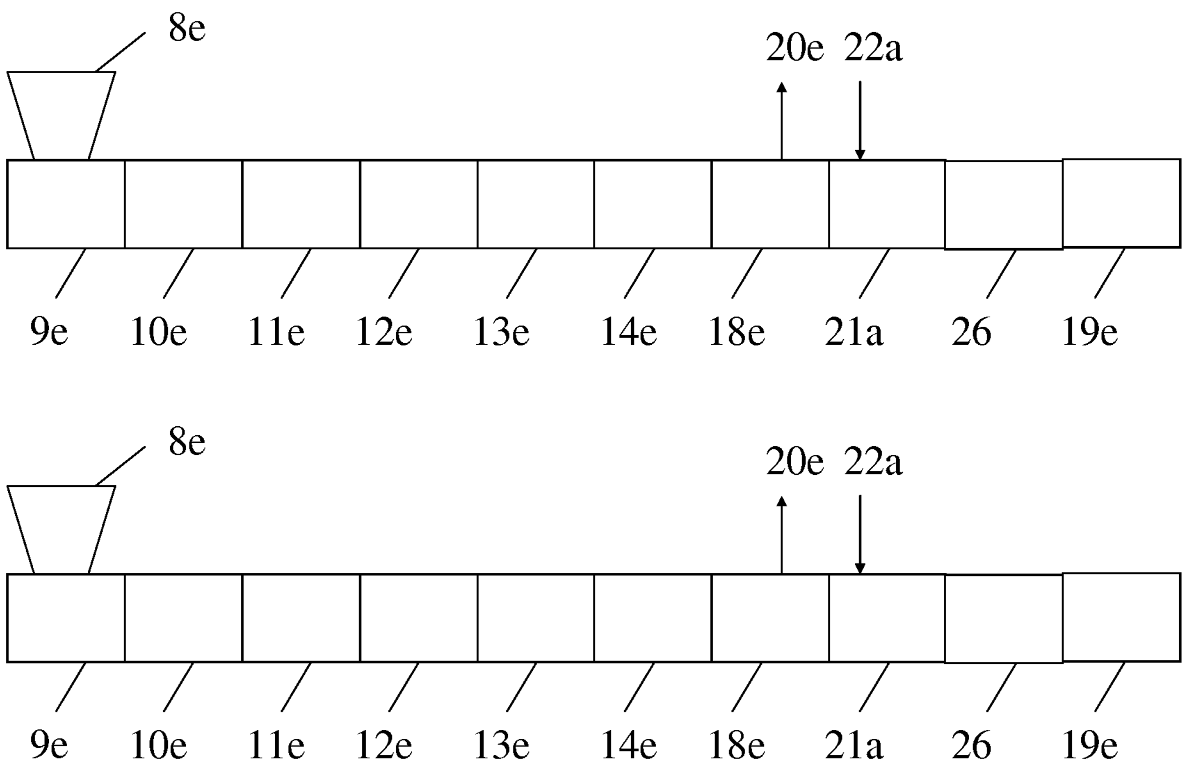
8e
20e
22a
9e
10e
11e
12e
13e
14e
18e
21a
26
19e
8e
20e
22a
9e
10e
11e
12e
13e
14e
18e
21a
26
19e

Fig. 9

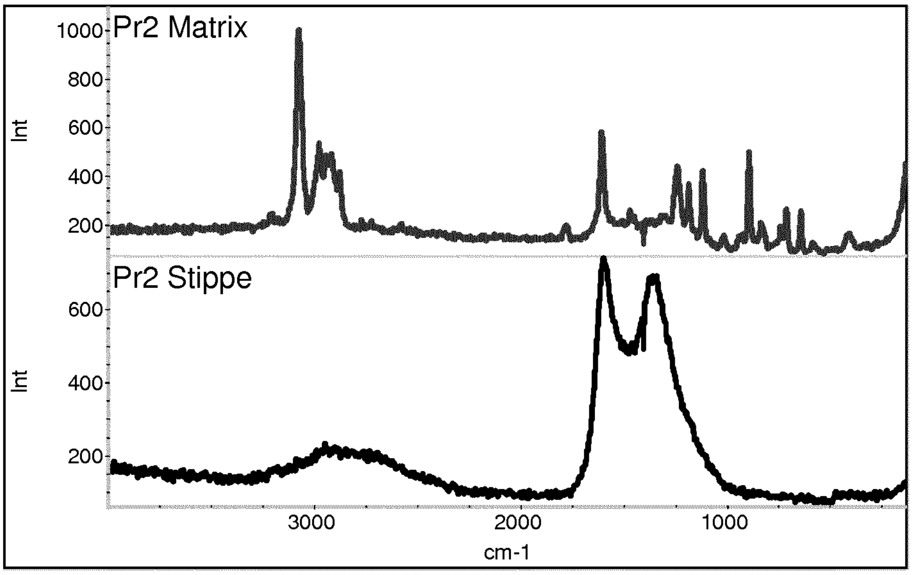
Pr2 Matrix
1000
800
600
400
200
Int
Pr2 Stippe
600
400
200
Int
3000
2000
1000
cm-1

Fig. 10

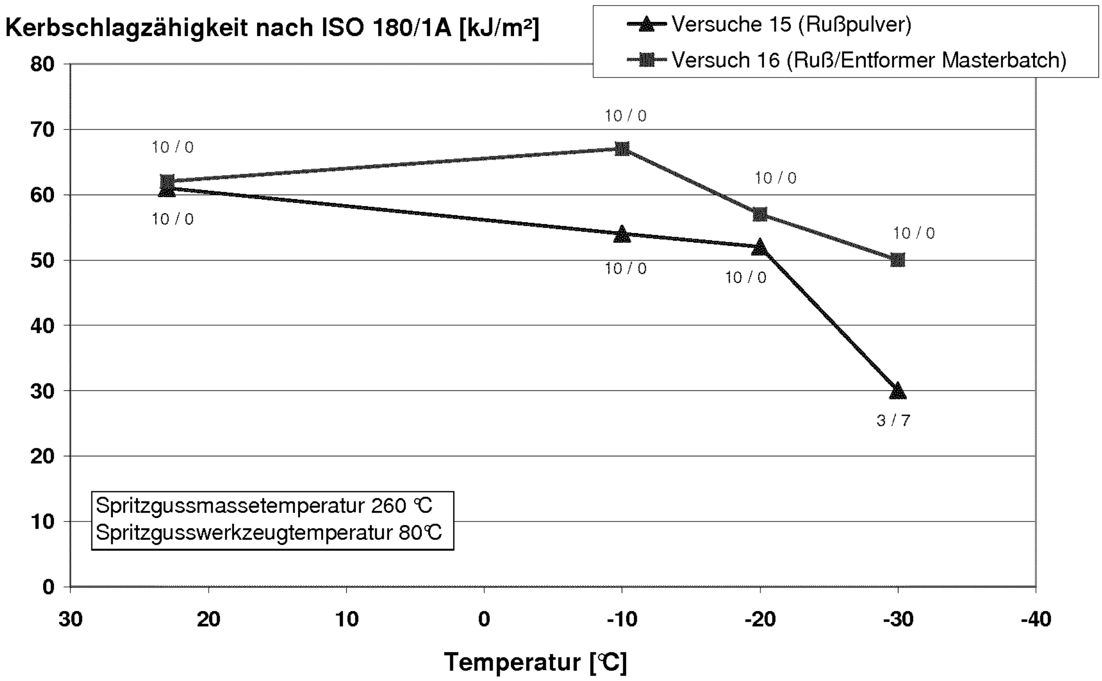
Kerbschlagzähigkeit nach ISO 180/1A [kJ/m²]
Versuche 15 (Rußpulver)
Versuch 16 (Ruß/Entformer Masterbatch)
80
70
60
50
40
30
20
10
0
10 / 0
10 / 0
10 / 0
10 / 0
10 / 0
10 / 0
10 / 0
10 / 0
3 / 7
Spritzgussmassetemperatur 260 °C
Spritzgusswerkzeugtemperatur 80°C
30
20
10
0
-10
-20
-30
-40
Temperatur [°C]

Fig. 11

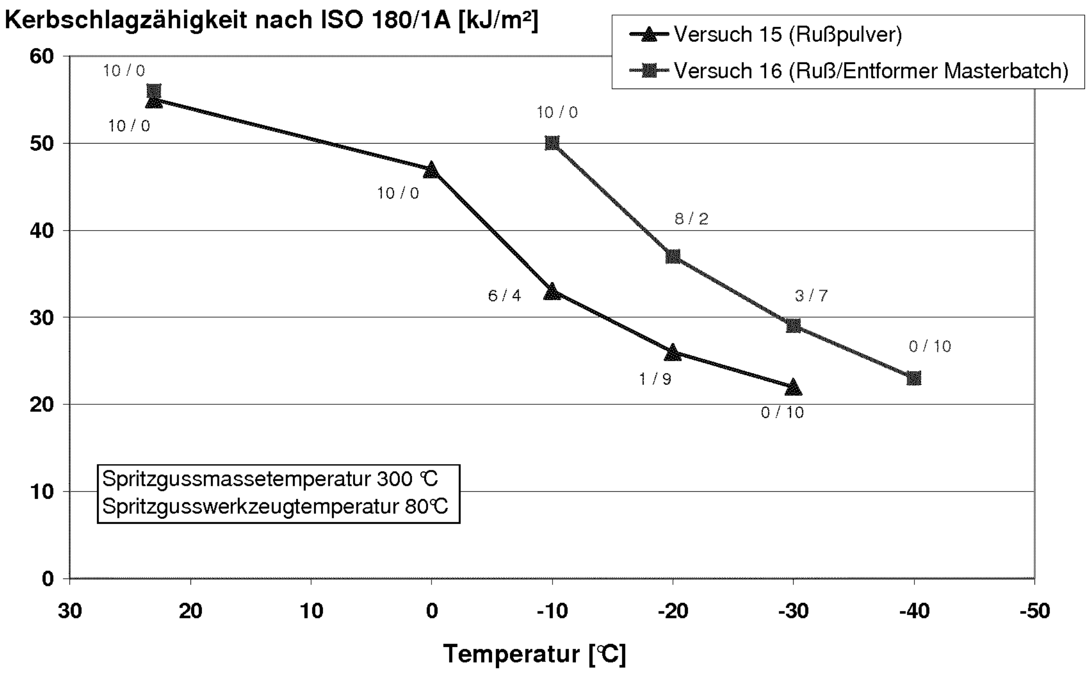
Kerbschlagzähigkeit nach ISO 180/1A [kJ/m²]
Versuch 15 (Rußpulver)
Versuch 16 (Ruß/Entformer Masterbatch)
60
50
40
30
20
10
0
10 / 0
10 / 0
10 / 0
10 / 0
8 / 2
6 / 4
3 / 7
0 / 10
1 / 9
0 / 10
Spritzgussmassetemperatur 300 °C
Spritzgusswerkzeugtemperatur 80°C
30
20
10
0
-10
-20
-30
-40
-50
Temperatur [°C]

Fig. 12

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 4484952 A
- US 4310483 A
- WO 2002092702 A
- EP 578245 A2
- US 20090057621 A1
- DE 102009009680
- EP 10001490 A
- EP 1016954 A
- DE AS1495626 B
- DE 2232877 A
- DE 2703376 A
- DE 2714544 A
- DE 3000610 A
- DE 3832396 A
- DE 3007934 A
- DE 2842005 A
- US 3419634 A
- DE 3334782 A
- DE 2940024 A
- US 5643502 A
- DE 102006017695 A
- DE OS2035390 A
- US PS3644574 A
- DE OS2248242 A
- GB PS1409275 A
- US 4937285 P
- DE OS3704657 A
- DE OS3704655 A
- DE OS3631540 A
- DE OS3631539 A
- EP 0707037 B1


### In der Beschreibung aufgeführte Nicht-Patentliteratur


- **SCHNELL.** Chemistry and Physics of Polycarbonates. Interscience Publishers, 1964
- Kunststoff-Handbuch. Carl-Hanser-Verlag, 1973, vol. VIII, 695 ff
- **W. SCHOLTAN ; H. LANGE.** *Kolloid, Z. und Z. Polymere,* 1972, vol. 250, 782-1796
- **M. HOFFMANN ; H. KRÖMER ; R. KUHN.** Polymeranalytik I und II. Georg Thieme-Verlag, 1977
- **ULLMANNS.** Enzyklopädie der Technischen Chemie. 1980, vol. 19, 280 ff